# EUROPÄISCHE PATENTANMELDUNG

(11) **EP 4 398 107 A2**
(43) Veröffentlichungstag der Anmeldung: **10.07.2024**
(21) Anmeldenummer: 24176813.4
(22) Anmeldetag: 21.04.2022
(51) Int. Cl.: G06F 11/30

(54) **VORRICHTUNGEN UND VERFAHREN ZUR ÜBERWACHUNG EINES INTERNEN TAKTGEBERS EINES QUANTENCOMPUTERS IM BETRIEB**

(30) Priorität: 28.04.2021 DE 102021110964
(62) Teilanmeldung aus: 22719793.6
(71) Anmelder: Quantum Technologies GmbH, 04103 Leipzig (DE)
(72) Erfinder: Burchard, Bernd, 45276 Essen (DE)

(57) **Zusammenfassung**

Die Erfindung betrifft eine Vorrichtung zur Überwachung eines Quantencomputers (QC) zum Abfangen von Fehlern des Quantencomputers (QC) mit einer Quantencomputerüberwachungsvorrichtung (QUV) und einen internen Taktgeber (ICLK). Der Quantencomputer (QC) ist mit einer Quantencomputerüberwachungsvorrichtung (QUV) zur Überwachung des Quantencomputers (QC) verbunden. Die Quantencomputerüberwachungsvorrichtung (QUV) ist mit dem internen Taktgeber (ICLK) zur Überwachung eines Systemtakts des Quantencomputers (QC) verbunden . Die Quantencomputerüberwachungsvorrichtung (QUV) umfasst Mittel zur Überprüfung des Quantencomputerprogrammablaufs des Quantencomputerprogramms des Quantencomputers (QC) umfasst und/oder Mittel zur Überprüfung der korrekten Funktion des Quantencomputers (QC) umfasst und/oder Mittel zur Überprüfung der korrekten Durchführung von Manipulationen von Quantenbits (QUB) des Quantencomputers (QC).

## Beschreibung

Diese internationale Anmeldung nimmt die Priorität der deutschen Patentanmeldung DE 10 2021 110 964.7 vom 28. April 2021 in Anspruch.

### Feld der Erfindung

Die Erfindung richtet sich auf Vorrichtungen und Verfahren zur Überwachung internen Taktgeber eines Quantencomputers im Betrieb. Dabei steht ein Quantencomputer auf Basis von paramagnetischer Zentren im Vordergrund. Ganz besonders bevorzugt handelt es sich um paramagnetische Zentren in Diamant. Besonders bevorzugt handelt es sich bei einem oder mehreren der paramagnetischen Zentrum um eines oder mehrere der folgenden Zentren in Diamant: NV, SiV, TiV, GeV, SnV, NiN₄, PbV, ST1, L1. In dem hier vorgelegten Dokument stehen Quantencomputer auf der Basis von NV-Zentren in Diamant im Vordergrund. Der Fachmann liest beliebige Kombinationen der vorstehenden paramagnetischen Zentren als mögliche Realisierungen mit. Das hier vorgelegte Dokument verweist in diesem Zusammenhang beispielsweise auf das Dokument
WO 2021 083 448 A1.

### Allgemeine Einleitung

Bei der Diskussion von potenziellen Anwendungen von Quantencomputern taucht von Zeit zu Zeit die Frage auf, ob Quantencomputer so eingesetzt werden können, dass sie tatsächlich zuverlässig immer die erwarteten Ergebnisse liefern. Grundsätzlich handelt es sich bei Quantencomputern ja um Systeme, die vorbestimmte Ergebnisse nur mit gewissen Wahrscheinlichkeiten liefern. Insofern unterscheiden sie sich bereits in ihrer Grundzuverlässigkeit erheblich.

Hier geht es aber nicht um eine Fehlerkorrektur von Quantencomputern. Hier geht es stattdessen um eine SIL (Safety Integrity Level) konforme Verhinderung unerlaubter und ggf. sogar gefährlicher Zustände von Systemen, die von Quantencomputern gesteuert werden. Hierzu müssen Fehler in den Quantensystemen, die während des Betriebs auftauchen können erkannt werden können. Es muss verhindert werden, dass die Systeme, die von solchen Quantencomputern gesteuert werden, in unsichere Zustände geraten.

### Stand der Technik

Das hier vorgelegte Dokument nimmt Bezug auf die zum Zeitpunkt der Anmeldung der prioritätsgebenden Patentanmeldung DE 10 2021 110 964.7 vom 28. April 2021 der hier vorgelegten Dokuments noch unveröffentlichten internationalen Patentanmeldung WO 2021 083 448 A1.

Laut der Schrift Fu X et Al "eQASM: An Executable Quantum Instruction Set Architecture", 9. März 2019, (2019-03-09), XP055777269, https://arxiv.org/pdf/1808.02449.pdf umfasst ein weit verbreitetes Paradigma der Quantenprogrammierung sowohl den Daten-Fluss als auch den KontrollFluss. Bestehende Quanten-Hardware kann den Kontrollfluss nicht gut unterstützen, was die Bandbreite der Quanten-Software, die auf der Hardware ausgeführt werden kann, erheblich einschränkt. Die Autoren der vorstehenden Schrift haben dabei nach eigener Aussage bei der Analyse der Einschränkungen in der Kontroll-Mikroarchitektur festgestellt, dass die bestehenden Quanten-Assemblersprachen entweder zu hochsprachig oder zu eingeschränkt sind, um eine umfassende Fluss-Kontrolle auf der Hardware zu unterstützen. Die Autoren der obigen Schrift geben an, dass bereits beim Quanten-Mikrobefehlssatz QuMIS beobachtet wurde die Quantenbefehlssatz-Architektur (QISA) aufgrund mikroarchitektonischer Beschränkungen unter begrenzter Skalierbarkeit und Flexibilität leiden kann. Es ist It. den Autoren der obigen Schrift eine offene Herausforderung, eine skalierbare und flexible QISA zu entwerfen, die eine umfassende Abstraktion der Quantenhardware bietet. In ihrer Arbeit schlagen die Autoren der obigen Schrift eine ausführbaren QISA vor, genannt eQASM, der aus der Quanten-Assemblersprache (QASM) übersetzt werden kann, ein umfassendes Quantenprogramm mit Fluss-Kontrolle unterstützt und auf einer Quantenkontroll-Mikroarchitektur ausgeführt wird. Mit effizienter Timing-Spezifikation, Single-Operation-Multiple-Qubit-Ausführung und einer Architektur mit sehr langen Befehlswörtern bietet eQASM It. den Autoren der obigen Schrift eine bessere Skalierbarkeit als QuMIS. Die Definition von eQASM konzentriert sich It. den Autoren auf die Assemblerebene, um ausdrucksstark zu sein. Quantenoperationen werden zur Kompilierzeit konfiguriert, anstatt zur QISA-Designzeit definiert zu werden. Die Autoren der obigen Schrift instanziieren eQASM mittels eines 32-Bit-Befehlssatzes, der auf einen supraleitenden Quantenprozessor mit sieben Quantenbits abzielt. Die Autoren der obigen Schrift validierten ihr Design, indem sie mehrere Experimente auf einem Zwei-Qubit-Quantenprozessor durchführten.

Die obige Schrift offenbart nicht, wie sichergestellt werden kann, dass ein von einem Quantencomputer gesteuertes System nicht in einen gefährlichen Zustand geraten kann. Außerdem umfasst sie keine Hinweise auf Quantencomputer mit unterschiedlichen Quantenbits, beispielsweise nukleare Quantenbits oder unterschiedliche parametrische Zentren.

In der Schrift Alexander Robert S. Smith ET AL "A practical quantum instruction set architecture", arXiv.org, 17. Februar 2017 (2017-02-17), XP055555269, https://arxiv.org/pdf/1608.03355.pdf stellen die Autoren eine abstrakte Maschinenarchitektur für klassische Berechnungen/Quantenberechnungen einschließlich Kompilierung vor, sowie eine Quantenbefehlssprache namens Quil zum expliziten Kodieren dieser Berechnungen. Mit diesem Formalismus diskutieren die Autoren der vorstehenden Schrift konkrete Implementierungen der Maschine und nicht-triviale Algorithmen, die auf sie abzielen. Die Einführung dieser Maschine steht nach Aussage der Autoren der vorstehenden Schrift im Einklang mit der laufenden Entwicklung der Quantencomputertechnologie und ermöglicht nach deren Aussage portable Beschreibungen aktueller klassischer Algorithmen /quantentechnologischer Algorithmen. Auch diese Schrift offenbart nicht, wie sichergestellt werden kann, dass ein von einem Quantencomputer gesteuertes System nicht in einen gefährlichen Zustand geraten kann. Außerdem umfasst sie keine Hinweise auf Quantencomputer mit unterschiedlichen Quantenbits, beispielsweise nukleare Quantenbits oder unterschiedliche parametrische Zentren.

### Aufgabe

Dem Vorschlag liegt daher die Aufgabe zugrunde, eine Lösung zu schaffen die die obigen Nachteile des Stands der Technik nicht aufweist und weitere Vorteile aufweist.

Diese Aufgabe wird durch Vorrichtungen und Verfahren der Hauptansprüche gelöst. Weitere Ausgestaltungen sind Gegenstand von Unteransprüchen.

### Lösung der Aufgabe

Die technische Lehre des hier vorgelegten Dokuments schlägt ein Quantencomputersystem (QUSYS) mit einem Quantencomputer (QC) mit einem internen Taktgeber (ICLK) und mit einer Quantencomputerüberwachungsvorrichtung (QUV) vor. Der Quantencomputer (QC) umfasst bevorzugt eine Mehrzahl von Quantenpunkten mit ersten Mitteln. Die ersten Mittel können bevorzugt einzelne oder mehrere oder die Quantenpunkte des Quantencomputers (QC) manipulieren und so deren Quantenzustände modifizieren. Im Sinne dieses Dokuments können die Quantenpunkte beispielsweise paramagnetische Zentren, beispielsweise NV-Zentren in Diamant und/oder nukleare Spins, beispielsweise ¹³C-Isotope in einer ¹²C-Diamant-Matrix sein. Das hier vorgelegte Dokument verweist in diesem Zusammenhang beispielsweise auf das Dokument WO2021083448A1. Kernquantenpunkte (nuclear qubits) sind jedoch ausdrücklich von dem Begriff Quantenpunkt im Sinne des hier vorgelegten Dokuments umfasst. Die ersten Mittel können Quantenpunkte des Quantencomputers, die zumindest eine Teilmenge der Quantenpunkte des Quantencomputers (QC) sind, miteinander koppeln, insbesondere verschränken. Der Quantencomputer (QC) führt ein Quantencomputerprogramm mit einem Quantencomputerprogrammablauf aus. Bevorzugt umfasst der Quantencomputer (QC) einen Steuerrechner (µC) mit einem Speicher (MEM). Typischerweise bildet der Steuerrechner (µC) mit dem Speicher eine von-Neumann- oder Harvard-Architektur. Der Steuerrechner (µC) kann bevorzugt die besagten ersten Mittel des Quantencomputers (QC) steuern. Das Quantencomputerprogramm ist bevorzugt eine Befehlsabfolge von Quantencomputercodes für den Steuerrechner (µC), wobei die Quantencomputerprogrammcodes jeder für sich eine oder mehrere Operationen des Steuerrechners (µC) kodieren bzw. repräsentieren. Dabei repräsentiert mindestens ein Quantencomputerprogrammcode eine Quantenoperation. Typischerweise repräsentieren mehrere verschiedene Quantencomputercodes eine Mehrzahl verschiedener Quantenoperationen. Typischerweise repräsentiert eine Mehrzahl weiterer Quantencomputerprogrammcodes Operationen des Steuerrechners (µC), die keine Quantencomputeroperationen sind. Die Menge der Quantencomputerprogrammcodes im Speicher (MEM) des Steuerrechners (µC) des Quantencomputers bildet das Quantencomputerprogramm des Quantencomputers (QC).

Die ersten Mittel des Quantencomputers (QC) sind bevorzugt dazu geeignet, eine Überlagerung von Quantenzuständen eines oder mehrerer Quantenbits des Quantencomputers (QC) herzustellen und/oder zu manipulieren.

Die ersten Mittel des Quantencomputers (QC) sind bevorzugt dazu geeignet, einen vorbestimmten Quantenzustand eines oder mehrerer Quantenbits des Quantencomputers (QC) einzustellen.

Die ersten Mittel des Quantencomputers (QC) sind bevorzugt dazu geeignet, einen eine vorbestimmte Überlagerung mehrerer vorbestimmter Quantenzustände eines oder mehrerer Quantenbits des Quantencomputers (QC) einzustellen.

Die ersten Mittel des Quantencomputers (QC) sind bevorzugt dazu geeignet, einen eine vorbestimmte Verschränkung mehrerer vorbestimmter Quantenzustände eines oder mehrerer Quantenbits des Quantencomputers (QC) einzustellen.

Der Quantencomputer (QC) verfügt bevorzugt über zweite Mittel, um einen Quantenzustand eines oder mehrerer Quantenbits des Quantencomputers (QC) zu ermitteln und/oder auszulesen. Bevorzugt umfassen die Quantenbits paramagnetische Zentren in Diamant. Bevorzugt umfassen diese paramagnetischen Zentren NV-Zentren und/oder SiV-Zentren und/oder TR1-Zentren und/oder L1-Zentren und/oder TiV-Zentren und/oder GeV-Zentren und/oder SnV-Zentren und/oder NiN₄-Zentren und/oder PbV-Zentren und/oder ST1-Zentren etc. NV-Zentren sind hierbei besonders geeignet.

Bevorzugt umfassen die Quantenbits Kernquantenbits, die Isotope mit einem magnetischen Moment umfassen. Das hier vorgelegte Dokument verweist in diesem Zusammenhang beispielsweise auf das Dokument WO2021083448A1. Beispielsweise kann es sich bei den Kernquantenpunkten um ¹³C-Isotope und/oder ¹⁴N-Isotope und/oder ¹⁵N-Isotope innerhalb des Diamantmaterials handeln.

Die ersten Mittel umfassen bevorzugt eine oder mehrere elektrische Leitungen, die mittle magnetischer, elektrische und/oder elektromagnetische Felder die Quantenzustände der Quantenbits manipulieren können. Die ersten Mittel umfassen bevorzugt auch Mittel zur Ansteuerung dieser Leitungen. Die ersten Mittel können beispielsweise AWG-Generatoren umfassen. Das hier vorgelegte Dokument verweist in diesem Zusammenhang beispielsweise auf das Dokument WO2021083448A1.

Bevorzugt steuert ein Steuerrechner (µC) des Quantencomputers (QC) diese ersten Mittel.

Das hier vorgelegte Dokument verweist in diesem Zusammenhang beispielsweise auf das Dokument WO2021083448A1.

Das Quantencomputerprogramm umfasst im Sinne des hier vorgelegten Dokuments zumindest einen Befehl und/oder eine Befehlssequenz für den Steuerrechner (µC) in Form eines Quantencomputerprogrammcodes, die den Steuerrechner (µC) des Quantencomputers (QC) dazu veranlasst
- mittels der ersten Mittel mindestens ein Quantenbit und/oder mehrere Quantenbits in vorbestimmter Weise zu manipulieren und/oder
- mittels der ersten Mittel einen vorbestimmten Zustand eines oder mehrerer Quantenbits einzustellen und/oder
- mittels der ersten Mittel eine vorbestimmte Überlagerung eines oder mehrerer Quantenzustände eines oder mehrerer Quantenbits des Quantencomputers (QC) einzustellen
- mittels der ersten Mittel eine vorbestimmte Überlagerung eines oder mehrerer Quantenzustände mindestens eines Quantenbits und/oder mehrerer Quantenbits in vorbestimmter Weise zu manipulieren und/oder
- mittels der zweiten Mittel den Quantenzustand eines oder mehrerer Quantenbits auszulesen.

Im Sinne des hier vorgelegten Dokuments stellt ein solcher Befehl oder eine solche Befehlssequenz des Steuerrechners (µC) des Quantencomputers (QC) eine Quantenoperation dar. Bevorzugt repräsentiert ein Quantencomputerprogrammcode eine Quantenoperation bzw. eine Operation des Steuerrechners (µC).

Ein Quantencomputerprogramm im Sinne des hier vorgelegten Dokuments umfasst mindestens eine Quantenoperation. Somit weist ein Quantencomputerprogramm im Sinne des hier vorgelegten Dokuments mindestens einen Befehl auf, der bei Ausführung durch den Steuerrechner (µC) des Quantencomputers (QC) letztlich zu einer Manipulation mindestens eines Quantenbits der Quantenbits des Quantencomputers (QC) mittels der ersten Mittel (M1) und/oder zu einem Auslesen mindestens eines Quantenbits der Quantenbits des Quantencomputers (QC) mittels der zweiten Mittel (M2) führt.

### Interpreter-Betrieb des Quantencomputers

Es ist im Sinne einer einfachen Bedienbarkeit auch denkbar, dass der Steuerrechner (µC) eine Textdatei mit einem Source-Code interpretiert. Die Textdatei stellt das Anwenderprogramm dar und ist in der Regel mit einem einfachen Editor in einer Datenverarbeitungsanlage direkt auf einem Bildschirm editierbar.

In dem Fall ist die Textdatei des Anwenderprogramms bevorzugt in dem Speicher (MEM) des Quantencomputers (µC) abgelegt. Die Symbole der Textdatei des Anwenderprogramms sind bevorzugt in einer geordneten, bevorzugt sequenziellen Reihenfolge in dem Speicher (MEM) des Quantencomputers abgelegt. Sofern der Speicher (MEM) des Quantencomputers (QC) die Textdatei nicht vollständig aufnehmen kann, lädt bevorzugt der Steuerrechner (µC) die benötigten Komponenten der Textdatei des Anwenderprogramms über eine Datenschnittstelle aus einem Massenspeicher, beispielsweise einer Festplatte oder dergleichen, nach. Die Datenschnittstelle kann beispielsweise ein Datenbus (DB) sein. Der Massenspeicher ist bevorzugt an dem Datenbus (DB) angeschlossen. Sofern der Massenspeicher beispielsweise wegen Belegung des Datenbusses durch andere Quantencomputersystemkomponenten belegt ist, wartet der Steuerrechner (µC) mit dem Nachladen, bis der Datenbus wieder frei ist. Dies kann beschleunigt werden, wenn der Quantencomputer (QC) eine DMA-Schnittstelle aufweist, die direkt Daten eines Quantencomputerprogramms mit Quantencomputerprogrammcodes oder Textsymbolen für einen Interpreter nachlädt. In dem Fall muss der Steuerrechner (µC) nicht warten, da die DMA-Schnittstelle beispielsweise auf Anforderung durch den Steuerrechner (µC) die Daten vom Massenspeicher in den Speicher (MEM) des Quantencomputers (QC) nachlädt oder umgekehrt vom Speicher (MEM) des Quantencomputers (QC) zurück in den Massenspeicher abspeichert.

Bevorzugt umfasst die Textdatei des Anwenderprogramms dann Symbolketten. Die Symbole der Symbolketten können beispielsweise Symbole für Buchstaben, Sonderzeichen, Leerstellen und Steuerzeichen, wie neue Zeile etc. umfassen. Die Symbole sind innerhalb

Im Falle eines Interpreters führt der Steuerrechner ein Basisprogramm aus, das in Form von Quantencomputerprogrammcodes im Speicher (MEM) des Quantencomputers (QC) abgelegt ist, die der Steuerrechner (µC) ausführt. Die Symbole sind bevorzugt in Worten aus Symbolketten mehrerer aufeinander folgender Symbole in der Textdatei und dann auch im Speicher (MEM) des Quantencomputers (QC) organisiert, die bei Darstellung auf einem Bildschirm bevorzugt einen durch einen Menschen lesbaren Text ergeben. Einige Symbolketten der Worte repräsentieren bevorzugt einzelne Quantencomputerprogrammcodes und/oder Folgen von Quantencomputerprogrammcodes. Welche Quantencomputerprogrammcodes und/oder Folgen von Quantencomputerprogrammcode durch die betreffende Symbolkette eines Wortes repräsentiert wird, legt bevorzugt das Basisprogramm im Speicher (MEM) des Quantencomputers (QC) fest. Dort ist bevorzugt codiert, welche konkrete Symbolkette welchem Quantencomputerprogrammcode bzw. welcher Quantencomputerprogrammcodesequenz entspricht. Eine Symbolkette kann somit auch ein Unterprogramm des Quantencomputerprogramms repräsentieren.

Findet nun der Steuerrechner (µC) bei einer Analyse der in seinem Speicher (MEM) befindlichen Informationen der Textdatei durch Ausführung des Basisprogramms eine Symbolkette innerhalb der Informationen der Textdatei, die einer der vordefinierten Symbolketten in dem Speicher entspricht, so ordnet der Steuerrechner durch Ausführung des Basisprogramms dieser Symbolkette einen Quantencomputerprogrammcode oder eine Sequenz von Quantencomputerprogrammcodes oder ein Quantencomputerunterprogramm zu und führt dieses aus. Welcher Quantencomputerprogrammcode bzw. welche Sequenz von Quantencomputerprogrammcodes bzw. welches Quantencomputerunterprogramm der Symbolkette zugeordnet ist, ist dabei bevorzugt im Speicher (MEM) des Quantencomputers hinterlegt. Bei der Analyse der Symbolkette greift der Steuerrechner (µC) bevorzugt hierauf zu und identifiziert hierdurch den auszuführenden Quantencomputerprogrammcode oder die auszuführende Sequenz von Quantencomputerprogrammcodes oder das auszuführende Quantencomputerunterprogramm. Genau genommen führt also der Steuerrechner (µC) des Quantencomputers (QC) den Quantencomputerprogrammcode im Speicher (MEM) des Quantencomputers (QC) aus. Dabei kann der Speicher (MEM) die besagten Befehlssequenzen umfassen, die Quantenoperationen darstellen. Führt der Steuerrechner (µC), der Teil des Quantencomputers (QC) im Sinne des hier vorgelegten Dokuments ist, einen solchen Quantencomputerprogrammcode einer Befehlssequenz einer Quantenoperation aus, so führt damit der Quantencomputer als Ganzes diese Quantenoperation durch. Damit ist in diesem Sinne die Durchführung einer Quantenoperation im Sinne des hier vorgelegten Dokuments eine Ausführung eines Befehls eines Quantencomputerprogrammcodes im Speicher (MEM) des Quantencomputers (QC) bzw. einer Befehlssequenz eines Quantencomputerprogrammcodes im Speicher (MEM) des Quantencomputers (QC) durch den Steuerrechner (µC) des Quantencomputers, die einem solchen besagten Befehl oder eine solchen besagten Befehlssequenz des Steuerrechners (µC) des Quantencomputers (QC) entspricht, die zumindest ein Quantenbit des Quantencomputers in irgendeiner Weise verändernd oder auslesend einbezieht.

Eine Quantencomputerberechnung im Sinne des hier vorgelegten Dokuments ist ein Quantencomputerprogramm oder ein Quantencomputerprogrammabschnitt, der zumindest einen Quantencomputerprogrammcode für zumindest eine Quantenoperation oder zumindest eine Sequenz von Quantenoperationen umfasst.

Der Quantencomputerprogrammablauf ist im Sinne des hier vorgelegten Dokuments die vorgesehen zeitliche Folge der Abarbeitung von Quantencomputerprogrammcode durch den Steuerrechner (µC) des Quantencomputers (QC). Der Quantencomputerprogrammcode in Form von Quantencomputercode befindet sich dabei vorzugsweise in einem Speiche (MEM) des Steuerrechners (µC) des Quantencomputers (QC). Bevorzugt besteht dabei ein Quantencomputercode aus einem oder mehreren Datenbits, die zusammen zumindest eine vorbestimmte Manipulation eines oder mehrere vorbestimmter Quantenbits symbolisieren. Ein Quantencomputerprogrammcode kann dabei auch konventionelle Op-Codes des Steuerrechners (µC) repräsentieren. Bei dem Steuerrechner (µC) kann es sich beispielsweise um einen ARM-Prozessor handeln. Dabei kann das Quantencomputerprogramm einen Quantencomputerprogrammablauf mit Schleifen und Verzweigungen aufweisen. Wie oben ausgeführt, kann das Quantencomputerprogramm auch in lesbarer Form vorliegen und während des Betriebs durch den Steuerrechner (µC) interpretiert werden. Im Sinne des hier vorgelegten Dokuments kann daher auch eine Symbolkette, die einen Quantencomputercode repräsentiert und/oder eine Folge von Quantencomputercodes repräsentiert und/oder ein Quantencomputerunterprogrammrepräsentiert, Teil eines Quantencomputerprogramms sein. Wie die Informationen über die auszuführenden Quantencomputercodes dem Steuerrechner (µC) zur Verfügung stehen ist somit letztlich irrelevant. Wichtig ist nur, dass der Steuerrechner zum richtigen Zeitpunkt die notwendigen Informationen darüber zur Verfügung stehen, welcher Quantencomputercode nun als nächste auszuführen ist. Eine solche Anweisungsliste ist im Sinne des hier vorgelegten Dokuments ein Quantencomputerprogramm. Das Quantencomputerprogramm kann somit binär codiert und/oder als interpretierbare Klartextdaten im Speicher (MEM) des Quantencomputers (QC) vorliegen.

In vielen Fällen ist es sinnvoll, wenn eine Verzweigungsoperation im Quantencomputerprogrammablauf von dem ausgelesenen Zustand eines oder mehrerer Quantenbits des Quantencomputers (QC) zu einem Zeitpunkt und/oder zu einem Verzeigungszeitpunkt während der Ausführung des Quantencomputerprogramms durch den Steuerrechner (µC)abhängt.

In vielen Fällen ist es sinnvoll, wenn die Durchführung einer Quantencomputerprogrammschleife im Quantencomputerprogrammablauf von dem ausgelesenen Zustand eines oder mehrerer Quantenbits des Quantencomputers (QC) zu einem Zeitpunkt und/oder zu einem Rücksprungzeitpunkt und/oder am Beginn der Quantencomputerprogrammschleife und/oder zu Beginn der Quantencomputerprogrammschleife und/oder innerhalb der Quantencomputerprogrammschleife während der Ausführung des Quantencomputerprogramms durch den Steuerrechner (µC) abhängt.

Die Quantencomputerüberwachungsvorrichtung (QUV) überwacht den korrekten Quantencomputerprogrammablauf des Quantencomputerprogramms des Quantencomputers (QC).

Die Quantencomputerüberwachungsvorrichtung (QUV) kann beispielsweise neben dem Quantencomputerprogrammablauf auch den Wert und/oder Werteverlauf eines oder mehrerer der folgenden Betriebsparameter überwachen:
- einen Wert einer Betriebsspannung einer Betriebsspannungsleitung (VDD) des Quantencomputersystems (QUSYS) gegenüber einem Bezugspotenzial (GND),
- einen Wert einer dieser Betriebsspannungsleitung (VDD) zugeordneten Stromaufnahme (IDD) des Quantencomputersystems (QUSYS),
- einen Wert einer Betriebsspannung einer Betriebsspannungsleitung (VDD) des Quantencomputers (QC) gegenüber einem Bezugspotenzial (GND) und/oder
- einen Wert einer dieser Betriebsspannung zugeordneten Stromaufnahme (IDD) des Quantencomputers (QC),
- einen Wert einer Betriebsspannung einer Betriebsspannungsleitung (VDD) des Steuerrechners (µC) des Quantencomputers (QC) gegenüber einem Bezugspotenzial (GND) und/oder
- einen Wert einer dieser Betriebsspannung zugeordneten Stromaufnahme (IDD) des Steuerrechners (µC) des Quantencomputers (QC),
- einen Wert einer Betriebsspannung einer Betriebsspannungsleitung (VDD) der ersten Mittel zur Manipulation der Quantenbits des Quantencomputers (QC) gegenüber einem Bezugspotenzial (GND) und/oder
- einen Wert einer dieser Betriebsspannung zugeordneten Stromaufnahme (IDD) der ersten Mittel zur Manipulation der Quantenbits des Quantencomputers (QC),
- einen Wert einer Betriebsspannung einer Betriebsspannungsleitung (VDD) der zweiten Mittel zum Auslesen des Zustands der Quantenbits des Quantencomputers (QC) gegenüber einem Bezugspotenzial (GND) und/oder
- einen Wert einer dieser Betriebsspannung zugeordneten Stromaufnahme (IDD) der zweiten Mittel zum Auslesen des Zustands der Quantenbits des Quantencomputers (QC),
- einen Wert einer Betriebsspannung eines anderen Vorrichtungsteils des Quantencomputers (QC), beispielsweise von Messeinrichtungen zur Erfassung der magnetischen Flussdichte am Ort der Quantenbits oder in der Nähe der Quantenbits des Quantencomputers (QC), gegenüber einem Bezugspotenzial (GND) und/oder
- einen Wert einer Betriebsspannung zugeordneten Stromaufnahme eines solchen Vorrichtungsteils des Quantencomputers (QC),
- den Prozessortakt (QCCLK) des Steuerrechners (µC) des Quantencomputers (QC),
- den Wert der Frequenz des Prozessortakts (QCCLK) des Steuerrechners (µC),
- die Lichtabgabe einer Lichtquelle (LED) eines Quantencomputers (QC) zum Bestrahlen von Quantenbits (QUB) des Quantencomputers (QC) mit Strahlung,
- die Detektionsfähigkeit von elektromagnetischer Strahlung eines Fotodetektors, der beispielsweise Teil der besagten zweiten Mittel zum Auslesen des Zustands eines oder mehrerer Quantenbits des Quantencomputers (QC) sein kann,
- die bestimmungsgemäß korrekte Erzeugung elektromagnetischer Felder, insbesondere von Mikrowellenfeldern und/oder Radiowellenfeldern einer Vorrichtung des Quantencomputers (QC), insbesondere der besagten ersten Mittel (M1), zur Manipulation eines oder mehrerer Quantenbits (QUB),
- den komplexen und/oder realen und/oder imaginären Leitwert einer Leitung, die Teil einer Vorrichtung des Quantencomputers (QC), insbesondere der besagten ersten Mittel (M1), zur Manipulation eines oder mehrerer Quantenbits (QUB) ist,
- die bestimmungsgemäß korrekte Funktion der zweiten Mittel (M2) zum Auslesen der Quantenzustände der Quantenbits (QUB) des Quantencomputers (QC).

Der Quantencomputer (QC) führt vorschlagsgemäß in vorbestimmten Zeiträumen vor vorbestimmten Zeitpunkten (tv) vorbestimmte Quantencomputerberechnungen mit mindestens einer Quantenoperation unter Manipulation zumindest eines Quantenbits (QUB) des Quantencomputers (QC) durch. Die Quantencomputerberechnungen umfassen dabei ein oder mehrere Quantenoperationen, die der Quantencomputer (QC) bevorzugt entsprechend einem vorgesehenen Quantencomputerprogrammablauf in vorgesehener Weise durchführt. Das Ergebnis dieser vorbestimmten Quantencomputerberechnungen des Quantencomputers (QC) ist die Berechnung vorbestimmter Quantencomputerberechnungsergebnisse durch den Quantencomputer (QC). Vorschlagsgemäß steuert der Quantencomputer (QC) nach diesen vorbestimmten Zeitpunkten (tv) die Quantencomputerüberwachungsvorrichtung (QUV) an. Der Steuerrechner (µC) sendet hierzu bevorzugt über einen Datenbus (DB) oder ein anderes Signalisierungsmittel eine Nachricht an die Quantencomputerüberwachungsvorrichtung (QUV). Der Inhalt und der Zeitpunkt der Sendung der Nachricht durch den Quantencomputer (QC) an die Quantencomputerüberwachungsvorrichtung sind nicht beliebig. Im Gegensatz zu Stand der Technik kann bei einer Überwachung eines Quantencomputers in vielen Fällen das Ergebnis einer Quantencomputerberechnung nicht exakt im Vorfeld festgelegt werden, da ein solches Quantencomputerberechnungsergebnis in den Quantenbits die Form der Überlagerung einer Mehrzahl möglicher Quantenzustände sein kann, die sich in den Quantenbits überlagern. Liest der Steuerrechner nun den Zustand der Quantenbits aus, so erhält er nur ein mögliches Quantencomputerberechnungsergebnis von mehreren Quantencomputerberechnungsergebnissen. Sieht die durchgeführte Quantencomputerberechnung als Ergebnis eine Überlagerung mehrerer solcher Quantencomputerberechnungsergebnisse als erlaubte Quantencomputerberechnungsergebnisse vor, so reicht die einmalige Berechnung der Quantencomputerberechnungsergebnisse in der Regel nicht aus, um auf eine korrekte Funktion des Quantencomputers zu schließen. Vielmehr wird die Quantencomputerberechnungsvorrichtung (QUV) mehrmals die vorbestimmte Quantencomputerberechnung durch den Quantencomputer (QC) durchführen lassen und die jeweilige Häufigkeit der erwarteten Quantencomputerberechnungsergebnisse mit jeweiligen Erwartungswerten für die tatsächlich vom Quantencomputer (QC) an die Quantencomputerüberwachungsvorrichtung (QUV) übermittelten Quantencomputerberechnungsergebnisse vergleichen. Weicht diese jeweilige Häufigkeit der tatsächlich vom Quantencomputer (QC) an die Quantencomputerüberwachungsvorrichtung (QUV) übermittelten Quantencomputerberechnungsergebnisse von den jeweiligen Erwartungswerten für die jeweilige Häufigkeit der erwarteten Quantencomputerberechnungsergebnisse bei einem oder mehreren Erwartungswerten um mehr als eine jeweilige Erwartungswertabweichungstoleranz ab, so kann die Quantencomputerüberwachungsvorrichtung (QUV) auf einen Fehler des Quantencomputers (QC) schließen.

Um die Komplexität klein zu halten, ist es sinnvoll, wenn eine solche Quantencomputerberechnung zur Überprüfung der korrekten Funktion von Quantenbits des Quantencomputers (QC) nur wenige Quantenbits des Quantencomputers (QC), bevorzugt nur ein Quantenbit des Quantencomputers (QC) manipuliert.

Um die Komplexität klein zu halten, ist es sinnvoll, wenn eine solche Quantencomputerberechnung zur Überprüfung der korrekten Funktion von Kopplungen von Quantenbits des Quantencomputers (QC) nur wenige Kopplungen weniger Quantenbits des Quantencomputers (QC), bevorzugt nur eine Kopplung zwischen zwei Quantenbit des Quantencomputers (QC) manipuliert. Beispielsweise kann eine solche Quantencomputerberechnung eine korrekte Verschränkung zwischen zwei Quantenbits des Quantencomputers prüfen.

Der Quantencomputer muss dabei der Quantencomputerüberwachungsvorrichtung innerhalb eines bevorzugt vorgegebenen Zeitfensters das erwartete Quantencomputerberechnungsergebnis mitteilen. Es kann sich auch um das Ergebnis eines Selbsttests des Quantencomputers (QC) handeln.

Das Selbsttestergebnis ist dann typischerweise ein Quantencomputerberechnungsergebnis im Sinne des hier vorgelegten Dokuments.

Sofern der Quantencomputer nicht rechtzeitig, also nicht innerhalb des erwarteten Zeitfensters, das erwartete oder das erlaubte Quantencomputerberechnungsergebnis an die Quantencomputerüberwachungsvorrichtung sendet, schließt die Quantencomputerüberwachungsvorrichtung (QUV) auf einen Fehler oder fehlerhaften Zustand des Quantencomputers (QC). Die Quantencomputerüberwachungsvorrichtung (QUV) führt dann bevorzugt eine Gegenmaßnahme oder mehrere Gegenmaßnahmen durch. Hierbei kann es sich beispielsweise um die Durchführung vorbestimmter Quantencomputerberechnungen zum Test des Quantencomputers (QC) und/oder um eine Stilllegung des betreffenden Quantencomputers (QC) und/oder durch den Ersatz des Quantencomputers (QC) durch eine Quantencomputersimulationsvorrichtung zur Gewährleistung eines Notlaufs und/oder um eine Signalisierung eine Fehlers an eine übergeordnete Einheit und/oder einen Nutzer und/oder eine Versetzung des Quantencomputersystems in einen Notlaufzustand oder dergleichen handeln. Diese Maßnahmen vermeiden, dass das Quantencomputersystem oder ein vom Quantencomputersystem beeinflusstes oder gesteuertes System in einen nicht definierten oder gefährlichen Zustand geraten kann.

Insbesondere kann die Quantencomputerüberwachungsvorrichtung die Quantencomputerüberwachungsergebnisse auf Plausibilität überprüfen. Beispielsweise können vorbestimmbare spezielle Quantencomputerberechnungsergebnisse von vornherein ausgeschlossen sein. Beispielsweise ist es denkbar, dass das Quantencomputersystem Teil eines übergeordneten Gesamtsystems ist und dieses beeinflusst oder steuert. In der Menge der möglichen Quantencomputerberechnungsergebnisse, die bei einer wie auch immer gearteten Fehlfunktion des Quantencomputers (QC) an das übergeordnete Gesamtsystem weitergegeben werden könnten, können sich beispielsweise auch solche Quantencomputerberechnungsergebnisse befinden, die vorhersehbar, das übergeordnete Gesamtsystem funktionsunfähig machen würde oder beschädigen würden oder in einen unsicheren oder gefährlichen Zustand bringen würden. Bevorzugt unterbindet die Quantencomputerüberwachungsvorrichtung (QUV) die Weitergabe dieser fehlerhaften Quantencomputerberechnungsergebnisse an das übergeordnete Gesamtsystem. Bevorzugt ersetzt die Quantencomputerüberwachungsvorrichtung (QUV) in einem solchen Fall, beispielsweise im Zusammenwirken mit einer zentralen Steuereinrichtung (ZSE) des übergeordneten Gesamtsystems, das Quantencomputerberechnungsergebnis durch einen vorgegebenen Ersatzwert zusammen mit einer Signalisierung der Fehlerhaftigkeit des ursprünglichen Quantencomputerberechnungsergebnisses. Hierdurch wird das übergeordnete Gesamtsystem in die Lage versetzt, dies zu erkennen und seinerseits Gegenmaßnahmen zu ergreifen.

Beispielsweise kann eine Gegenmaßnahme der Quantencomputerüberwachungsvorrichtung (QUV) ein Rücksetzten (Reset-Funktion) des Quantencomputers (QC) auf den Quantencomputerprogrammstart (QPS) oder einen anderen vorbestimmten Quantencomputerprogrammpunkt (QPV) dergleichen durchführen.

Das Quantencomputersystem und/oder der Quantencomputer (QC) umfassen bevorzugt einen Datenbus (DB). Der Steuerrechner (µC) und/oder eine DMA-Schnittstelle des Quantencomputers (QC) sind bevorzugt mit dem Datenbus (DB) verbunden. An dem Datenbus (DB) kann beispielsweise ein externer Massenspeicher, wie beispielsweise eine Festplatte angeschlossen sein. Bevorzugt koppelt der Datenbus (DB) den Quantencomputer (QC) und zwar insbesondere den Steuerrechner (µC) des Quantencomputers mit der Quantencomputerüberwachungsvorrichtung (QUV). Die Quantencomputerüberwachungsvorrichtung (QUV) kann Teil des Quantencomputers (QC) sein. Die Quantencomputerüberwachungsvorrichtung (QUV) ist aber bevorzugt immer Teil des Quantencomputersystems (QUSYS). Der Steuerrechner (µC) des Quantencomputers (QC) und damit der Quantencomputer (QC) kann Programmdaten und/oder Quantenprogrammcodes und/oder Informationen und/oder Quantencomputerberechnungsergebnisse mittels des Datenbusses (DB) an die Quantencomputerüberwachungsvorrichtung (QUV) übertragen. Die Quantencomputerüberwachungsvorrichtung (QUV) Informationen und/oder Anfragen und/oder Quantencomputerprogrammcode und/oder Programmdaten mittels des Datenbusses (DB) an den Quantencomputer(QC) bzw. an den Steuerrechner (µC) des Quantencomputers (QC) übertragen. Die Laufzeit von Quantencomputerprogrammen, die der Steuerrechner (µC) des Quantencomputers (QC) und damit der Quantencomputer (QC) ausführt, muss so kurz sein, dass die Kohärenz der Quantenbits des Quantencomputers (QC) in dieser Zeit nicht verloren geht. Die Abarbeitung von Quantencomputerprogrammen durch den Steuerrechner (µC) endet daher typischerweise bevor dies geschieht. Einen solchen Zeitabschnitt nennen wir hier im Folgenden einen Quantencomputerprogrammabschnitt.

Nachdem ein Quantencomputerprogrammabschnitt ausgeführt wurde, muss der Steuerrechner (µC) des Quantencomputers (QC) zu Beginn des nächsten Quantencomputerprogrammabschnitts mittels der ersten Mittel die Quantenbits des Quantencomputers (QC) neu initialisieren und in einer vorgegeben Überlagerung von Quantenzuständen bringen. Hierzu liest der Steuerrechner (µC) mittels der zweiten Mittel einen Zustand der relevanten Quantenbits des Quantencomputers (QC) am Ende des vorausgehenden Quantencomputerprogrammabschnitts aus. Da dieses Auslesen immer nur einen Zustand der sich am Ende des vorausgehenden Quantencomputerprogrammabschnitts überlagernden Quantenzustände der Quantenbits liefert, führt der Steuerrechner einen vorausgehenden Quantencomputerprogrammabschnitt bevorzugt mehrfach aus, um eine Statistik über die Zustände führen zu können und die Art der Überlagerung am Ende des vorausgehenden Quantencomputerprogrammabschnitts feststellen zu können. Diese Überlagerung der Quantenzustände initialisiert der Steuerrechner (µC) dann mittels der ersten Mittel bevorzugt am Beginn eines dem vorausgehenden Quantencomputerprogrammabschnitt nachfolgenden Quantencomputerprogrammabschnitts, sodass dann noch genügend Zeit für nachfolgende Quantencomputerberechnungen zur Verfügung steht. Diese periodenhafte Abarbeitung eines Quantencomputerprogramms durch den Quantencomputer schafft die Möglichkeit, zwischen einem vorausgehenden Quantencomputerprogrammabschnitt und einem nachfolgenden Quantencomputerprogrammabschnitt einen Quantencomputertestprogrammabschnitt einzufügen, in dem der Quantencomputer (QC) eine Quantencomputerberechnung durchführt, die die Quantencomputerüberwachungsvorrichtung (QUV) dem Quantencomputer als Aufgabe und/oder Auftrag und/oder Anfrage signalisiert hat.

Bevorzugt ist dabei das Ergebnis dieser Quantencomputerberechnung innerhalb des Quantencomputertestprogrammabschnitts vorbestimmt. Im Gegensatz zum Stand der Technik sind hierbei jedoch, da es sich um einen Quantencomputer handelt, die Ergebnisse nicht deterministisch. Vielmehr können ggf. mehrere, sich in den Quantenbits des Quantencomputers (QC) Quantenzustände Ergebnis einer solchen Quantencomputerberechnung zu testzwecken sein. Deterministisch ist dabei lediglich die Verteilung der Häufigkeit der Auslesung der verschiedenen Ergebnisse, wenn der Quantencomputertestprogrammabschnitt mehrfach durch den Quantencomputer (QC) ausgeführt wird. Soll daher in mehreren Quantencomputertestprogrammabschnitten die gleiche Quantenberechnung mehrfach ausgeführt werden, so übermittelt bevorzugt der Steuerrechner (µC) des Quantencomputers (QC) die jeweiligen Quantencomputerberechnungsergebnisse an die Quantencomputerüberwachungsvorrichtung (QUV). Die Quantencomputerüberwachungsvorrichtung überprüft somit nicht das Ergebnis der einzelnen Quantencomputerberechnung, sondern die Statistische Verteilung der Ergebnisse der Quantencomputerberechnung. Bevorzugt prüft die Quantencomputerüberwachungsvorrichtung dabei nicht alle Quantenbits, sondern immer nur eine Teilmenge der Quantenbits des Quantencomputers (QC) und/oder eine Teilmenge der Kopplungen zwischen mehreren, mindestens aber zwei Quantenbits des Quantencomputers (QC) aus der Menge aller Kopplungen zwischen Quantenbits des Quantencomputers (QC), um die Menge des physikalisch benötigten Speicherplatzes in einem Speicher der Quantencomputerüberwachungsvorrichtung zu begrenzen. Ist eine erste Teilmenge der Quantenbits des Quantencomputers (QC) auf diese Weise geprüft, so prüft bevorzugt die Quantenüberwachungsvorrichtung (QUV) eine zweite Teilmenge der Quantenbits des Quantencomputers (QC) auf diese Weise. Bevorzugt, aber nicht notwendigerweise haben die erste Teilmenge von Quantenbits des Quantencomputers (QC) und die zweite Teilmenge von Quantenbits des Quantencomputers (QC) eine nicht leere Schnittmenge.

Ist eine erste Teilmenge der Kopplungen zwischen mehreren, mindestens aber zwei Quantenbits des Quantencomputers (QC) aus der Menge aller Kopplungen zwischen Quantenbits des Quantencomputers (QC) auf diese Weise geprüft, so prüft bevorzugt die Quantenüberwachungsvorrichtung (QUV) eine zweite Teilmenge der Kopplungen zwischen mehreren, mindestens aber zwei Quantenbits des Quantencomputers (QC) aus der Menge aller Kopplungen zwischen Quantenbits des Quantencomputers (QC) auf diese Weise. Bevorzugt, aber nicht notwendigerweise haben die erste Teilmenge von Kopplungen zwischen mehreren, mindestens aber zwei Quantenbits des Quantencomputers (QC) aus der Menge aller Kopplungen zwischen Quantenbits des Quantencomputers (QC) und die zweite Teilmenge von Kopplungen zwischen mehreren, mindestens aber zwei Quantenbits des Quantencomputers (QC) aus der Menge aller Kopplungen zwischen Quantenbits des Quantencomputers (QC) eine nicht leere Schnittmenge.

Die Ausführung der Quantencomputertestprogrammabschnitte und der Quantencomputerprogrammabschnitte darf nicht beliebig viel Zeit in Anspruch nehmen. Dauer dies zu lange, so liegt ein Fehler vor, den die Quantencomputerüberwachungsvorrichtung (QUV) erkennen kann. Nachdem der die Quantencomputerüberwachungsvorrichtung dem Quantencomputer (QC) eine Aufgabe einer durzuführenden Quantencomputerberechnung gestellt hat, erwartet die Quantencomputerüberwachungsvorrichtung daher, dass der Quantencomputer (QC) nach den vorbestimmten Zeitpunkten (tv) die Quantencomputerüberwachungsvorrichtung (QUV) ansteuern muss, um in der Quantencomputerüberwachungsvorrichtung einen Zeitgeber auf einen Startwert zurückzusetzen. Bevorzugt läuft dieser Zeitgeber in der Quantencomputerüberwachungsvorrichtung mit dem Absenden der Aufgabe an den Quantencomputer (QC) los. Erreicht der Zeitgeber der Quantencomputerüberwachungsvorrichtung einen vorgegebenen kritischen zeitgeberwert, so hat die Bearbeitung der Aufgabe durch den Quantencomputer (QC) zu lange gedauert. In dem Fall leitet die Quantencomputerüberwachungsvorrichtung (QUV) Gegenmaßnahmen ein. Bevorzugt übermittelt der Quantencomputer (QC) bei seiner Ansteuerung der Quantencomputerüberwachungsvorrichtung (QUV) zumindest ein Quantencomputerberechnungsergebnis einer vorbestimmten Quantencomputerberechnung an die Quantencomputerüberwachungsvorrichtung (QUV) bevorzugt über den Datenbus (DB) übermittelt. Die Quantencomputerüberwachungsvorrichtung (QUV) überprüft dann das Quantencomputerberechnungsergebnis des Quantencomputers (QC). Sofern das Quantencomputerberechnungsergebnis nur einen Test von nicht quantentechnologischer Funktionen des Steuerrechners (µC) und anderer deterministischer Komponenten des Quantencomputers (QC)betrifft, kann die Quantencomputerüberwachungsvorrichtung eine direkte Bewertung des Quantencomputerberechnungsergebnisses vornehmen. Sofern jedoch Quantenoperationen mit involviert sind, wird die Quantencomputerüberwachungsvorrichtung (QUV) eine Bewertung und Überprüfung erst nach mehrmaligen erhalten mehrerer Quantencomputerberechnungsergebnisse zu gleichen Quantencomputerberechnungen des Quantencomputers (QC) durch statistische Auswertung derselben durchführen. Die Quantencomputerüberwachungsvorrichtung überprüft somit, ob die statistische Häufigkeit von mehreren Quantencomputerberechnungsergebnissen zu einer gleichen, mehrfach ausgeführten Quantencomputerberechnung einer vorgegebenen Häufigkeitsverteilung entsprich. Weicht die relative Häufigkeit eines Quantencomputerberechnungsergebnisses dieser Quantencomputerberechnung um mehr als ein vorgegebenes Maß von einer erwarteten Häufigkeit dieses Quantencomputerberechnungsergebnisses dieser Quantencomputerberechnung bezogen auf die Gesamtzahl der zugrunde gelegten Quantencomputerberechnungsergebnisse, so schließt die Quantencomputerüberwachungsvorrichtung auf einen Fehler des Quantencomputers. Zu einem solchen Fehler kann es beispielsweise bei einer Zerstörung eines NV-Zentrum durch Diffusion in einem NV-Zentrum basierenden Quantencomputer kommen. Andere Fehlermechanismen sind denkbar. Die Fehlermechanismen hängen auch von der Natur des Quantencomputers ab.

Die Quantencomputerüberwachungsvorrichtung (QUV) schließt somit auf einen Fehlerzustand des Quantencomputers (QC), wenn das Quantencomputerberechnungsergebnis des Quantencomputers (QC) nicht innerhalb einer vorbestimmten erlaubten Lösungsmenge für das das Quantencomputerberechnungsergebnis des Quantencomputers (QC) liegt.

Die Quantencomputerüberwachungsvorrichtung (QUV) erstellt somit bevorzugt eine Statistik mehrerer Quantencomputerberechnungsergebnisse gleichartiger Quantencomputerberechnungen des Quantencomputers (QC) erstellt und schließt auf einen Fehler, wenn die Quantencomputerberechnungsergebnisse des Quantencomputers (QC) häufiger als ein vorgegebener Maximalwert von einem erwarteten Quantencomputerberechnungsergebnis des Quantencomputers (QC) abweichen.

Die Quantencomputerüberwachungsvorrichtung (QUV) weist somit bevorzugt einen Speicher auf. In dem Speicher der Quantencomputerüberwachungsvorrichtung (QUV) ist bevorzugt ein Wert abgelegt sein und/oder werden, der mit dem Maximalwert korrespondiert, um den die Quantencomputerberechnungsergebnisse des Quantencomputers (QC) maximal häufig von einem erwarteten Quantencomputerberechnungsergebnis des Quantencomputers (QC) abweichen dürfen. Die Quantencomputerüberwachungsvorrichtung (QUV) signalisiert im Falle des Schließens auf einen Fehler durch die Quantencomputerüberwachungsvorrichtung (QUV) dem Quantencomputer (QC) oder einem übergeordneten System (ZSE) das Auftreten dieses Fehlers. Die Quantencomputerüberwachungsvorrichtung (QUV) kann auch oder stattdessen eine Information über diesen Fehler beispielsweise für eine Abfrage einer zentralen Steuereinheit (ZSE) über den Datenbus (DB) bereithalten.

Das Quantencomputersystem (QUSYS) umfasst bevorzugt ein übergeordnetes System, beispielsweise in Form einer zentralen Steuereinheit (ZSE). Die zentrale Steuereinheit (ZSE) steuert bevorzugt eine Mehrzahl von Quantencomputers (QC1 bis QC16) über einen oder mehrere Datenbusse (DB). Typischerweise handelt es sich um einen einzigen gemeinsamen Datenbus (DB). Bevorzugt weist das vorgeschlagene Quantencomputersystem (QUSYS) zwei zueinander redundante und bevorzugt gemeinsame Datenbusses (DB1, DB2) auf. Im Ausfall eines Datenbusses dieser mindestens zwei gemeinsamen Datenbusse (DB1, DB2) kann die zentrale Steuereinheit dann noch die Quantencomputer weiter steuern.

Das Quantencomputersystem (QUSYS) umfasst bevorzugt mehrere Quantencomputer (QC1, QC2, ..QC16), die bevorzugt gleiche Quantencomputerberechnungen zeitlich parallel ausführen und so der zentralen Steuereinheit (ZSE) eine Fehlerkorrektur der statistisch erlaubten Fehler ermöglichen. Bevorzugt hält das übergeordnete System (ZSE) für mindestens einen Quantencomputer (QC), bevorzugt für alle Quantencomputer (QC1, QC2, .... QC16) jeweils einen Speicher mit einem jeweiligen Fehlerzählerwert, der dem jeweiligen Quantencomputer der Quantencomputer zugeordnet ist, vor.

Das übergeordnete System (ZSE) erhöht den Fehlerzählerwert, der einem Quantencomputer (QC) zugeordnet ist, um eine erste Fehlerzählerschrittweite erhöht, wenn die Quantencomputerüberwachungsvorrichtung (QUV) einen vermutlichen Fehler des den Fehlerzählerwert zugeordneten Quantencomputers (QC) signalisiert.

Das übergeordnete System (ZSE) erniedrigt bevorzugt den Fehlerzählerwert, der einem Quantencomputer (QC) zugeordnet ist, um eine zweite Fehlerzählerschrittweite, wenn die Quantencomputerüberwachungsvorrichtung (QUV) eine angenommene Korrektheit eines Quantencomputerberechnungsergebnisses des den Fehlerzählerwert zugeordneten Quantencomputers (QC) signalisiert.

Das übergeordnete System (ZSE) verwendet in dem Fall, wenn für eine durch das Quantencomputersystem auszuführende Quantenberechnungsaufgabe nicht alle Quantencomputer des Quantencomputersystems benötigt werden, die Quantencomputer des Quantencomputersystems mit den jeweils niedrigsten aktuellen Fehlerzählerwerten, die den jeweiligen Quantencomputer zugeordnet sind, für die Ausführung der beabsichtigten Berechnungsaufgabe.

Die Überwachungsaufgaben können statt durch das übergeordnete System (ZSE) auch durch die Quantencomputerüberwachungsvorrichtung (QUV) vorgenommen werden.

Bevorzugt hält dann die Quantencomputerüberwachungsvorrichtung (QUV) für mindestens einen Quantencomputer (QC), bevorzugt für alle Quantencomputer (QC1, QC2, .... QC16) jeweils einen Speicher mit einem jeweiligen Fehlerzählerwert, der dem jeweiligen Quantencomputer der Quantencomputer zugeordnet ist, vor.

Die Quantencomputerüberwachungsvorrichtung (QUV) erhöht dann den Fehlerzählerwert, der einem Quantencomputer (QC) zugeordnet ist, um eine erste Fehlerzählerschrittweite erhöht, wenn die Quantencomputerüberwachungsvorrichtung (QUV) einen vermutlichen Fehler des den Fehlerzählerwert zugeordneten Quantencomputers (QC) signalisiert.

Die Quantencomputerüberwachungsvorrichtung (QUV) erniedrigt dann bevorzugt den Fehlerzählerwert, der einem Quantencomputer (QC) zugeordnet ist, um eine zweite Fehlerzählerschrittweite, wenn die Quantencomputerüberwachungsvorrichtung (QUV) eine angenommene Korrektheit eines Quantencomputerberechnungsergebnisses des den Fehlerzählerwert zugeordneten Quantencomputers (QC) signalisiert.

Das übergeordnete System (ZSE) liest dann die Fehlerzählwerte in der Quantencomputerüberwachungsvorrichtung (QUV) und verwendet in dem Fall, wenn für eine durch das Quantencomputersystem auszuführende Quantenberechnungsaufgabe nicht alle Quantencomputer des Quantencomputersystems benötigt werden, die Quantencomputer des Quantencomputersystems mit den jeweils niedrigsten aktuellen Fehlerzählerwerten, die den jeweiligen Quantencomputer zugeordnet sind, für die Ausführung der beabsichtigten Berechnungsaufgabe.

Bevorzugt hat die Signalisierung der Quantencomputerüberwachungsvorrichtung (QUV) die Folge, dass diese Signalisierung
- den Quantencomputer (QC) zurücksetzt und/oder
- den Quantencomputer (QC) in einen vorbestimmten Zustand bringt und/oder
- zumindest ein Quantenbit (QUB) des Quantencomputers (QC) in einen vorbestimmten Zustand bringt und/oder
- zumindest ein Kernquantenbit (QUB) des Quantencomputers (QC) in einen vorbestimmten Zustand bringt und/oder.
- zumindest ein Quantenregister (QUREG) des Quantencomputers (QC) in einen vorbestimmten Zustand bringt und/oder
- zumindest ein Kernquantenregister (CQUREG) des Quantencomputers (QC) in einen vorbestimmten Zustand bringt und/oder
- zumindest ein Kern-Elektron-Quantenregister (CEQUREG) des Quantencomputers (QC) in einen vorbestimmten Zustand bringt.

Bevorzugt bringt der Quantencomputer (CQ) im Falle eines Zurücksetzens des Quantencomputers, beispielsweise durch die Quantencomputerüberwachungsvorrichtung (QUV) seine Quantenbits (QUB) und/oder einen Teil seiner Quantenbits (QUB) in eine vorbestimmte Kombination überlagerter Quantenzustände. Bevorzugt bringt der Quantencomputer (CQ) im Falle eines Zurücksetzens auch seine Kernquantenbits (CQUB) und/oder einen Teil seiner Kernquantenbits (CQUB) in eine vorbestimmte Kombination überlagerter Quantenzustände.

Der Quantencomputer (QC) kann beispielsweise beim Auftreten einer von Quantencomputer (QC) selbst oder von dem Steuerrechner (µC) des Quantencomputers (QC) selbst erkannten Fehlfunktion zur Auslösung einer von der Quantencomputerüberwachungsvorrichtung (QUV) auslösbaren Rücksetz-Funktion des Quantencomputers (QC) eine gezielte Fehlansteuerung der Quantencomputerüberwachungsvorrichtung (QUV), insbesondere durch Übermittlung eines falschen Quantencomputerberechnungsergebnisses, vornehmen. Dies erspart eine separate Signalleitung und ermöglicht es der Quantencomputerüberwachungsvorrichtung (QUV) und/oder der zentralen Steuereinrichtung (ZSE) diesen Zustand des Quantencomputers (QC) zu erkennen.

Bevorzugt kann der Quantencomputer (QC) die Fehlansteuerung beispielsweise dadurch durchführen, dass der Quantencomputer (QC) die Quantencomputerüberwachungsvorrichtung (QUV), insbesondere durch Übermittlung eines falschen und/oder richtigen Quantencomputerberechnungsergebnisses, innerhalb einer vorgegebenen und/oder vorgebbaren Zeitspann häufiger als eine vorgegebene und/oder vorgebbare Maximalanzahl für diese Zeitspanne ansteuert.

Die Quantencomputerüberwachungsvorrichtung (QUV) schließt bevorzugt auf einen Fehler, wenn der Quantencomputer (QC) ein Quantencomputerberechnungsergebnis **vor** einem vorbestimmten zweiten Zeitpunkt (t2) an die Quantencomputerüberwachungsvorrichtung (QUV) übermittelt, wobei dieser vorbestimmte zweite Zeitpunkt (t2) nach dem vorbestimmten Zeitpunkt (tv) liegt oder gleich dem vorbestimmten Zeitpunkt (tv) ist, und/oder wenn der Quantencomputer (QC) ein Quantencomputerberechnungsergebnis **nach** einem vorbestimmten dritten Zeitpunkt (t3) an die Quantencomputerüberwachungsvorrichtung (QUV) übermittelt, wobei dieser vorbestimmte dritte Zeitpunkt (t3) nach dem vorbestimmten Zeitpunkt (tv) liegt oder gleich dem vorbestimmten Zeitpunkt (tv) ist. Dabei kann das Quantencomputerberechnungsergebnis durchaus korrekt sein. Der falsche Zeitpunkt der Lieferung lässt dann aber auf einen Fehler des Quantencomputers (QC) schließen.

Bevorzugt signalisiert die Quantencomputerüberwachungsvorrichtung (QUV) dem Quantencomputer (QC) vor Beginn eines vorbestimmten Zeitraums (Tv), welche vorbestimmte Quantencomputerberechnung bzw. welche vorbestimmten Quantencomputerberechnungen der Quantencomputer (QC) durchführen soll. Dies ermöglicht es der

Quantencomputerüberwachungsvorrichtung (QUV) die Statistik der Quantencomputerberechnungsergebnisse zu initialisieren und korrekt zu ermitteln. Die Quantencomputerüberwachungsvorrichtung führt also eine Vermessung der Statistik der Quantencomputerberechnungsergebnisse des Quantencomputers (QC) für eine bestimmte Quantencomputerberechnungsaufgabe mit einer bestimmten Quantencomputerberechnung durch. Dies ermöglicht der Quantencomputerüberwachungsvorrichtung ein Schließen auf Fehler in den quantentechnologischen Komponenten und deren Ansteuerungsmitteln, den ersten und zweiten Mitteln, des Quantencomputers (QC). Dies ist im Stand der Technik nicht möglich. Dabei schließt die Quantencomputerüberwachungsvorrichtung auf einen Fehler des Quantencomputers, wenn diese Statistik der Quantencomputerberechnungsergebnisse des Quantencomputers (QC) um mehr als ein jeweils vorgegebenes Maß von der erwarteten Statistik der Quantencomputerberechnungsergebnisse des Quantencomputers (QC) abweicht.

Die Quantencomputerüberwachungsvorrichtung (QUV) signalisiert typischerweise dem Quantencomputer (QC) den Beginn und ggf. das Ende oder die Dauer des vorbestimmten Zeitraums (Tv).

Der Quantencomputer (QC) nimmt typischerweise eine Überwachung auf eine Fehlfunktion bei sich selbst und/oder bei anderen Bauelementen und/oder Quantencomputersystem-Bestandteilen vor. Dies kann beispielsweise so aussehen, dass der Steuerrechner (µC) des Quantencomputers (QC) oder eine spezielle Selbsttestvorrichtung innerhalb des Quantencomputers (QC) den Steuerrechner und/oder die ersten und zweiten Mittel zwischen zwei Quantencomputerberechnungen testen. Bei dieser Selbsttesteinrichtung des Quantencomputers kann es sich um eine Quantencomputerüberwachungsvorrichtung handeln, die dann aber genau einem Quantencomputer zugeordnet ist und daher von dem hier vorgelegten Dokument auch als Teil des Quantencomputers betrachtet wird.

Die Quantencomputerüberwachungsvorrichtung (QUV) nimmt typischerweise eine Überwachung auf eine Fehlfunktion bei sich selbst und/oder bei anderen Bauelementen und/oder Quantencomputersystem-Bestandteilen vor. Bei der Überwachung der anderen Bauelemente kann sich beispielsweise die Quantencomputerüberwachungsvorrichtung wie ein konventioneller Watch-Dog-Schaltkreis verhalten.

Die Quantencomputerüberwachungsvorrichtung kann darüber hinaus auch selbst ein Quantencomputer (QC) sein, der mindestens zwei Quantenbits umfasst. Das bedeutet, dass mehrere Quantencomputer (QC1 bis QC16) sich untereinander überwachen können.

Einen beispielhafte Vorrichtung zur Überwachung eines Quantencomputers (QC), insbesondere zur Verwendung in einem Quantencomputersystem, wie es oben beschrieben ist, umfasst bevorzugt einen Quantencomputer (QC), eine Quantencomputerüberwachungsvorrichtung (QUV) und einen internen Taktgeber (ICLK), der insbesondere den Steuerrechner (µC9 des Quantencomputers und bevorzugt auch alle anderen Schaltkreise mit konventioneller Logik mit einem Basistakt für den Betrieb versorgt. Der Quantencomputer (QC) ist typischerweise mit einer Quantencomputerüberwachungsvorrichtung (QUV), insbesondere über einen Datenbus (DB) oder spezielle Signalleitungen, zur Überwachung des Quantencomputers (QC) verbindbar ist und/oder verbunden. Die Quantencomputerüberwachungsvorrichtung (QUV) ist mit einem internen Taktgeber (ICLK) zur Überwachung eines Systemtakts des Quantencomputers (QC) verbindbar und/oder verbunden. Eine Taktleitung innerhalb des Quantencomputers verbindet beispielsweise den Steuerrechner (µC) mit dem internen Taktgenerator (ICLK) und mit anderen Vorrichtungsteilen des Quantencomputers die eines Takts bedürfen, um zu arbeiten. Die Quantencomputerüberwachungsvorrichtung (QUV) umfasst Mittel zur Überprüfung des Quantencomputerprogrammablaufs des Quantencomputerprogramms des Quantencomputers (QC). Hierbei kann es sich beispielsweise um einen Speicher handeln, in dem Programme und Daten für einen Prozessor innerhalb der Quantencomputerüberwachungsvorrichtung (QUV) hinterlegt sind. Diese Programme betreffen dann typischerweise Testverfahren um die hier beschriebenen Testfunktionen auszuführen. Die Mittel können aber auch wieder Quantenbits und zugehörige Mittel zu Ansteuerung und Auslesung der Zustände dieser Quantenbits sein, um zum Beispiel die erwarteten Ergebnisse von Quantencomputerberechnungen in einem überwachten Quantencomputer (QC) in der Quantencomputerüberwachungsvorrichtung (QUV) selbst auch zu berechnen und für Vergleiche mit dem Quantencomputerberechnungsergebnis des Quantencomputers (QC) bereitzustellen. In dem Fall ist die Quantencomputerüberwachungsvorrichtung (QUV) selbst wieder ein Quantencomputer.

Die Quantencomputerüberwachungsvorrichtung (QUV) umfasst somit bevorzugt auch Mittel zur Überprüfung der korrekten Funktion des Quantencomputers (QC). Des Weiteren umfasst die Quantencomputerüberwachungsvorrichtung (QUV) Mittel zur Überprüfung der korrekten Durchführung von Manipulationen von Quantenbits (QUB) des Quantencomputers (QC). Dies kann beispielsweise der besagte Prozessor innerhalb des Quantencomputerüberwachungsvorrichtung sein.

Die Quantencomputerüberwachungsvorrichtung weist darüber hinaus bevorzugt Mittel zur Überwachung von Betriebsparametern des Quantencomputers (QC), wie beispielsweise des Magnetfelds am Ort der Quantenbits des Quantencomputers (QC) und/oder der Einstrahlung elektromagnetischer Wellen in den Bereich der Quantenbits (QUB) und/oder der Temperatur des Materials der Quantenbits (QUB) und/oder der Bestrahlung, insbesondere mit ionisierender und/oder elektromagnetischer Strahlung, auf. Darüber hinaus weist bevorzugt die Quantencomputerüberwachungsvorrichtung (QUV) Mittel zur Überwachung von Tests von Systemkomponenten des Quantencomputers auf. Die Quantencomputerüberwachungsvorrichtung (QUV) übertragt bei wenigstens einem erkannten Fehler eine Fehlermeldung an den Quantencomputer (QC) und inkrementiert oder dekrementiert oder ändert einen Fehlerzähler in vorbestimmter Weise. Dabei sollte die Zählrichtung innerhalb eines Quantencomputerüberwachungsvorrichtung (QUV) typischerweise gleich sein, Es sollte also bevorzugt nur dekrementiert oder nur inkrementiert werden.

Die Quantencomputerüberwachungsvorrichtung (QUV) umfasst bevorzugt einen eigenen Steuerrechner (µCQUV) der Quantencomputerüberwachungsvorrichtung (QUV)

Die Quantencomputerüberwachungsvorrichtung (QUV) übermittelt typischerweise bei der Überprüfung des Quantencomputerprogramms dem Quantencomputer (QC) Testfragen und zwar in der Regel über den Datenbus.

Die Quantencomputerüberwachungsvorrichtung (QUV) überwacht die Antworten des Quantencomputers (QC), die sie über den Datenbus von dem Quantencomputer (QC) erhält, auf Richtigkeit und/oder Zeitpunkt und/oder statistische Richtigkeit. Dies ermöglicht das Erkennen von Fehlern wie beispielsweise des Ausfalls eines Quantenbits. M Sinne des hier vorgelegten Dokuments erfordert die Berechnung der Antworten auf die Testfragen in Form einer Quantencomputerberechnung typischerweise mindestens eine Manipulation eines Zustands eines Quantenbits und/oder zumindest eine Quantenoperation des Quantencomputers (QC). Damit unterscheidet sich dies vom Stand der Technik, der keine Quantenoperation und die damit verbundene statistische Problematik kennt.

Bei Überwachung der Tests der Systemkomponenten (SYSC) übermittelt bevorzugt die Quantencomputerüberwachungsvorrichtung (QUV) dem Quantencomputer (QC) Testaufträge bevorzugt über den Datenbus. Der Quantencomputer (QC) sendet dann typischerweise der Quantencomputerüberwachungsvorrichtung (QUV) ein Quantencomputerberechnungsergebnis entsprechend der Testfrage zurücksendet, das die Quantencomputerüberwachungsvorrichtung (QUV) auf Richtigkeit und Zeitpunkt und/oder statistische Richtigkeit überwacht.

Die Quantencomputerüberwachungsvorrichtung (QUV) kann beispielsweise bei dem wenigstens einen erkannten Fehler ein an den Quantencomputer (QC) angeschlossenes Gerät (GR)
a) in seiner Funktion für eine vorgegebene Zeitdauer sperren oder
b) in einen sicheren Zustand bringen oder
c) den Zugriff des Quantencomputers auf das Gerät (GR) verhindern oder
d) das Gerät (GR) statt mit dem Quantencomputer mit einer Quantencomputersimulationsvorrichtung verbinden.

Dies verhindert, dass der Quantencomputer (QC) angeschlossene Systeme oder Systeme deren Teil er ist in einen unsicheren Zustand bringen kann. Bevorzugt ist dabei die Quantencomputerüberwachungsvorrichtung (QUV) bevorzugt direkt mit dem betreffenden Gerät (GR) verbindbar.

Die Quantencomputerüberwachungsvorrichtung (QUV) verlängert bevorzugt die Sperrung des Geräts (GR) bzw. die Einnahme des sicheren Zustands durch das Gerät (GR), sofern die Quantencomputerüberwachungsvorrichtung (QUV) während der Sperrung bzw. während der Einnahme des sicheren Zustands durch das Gerät (GR) wenigstens einen weiteren Fehler des Quantencomputers (QC) erkennt.

Wenn der bevorzugt vorhandene Fehlerzähler der Quantencomputerüberwachungsvorrichtung (QUV) einen vorgegebenen Wert erreicht hat, veranlasst die Quantencomputerüberwachungsvorrichtung (QUV) bevorzugt eine Sperrung des Geräts (GR) bzw. eine Einnahme eines sicheren Zustands des Geräts (GR) bis zur Abschaltung der Quantencomputerüberwachungsvorrichtung (QUV).

Typischerweise ist das mit dem Quantencomputer (QC) verbindbare Gerät (GR) ein System eines Fahrzeugs, ein System eines Motorrads, ein System eines Flugkörpers, ein System eines Flugzeugs eines Schwimmkörpers oder ein System eines Flugzeugs eines Roboters oder ein System eines Flugzeugs eines Flugzeugs oder ein System eines Flugzeugs eines Satelliten oder ein System eines Flugzeugs eines Waffensystems. Hierbei soll ein Flugkörper alle Arten fliegender Vorrichtungen umfassen. Ein Schwimmkörper soll dabei alle Arten schwimmender und tauchender Vorrichtungen, also insbesondere auch Boote, Schiffe, Bojen, Torpedos, Minen, Jet-Skis, U-Boote etc., umfassen.

Ein Flugkörper soll dabei auch alle Arten fliegender Objekte umfassen, also auch aber nicht nur Flugzeuge, Drohnen, Segelflugzeuge, Luftschiffe, Helikopter, VTOL-Vorrichtungen, Geschosse, Raketen etc.

Ein Satellit soll dabei alle Vorrichtungen umfassen, die für einen Betrieb im Weltraum und/oder erdnahen Orbit vorgesehen sind, also unbemannte und bemannte Satelliten, unbemannte und bemannte Raumfahrzeuge, Raumstationen etc.

Die Quantencomputerüberwachungsvorrichtung (QUV) veranlasst beim Einschalten eine Sperrung des Geräts (GR) und/oder die Einnahme eines sicheren Zustands durch das Gerät (GR), bis die Quantencomputerüberwachungsvorrichtung (QUV) Fehlerfreiheit, insbesondere bei den vorausgehend erwähnten Punkten erkennt.

Bevorzugt sind durch den Quantencomputer (QC) und/oder eine übergeordnete zentrale Steuereinheit (ZSE) der Fehlerzähler und Einzelfehler aus der Quantencomputerüberwachungsvorrichtung (QUV) auslesbar.

Die Quantencomputerüberwachungsvorrichtung (QUV) bestimmt die Zeitpunkte der Antworten des Quantencomputers (QC) und die Auftragsbestätigungen durch wenigstens einen internen Zähler (ICNT) oder Zeitgeber der Quantencomputerüberwachungsvorrichtung (QUV).

Typischerweise hängt eine Antwort des Quantencomputers (QC) bevorzugt in Form eines Quantencomputerberechnungsergebnisses im Sinne des hier vorgelegten Dokuments von mindestens einer Manipulation eines Quantenbits des Quantencomputers ab.

Ein Quantencomputersystem kann beispielsweise mehrere Quantencomputer, bevorzugt aber mindestens zwei Quantencomputer aufweisen. Dies sind in dieser Minimalkonfiguration eines Quantencomputersystems dann ein erster Quantencomputer (QC1) und ein zweiter Quantencomputer (QC2). Über mindestens eine Signalverbindung (DB) kann von dem ersten Quantencomputer (QC1) eine Signalisierung an den zweiten Quantencomputer (QC2) erfolgen. Diese Signalverbindung ist typischerweise ein Datenbus, der beispielsweise die Steuerrechner (µC) der Quantencomputer über jeweilige Datenschnittstellen der Steuerrechner der Quantencomputer miteinander verbindet.

Bevorzugt ist in vielen Fällen dabei die Signalisierung ein Quantencomputerberechnungsergebnis, das der eine Quantencomputer an den anderen beispielsweise als Vergleichsergebnis übermittelt. Ein Quantencomputerberechnungsergebnis ist dabei im Sinne des hier vorgelegten Dokuments das Berechnungsergebnis eines Quantencomputers (QC) unter Zuhilfenahme mindestens einer Manipulation eines Quantenbits dieses Quantencomputers.

Der zweite Quantencomputer (QUC2) vergleicht das das Quantencomputerberechnungsergebnis des ersten Quantencomputers (QC1), das er bevorzugt über den Datenbus (DB) erhalten hat mit einem Erwartungswert.

Der Erwartungswert ist typischerweise selbst das Quantencomputerberechnungsergebnis einer Quantencomputerberechnung des zweiten Quantencomputers (QC2) oder eines anderen Quantencomputers. Das Erwartungsergebnis ist typischerweise mit Toleranzwerten versehen, die der zweite Quantencomputer (QC2) typischerweise durch mehrere gleiche Quantencomputerberechnungen mehrerer Quantencomputerberechnungsergebnisse ermittelt hat.

Der zweite Quantencomputer (QC2) überprüft dann typischerweise das Quantencomputerberechnungsergebnis des Quantencomputers (QC1). Der er zweite Quantencomputer (QC2) schließt auf einen Fehlerzustand des ersten Quantencomputers (QC1) schließt, wenn das Quantencomputerberechnungsergebnis des ersten Quantencomputers (QC1) nicht innerhalb einer vorbestimmten erlaubten Lösungsmenge für das das Quantencomputerberechnungsergebnis des ersten Quantencomputers (QC1) liegt.

Der zweite Quantencomputer (QC2) erstellt bevorzugt eine Statistik mehrerer Ergebnisse gleichartiger Quantencomputerberechnungen des ersten Quantencomputers (QC1) und schließt auf einen Fehler, wenn die Quantencomputerberechnungsergebnisse des ersten Quantencomputers (QC2) häufiger als ein vorgegebener Maximalwert von einem erwarteten Quantencomputerberechnungsergebnis des ersten Quantencomputers (QC2) abweichen.

Der zweite Quantencomputer (QC2) erstellt bevorzugt eine erste Statistik mehrerer Ergebnisse gleichartiger Quantencomputerberechnungen des ersten Quantencomputers (QC) und schließt auf einen Fehler, wenn die Quantencomputerberechnungsergebnisse des ersten Quantencomputers (QC) häufiger als ein vorgegebener Maximalwert von einer zweiten Statistik mehrerer Ergebnisse entsprechender gleichartiger Quantencomputerberechnungen des zweiten Quantencomputers (QC2) oder eines anderen Quantencomputers abweichen.

Der zweite Quantencomputer (QC2) signalisiert im Falle des Schließens auf einen Fehler dem ersten Quantencomputer (QC1) oder einem übergeordneten System (ZSE) das Auftreten dieses Fehlers und/oder hält eine Information über diesen Fehler bereit, die dann typischerweise über den Datenbus /DB) beispielsweise von einer übergeordneten zentralen Steuereinrichtung (ZSE) ausgelesen werden kann.

Die Signalisierung des zweiten Quantencomputers (QC2) kann beispielsweise den ersten Quantencomputer (QC1) zurücksetzen werden oder in einen vordefinierten Zustand versetzen oder in einen Zustand aus einer Menge vordefinierter Zustände versetzen.

Der erste Quantencomputer (QC1) bringt im Falle eines Zurücksetzens seine Quantenbits bevorzugt in eine vorbestimmte Kombination überlagerter Quantenzustände.

Der erste Quantencomputer (QC1) nimmt beispielsweise beim Auftreten einer von ersten Quantencomputer (QC1) selbst erkannten Fehlfunktion zur Auslösung einer von dem zweiten Quantencomputer (QC2) stammenden Rücksetz-Funktion eine gezielte Fehlansteuerung des zweiten Quantencomputers (QC2), insbesondere durch Übermittlung eines falschen Quantencomputerberechnungsergebnisses des ersten Quantencomputers (QC1) an den zweiten Quantencomputer (QC2), vor.

Der zweite Quantencomputer (QC2) schließt auf einen Fehler, wenn der erste Quantencomputer (QC1) ein Quantencomputerberechnungsergebnis des ersten Quantencomputers (QC1) vor einem vorbestimmten zweiten Zeitpunkt an den zweiten Quantencomputer (QC2) übermittelt, wobei dieser vorbestimmte zweite Zeitpunkt nach dem vorbestimmten Zeitpunkt liegt oder gleich dem vorbestimmten Zeitpunkt ist.

Der zweite Quantencomputer (QC2) schließt auf einen Fehler, wenn der erste Quantencomputer (QC1) ein Quantencomputerberechnungsergebnis des ersten Quantencomputers (QC1) nach einem vorbestimmten dritten Zeitpunkt an den zweiten Quantencomputer (QC2) übermittelt, wobei dieser vorbestimmte dritte Zeitpunkt nach dem vorbestimmten Zeitpunkt liegt oder gleich dem vorbestimmten Zeitpunkt ist.

Der zweite Quantencomputer (QC2) signalisiert bevorzugt dem ersten Quantencomputer (QC1) vor Beginn des vorbestimmten Zeitraums, welche vorbestimmte Quantencomputerberechnung bzw. welche vorbestimmten Quantencomputerberechnungen der erste Quantencomputer (QC1) durchführen soll.

Der zweite Quantencomputer (QC2) signalisiert dem ersten Quantencomputer (QC1) den Beginn und ggf. das Ende oder die Dauer des vorbestimmten Zeitraums.

Die besagte Fehlansteuerung erfolgt bevorzugt durch zu häufige Bedienung (Ansteuerung) des zweiten Quantencomputers (QC2).

Der erste Quantencomputer (QC1) nimmt bevorzugt eine Überwachung auf eine Fehlfunktion bei sich selbst und/oder bei anderen Bauelementen und/oder Quantencomputersystem-Bestandteilen vor. D.h. Dass der erste Quantencomputer (QC1) und zwar insbesondere der Steuerrechner (µC) des ersten Quantencomputers (QC1) bevorzugt über Mittel, beispielsweise eine JTAG-Schnittstelle, zum Überprüfen anderer Bauelementen und/oder Quantencomputersystem-Bestandteile verfügt.

Das vorgeschlagene Quantencomputersystem kann mehrere, bevorzugt wenigstens zwei Quantencomputern umfassen. Diese sind bevorzugt ein erster Quantencomputer (QC1) und ein zweiter Quantencomputer (QC2). Des Weiteren umfasst das Quantencomputersystem bevorzugt mehrere Messeinrichtungen zur Erfassung von Betriebsgrößen des Quantencomputersystems (QUSYS) oder einer Vorrichtung oder eines Systems. Ggf. hängen die Zustände der Vorrichtung bzw. des Systems von dem Quantencomputersystem (QUSYS) und zwar typischerweise von Quantencomputerberechnungsergebnissen eines oder mehrerer Quantencomputer des Quantencomputersystems ab. Beispielsweise kann das Quantencomputersystem die Vorrichtung bzw. das System steuern. Der erste Quantencomputer (QC1) führt dabei typischerweise zumindest zweitweise die gleiche Quantencomputerberechnung durchführt, die der zweite Quantencomputer (QC2) durchführt. Die Quantencomputerberechnung umfasst bevorzugt dabei eine Überwachungsmaßnahme zur Überprüfung der Funktionsfähigkeit des jeweiligen Quantencomputers (QC1, QC2). Der erste Quantencomputer (QC1) führt dabei die Quantencomputerberechnung des ersten Quantencomputers (QC1) unabhängig von der Quantencomputerberechnung des zweiten Quantencomputers (QC2) durch.

Der erste Quantencomputer (QC1) führt dabei typischerweise die Überwachungsmaßnahme durch und der zweite Quantencomputer (QC2) führt eine dieser Überwachungsmaßnahme entsprechende äquivalente Überwachungsmaßnahme in einfacherer Ausführung bzw. einer anderen Strategie folgend auf einem redundanten Pfad durch. Hierbei kann es sich beispielsweise um eine konventionelle Berechnung durch den Steuerrechner des zweiten Quantencomputers handeln. Der erste Quantencomputer (QC1) kann beispielsweise eine Überwachungsmaßnahme anhand der Differenz zwischen einem in Abhängigkeit von einem vorgebbaren oder einspeisbaren Sollwert und einem Istwert eines Regelkreises eines Stellelements vornehmen, während der zweite Quantencomputer (QC2) Überwachungsmaßnahmen einfacherer Art anhand eines Plausibilitätsvergleichs zwischen dem vorgebbaren oder einspeisbaren Sollwert, vorzugsweise der Stellung eines Bedienelements, und der Stellung des Stellelements durchführt.

Besonders bevorzugt überwachen sich also in diesem Beispiel die Quantencomputer gegenseitig durch Datenaustausch über eine jeweilige Datenschnittstelle desjeweiligen Steuerrechners des jeweiligen Quantencomputers und den Datenbus.

In vielen möglichen Anwendungen eines solchen Quantencomputersystems in einem Regelkreis haben beispielsweise beide Quantencomputer des Quantencomputersystems Zugriff zu einer Treiberstufe für das Stellelement des Regelkreises und schalten im erkannten Fehlerfall bei Unplausibilitäten in Bezug auf den Regelkreis der Anwendung und der von den Quantencomputern direkt oder indirekt erzeugte Stellungssignale des Stellglieds des Regelkreises unabhängig voneinander gemäß dem Ergebnis der ihnen jeweils zugeordneten Überwachungsmaßnahmen die Treiberstufe ab. Alternativ können sie diese in einen sicheren Zustand bringen. Bevorzugt unterrichten sich die Quantencomputer insbesondere über das negative Ergebnis ihrer Überwachungen gegenseitig.

Im Fehlerfall kann als Gegenmaßnahme beispielsweise der erste Quantencomputer (QC1) in die Energiezufuhr eines Anwendungssystems oder in das Anwendungssystem selbst eingreifen.

Im zweiten Quantencomputer (QC2) werden bevorzugt Plausibilitätsüberprüfungen zum Ein- bzw. Ausschalten eines Reglers des beispielhaften Anwendungssystems in Form einer Regelschleife durchgeführt.

Die Plausibilitätsprüfungen umfassen dabei bevorzugt zumindest Quantencomputerberechnung, die zumindest eine Manipulation eines Quantenbits des zweiten Quantencomputers (QC2) umfasst.

Bei einem erfindungsgemäßen Verfahren zur Überwachung des Ablaufs eines auf mindestens einem Steuerrechner (µC) eines Quantencomputers (QC) ablauffähigen Quantencomputerprogramms mittels einer Quantencomputerüberwachungsvorrichtung (QUV) des Quantencomputers (QC) umfasst bevorzugt der Quantencomputer (QC) Quantenbits und den Steuerrechner (µC) und erste Mittel zur Manipulation von Quantenbits des Quantencomputers (QC) und zweite Mittel zum Auslesen des Zustands von Quantenbits des Quantencomputers (QC). Die ersten Mittel zur Manipulation von Quantenbits des Quantencomputers (QC) und die zweiten Mittel zum Auslesen des Zustands von Quantenbits des Quantencomputers (QC) werden dabei typischerweise durch den Steuerrechner (µC) gesteuert. Die Quantencomputerüberwachungsvorrichtung (QUV) kann bevorzugt bei einer Manipulation einer vorbestimmten Teilmenge der Quantenbits der Quantenbits des Quantencomputers (QC) während der Quantencomputerprogrammlaufzeit eine Ausnahmebedingung (Exception), insbesondere verbunden mit einer Unterbrechung (Interrupt) des Quantencomputerprogrammablaufs, auslösen. Dies bedeutet, wenn ein Quantenbit, das nicht manipuliert werden soll manipuliert wird. Hierzu verfügt die Quantencomputerüberwachungsvorrichtung bevorzugt über Mittel, um eine Aktivierung von Mitteln zur Manipulation dieser Quantenbits, die eigentlich nicht manipuliert werden sollen oder besonders geschützte Quantenbits (QUP) sind, zu erkennen und zu erfassen, auf einen Fehler zu schließen und ggf. Gegenmaßnahmen zu ergreifen.

Die Quantencomputerüberwachungsvorrichtung (QUV) kann beispielsweise auch beim Zugriff auf einen bestimmten Adressbereich (AB) während der Quantencomputerprogrammlaufzeit eine Ausnahmebedingung (Exception), insbesondere eine Unterbrechung (Interrupt) des Quantencomputerprogrammablaufs, auslösen.

Der Steuerrechner (µC) des Quantencomputers (QC) durchläuft bevorzugt nach dem Auslösen einer Ausnahmebedingung während der Quantencomputerprogrammlaufzeit eine Ausnahmebedingungs-Routine (Exception-Routine).

Die Ausnahmebedingungs-Routine (Exception-Routine) kann beispielsweise auch zumindest eine Quantenoperation zur Manipulation zumindest eines Quantenbits (QUB) des Quantencomputers (QC) umfassen.

Der Steuerrechner (µC) des Quantencomputers (µC) oder eine zentrale Steuereinheit (ZSE) oder ein Steuerrechner eines anderen Quantencomputers oder ein anderes Rechnersystem kann in einem Beispiel die Quantencomputerüberwachungsvorrichtung (QUV) konfigurieren.

Bevorzugt wird Quantencomputerüberwachungsvorrichtung (QUV) während des Hochfahrens des Quantencomputers (QC) konfiguriert.

Der Quantencomputer (QC) wird bevorzugt während des Durchlaufs der Exception-Routine rückgesetzt und erneut hochgefahren und das überwachte Quantencomputerprogramm initialisiert. Vor dem Rücksetzen und dem erneuten Hochfahren des Quantencomputers (QC) und vor der Initialisierung des Quantencomputerprogramms wird bevorzugt zumindest die Art des Fehlerzustandes, insbesondere durch den Steuerrechner (µC), in einem Fehlerspeicher, insbesondere innerhalb eines Speichers (MEM) des Quantencomputers (QC), abgelegt.

Vor dem Rücksetzen und dem erneuten Hochfahren des Quantencomputers (QC) und vor der Initialisierung des Quantencomputerprogramms wird die Speicheradresse, auf die durch den Steuerrechner (µC) vor Auftreten des Fehlerzustandes zugegriffen wurde, insbesondere durch den Steuerrechner (µC), in dem Fehlerspeicher insbesondere innerhalb eines Speichers (MEM) des Quantencomputers (QC) abgelegt.

Die Quantencomputerüberwachungsvorrichtung (QUV) überwacht bevorzugt, ob das Quantencomputerprogramm während der Quantencomputerprogrammlaufzeit auf einen vorgebbaren Adressbereich (AB) eines Speichers (MEM) des Quantencomputers (QC) zugreift.

Die Quantencomputerüberwachungsvorrichtung (QUV) überwacht bevorzugt, ob das Quantencomputerprogramm während der Quantencomputerprogrammlaufzeit auf einen Adressbereich (AB) eines Stacks des Quantencomputers (QC) innerhalb eines Speichers (MEM) des Quantencomputers (QC) jenseits einer vorgebbaren maximalen Stack-Größe, die insbesondere einem vorgebbaren Adressbereich (AB) entsprechen kann, zugreift.

Die Quantencomputerüberwachungsvorrichtung (QUV) überwacht, ob das Quantencomputerprogramm während der Quantencomputerprogrammlaufzeit den Steuerrechner (µC) dazu veranlasst, mittels der ersten Mittel eine vorgebbare Teilmenge von Quantenbits der Quantenbits des Quantencomputers (QC) mittels einer Quantenbitoperation zu manipulieren.

Die Quantencomputerüberwachungsvorrichtung (QUV) überwacht, ob das Quantencomputerprogramm während der Quantencomputerprogrammlaufzeit den Steuerrechner (µC) des Quantencomputers (QC) dazu zu veranlassen, mittels erste r Mittel Quantenbits des Quantencomputers (QC) zu manipulieren, die nicht Teil der vorgebbaren Teilmenge von Quantenbits der Quantenbits des Quantencomputers (QC) sind.

Die Quantencomputerüberwachungsvorrichtung (QUV) überwacht, ob während der Quantencomputerprogrammlaufzeit, insbesondere durch den Steuerrechner (µC), versucht wird, eine aus einem nicht flüchtigen Speicher (NVM) des Quantencomputers (QC) in einen Random-Access-Speicher (RAM) des Quantencomputers (QC) ausgelagerte Code-Sequenz des Quantencomputerprogramms in dem nicht flüchtigen Speicher (NVM) zur Ausführung zu bringen. Das hier vorgelegte Dokument behandelt darüber hinaus ein Steuerelement (NVM), insbesondere Read-Only-Memory oder Flash-Memory oder nicht flüchtiger Speicher, für einen Quantencomputer (QC) insbesondere eines Steuergeräts (SG) eines Fahrzeugs, wobei auf dem Steuerelement (NVM) ein Quantencomputerprogramm abgespeichert ist, das auf mindestens einem Steuerrechner (µC) des Quantencomputers (1) ablauffähig und zur Ausführung eines Verfahrens, wie zuvor beschrieben, geeignet ist.

Das hier vorgelegte Dokument behandelt darüber hinaus einen Quantencomputer (QC) mit mindestens einem Steuerrechner (µC) und einer Quantencomputerüberwachungsvorrichtung (QUV), wobei auf dem mindestens einen Steuerrechner (µC) ein Quantencomputerprogramm ablauffähig ist, die Quantencomputerüberwachungsvorrichtung (QUV) während der Quantencomputerprogrammlaufzeit den Ablauf des Programms überwacht und beim Zugriff auf einen bestimmten Adressbereich (AB) innerhalb eines Speichers (MEM) des Quantencomputers (QC) eine Ausnahmebedingung (Exception), insbesondere eine Unterbrechung (Interrupt) des Quantencomputerprogrammablaufs, auslöst. Der Steuerrechner (µ) oder eine zentrale Steuereinheit (ZSE) oder ein anderes Rechnersystem konfiguriert dabei bevorzugt die Quantencomputerüberwachungsvorrichtung (QUV). Der Quantencomputer (QC) umfasst bevorzugt Mittel zum Durchlaufen einer Ausnahmebedingungs-Routine (Exception-Routine) nach dem Auslösen einer Ausnahmebedingung während der Quantencomputerprogrammlaufzeit.

Bevorzugt weist Quantencomputer (QC) weitere Mittel zur Ausführung des zuvor beschriebenen Verfahrens auf.

Ein anderes Verfahren zum Betrieb eines Quantencomputersystems (QUSYS) mit einem Quantencomputer (QC) und mit einer Quantencomputerüberwachungsvorrichtung (QUV) umfasst die Schritte
- Überwachen des korrekten Quantencomputerprogrammablaufs des Quantencomputerprogramms des Quantencomputers (QC), insbesondere durch die Quantencomputerüberwachungsvorrichtung (QUV), und
- Durchführen vorbestimmter Quantencomputerberechnungen mit mindestens einer Quantenoperation zur Berechnung vorbestimmter Quantencomputerberechnungsergebnisse in vorbestimmten Zeiträumen vor vorbestimmten Zeitpunkten, insbesondere durch den Quantencomputer (QC), und
- Ansteuern einer Quantencomputerüberwachungsvorrichtung (QUV) nach diesen vorbestimmten Zeitpunkten und Durchführung eines Rücksetzens (Reset-Funktion) des Quantencomputers (QC) auf einen Quantencomputerprogrammstart oder dergleichen, wenn diese Ansteuerung nicht in vorbestimmter Weise erfolgt durchführt.

Ein zusätzlicher weiterer Schritt kann das Übermitteln zumindest eines Ergebnisses einer vorbestimmten Quantencomputerberechnung des Quantencomputers (QC) an die Quantencomputerüberwachungsvorrichtung (QUV) bei dieser Ansteuerung sein.

Ein zusätzlicher weiterer Schritt kann das Überprüfen des an die Quantencomputerüberwachungsvorrichtung (QUV), insbesondere durch den Quantencomputer (QC) übermittelten Quantencomputerberechnungsergebnisses der vorbestimmten Quantencomputerberechnung des Quantencomputers (QC) sein.

Ein zusätzlicher weiterer Schritt kann das Schließen auf einen Fehlerzustand des Quantencomputers (QC), wenn das Quantencomputerberechnungsergebnis der vorbestimmten Quantencomputerberechnung des Quantencomputers (QC) nicht innerhalb einer vorbestimmten erlaubten Lösungsmenge für das das Quantencomputerberechnungsergebnis der vorbestimmten Quantencomputerberechnung des Quantencomputers (QC) liegt, sein.

Zusätzliche weitere Schritte können das Erstellen einer Statistik mehrerer Quantencomputerberechnungsergebnisse gleichartiger vorbestimmter Quantencomputerberechnungen des Quantencomputers (QC), die der Quantencomputerüberwachungsvorrichtung (QUV) insbesondere durch den Quantencomputer (QC) übermittelt wurden, und das Schließen auf einen Fehler insbesondere durch die Quantencomputerüberwachungsvorrichtung sein. Dabei erfolgt dieses Schließen auf einen Fehler, wenn die Quantencomputerberechnungsergebnisse der vorbestimmten Quantencomputerberechnungen des Quantencomputers (QC) mit einer ersten Anzahl häufiger als ein vorgegebener erster Maximalwert von einem erwarteten Quantencomputerberechnungsergebnis des Quantencomputers (QC) für diese Quantencomputerberechnungen abweichen.

Die Zählung der ersten Anzahl der Abweichungen von dem erwarteten Quantencomputerberechnungsergebnis des Quantencomputers (QC) für diese Quantencomputerberechnungen wird bevorzugt wieder auf einen vorgegebenen ersten Startwert dieses Zählwerts dieser Zählung, insbesondere auf 0, zurückgesetzt, wenn eine zweite Anzahl von Quantencomputerberechnungsergebnissen aufeinanderfolgender Quantencomputerberechnungen häufiger als ein vorgegebener zweiter Maximalwert mit einem erwarteten Quantencomputerberechnungsergebnis des Quantencomputers (QC) für diese Quantencomputerberechnungen in vorgegebener Weise übereinstimmt.

Ein zusätzlicher weiterer Schritt kann die Signalisierung des Auftretens eines Fehlers, insbesondere durch die Quantencomputerüberwachungsvorrichtung (QUV), an den Quantencomputer (QC) oder an ein übergeordnetes System im Falle des Schließens auf einen Fehler, insbesondere durch die Quantencomputerüberwachungsvorrichtung (QUV), und/oder das Bereithalten einer Information über das Auftretens eines Fehlers, insbesondere durch die Quantencomputerüberwachungsvorrichtung (QUV), im Falle des Schließens auf einen Fehler, insbesondere durch die Quantencomputerüberwachungsvorrichtung (QUV), sein.

Ein zusätzlicher weiterer Schritt kann das Zurücksetzen des Quantencomputers (QC) durch die Signalisierung, insbesondere der Quantencomputerüberwachungsvorrichtung (QUV), sein. Bevorzugt umfasst das Zurücksetzen des Quantencomputers (QC) durch die Signalisierung ein Zurücksetzen des Steuerrechners (µC) des Quantencomputers (QC).

Bevorzugt veranlasst das Zurücksetzen des Quantencomputers (QC) durch die Signalisierung den Quantencomputer (QC) dazu, zumindest einen Teil der Quantenbits des Quantencomputers in einen vorbestimmten und/oder vorbestimmbaren Zustand und/oder in eine vorbestimmte Überlagerung mehrerer vorbestimmter Zustände zu bringen.

Bevorzugt veranlasst das Zurücksetzen des Quantencomputers (QC) durch die Signalisierung den Quantencomputer (QC) dazu, zumindest eine vorbestimmte Quantencomputerberechnung durchzuführen.

Bevorzugt übermittelt der Quantencomputer (QC) das Quantencomputerberechnungsergebnis dieser Quantencomputerberechnung an die Quantencomputerüberwachungsvorrichtung (QUV). Bevorzugt überprüft die Quantencomputerüberwachungsvorrichtung (QUV) das Quantencomputerberechnungsergebnis dieser Quantencomputerberechnung des Quantencomputers (QC).

Ein zusätzlicher weiterer Schritt kann das Manipulieren von Quantenbits der Quantenbits des Quantencomputers (QC), insbesondere durch den Quantencomputer (QC), in der Art umfassen, dass eine Einstellung dieser Quantenbits des Quantencomputers (QC) in eine vorbestimmte Kombination überlagerter Quantenzustände im Falle eines Zurücksetzens des Quantencomputers, insbesondere durch den Quantencomputer (QC), erfolgt.

Ein zusätzlicher weiterer Schritt kann das Vornehmen einer gezielten Fehlansteuerung der Quantencomputerüberwachungsvorrichtung (QUV), insbesondere durch Übermittlung eines falschen Quantencomputerberechnungsergebnis insbesondere durch den Quantencomputer (QC) insbesondere an die Quantencomputerüberwachungsvorrichtung (QUV), beim Auftreten einer vom Quantencomputer (QC) und zwar insbesondere von dessen Steuerrechner (µC) oder einer anderen Hilfsvorrichtung des Quantencomputers (QC) selbst erkannten Fehlfunktion des Quantencomputers (QC) oder eines seiner Hilfsaggregate zur Auslösung einer von der Quantencomputerüberwachungsvorrichtung (QUV) stammenden Rücksetzfunktion, sein.

Bevorzugt löst die von der Quantencomputerüberwachungsvorrichtung (QUV) stammende Rücksetzfunktion ein Zurücksetzen des Steuerrechners (µC) des Quantencomputers (QC) aus.

Die von der Quantencomputerüberwachungsvorrichtung (QUV) stammende Rücksetzfunktion veranlasst bevorzugt den Quantencomputer (QC) dazu, zumindest einen Teil der Quantenbits des Quantencomputers in einen vorbestimmten und/oder vorbestimmbaren Zustand und/oder in eine vorbestimmte Überlagerung mehrerer vorbestimmter Zustände zu bringen.

Die von der Quantencomputerüberwachungsvorrichtung (QUV) stammende Rücksetzfunktion veranlasst bevorzugt den Quantencomputer (QC) dazu, zumindest eine vorbestimmte Quantencomputerberechnung durchzuführen.

Der Quantencomputer (QC) übermittelt bevorzugt das Quantencomputerberechnungsergebnis dieser Quantencomputerberechnung an die Quantencomputerüberwachungsvorrichtung (QUV).

Die Quantencomputerüberwachungsvorrichtung (QUV) überprüft typischerweise das Quantencomputerberechnungsergebnis dieser Quantencomputerberechnung des Quantencomputers (QC).

Ein zusätzlicher weiterer Schritt kann das Schließen auf einen Fehler, insbesondere durch die Quantencomputerüberwachungsvorrichtung (QUV), sein, wenn die Übermittlung eines Quantencomputerberechnungsergebnisses, insbesondere durch den Quantencomputer (QC) insbesondere durch Quantencomputerüberwachungsvorrichtung (QUV) vor einem vorbestimmten zweiten Zeitpunkt erfolgt. Dabei liegt typischerweise dieser vorbestimmte zweite Zeitpunkt nach dem vorbestimmten Zeitpunkt oder ist gleich dem vorbestimmten Zeitpunkt.

Ein zusätzlicher weiterer Schritt kann das Schließen auf einen Fehler, insbesondere durch die Quantencomputerüberwachungsvorrichtung (QUV), sein, wenn die Übermittlung eines Quantencomputerberechnungsergebnisses, insbesondere durch den Quantencomputer (QC) insbesondere an die Quantencomputerüberwachungsvorrichtung (QUV), nach einem vorbestimmten dritten Zeitpunkt erfolgt. Dabei liegt bevorzugt dieser vorbestimmte dritte Zeitpunkt nach dem vorbestimmten Zeitpunkt oder ist gleich dem vorbestimmten Zeitpunkt.

Ein zusätzlicher weiterer Schritt kann die Signalisierung an den dem Quantencomputer, insbesondere durch die Quantencomputerüberwachungsvorrichtung (QUV), vor Beginn des vorbestimmten Zeitraums sein, welche vorbestimmte Quantencomputerberechnung bzw. welche vorbestimmten Quantencomputerberechnungen der Quantencomputer (QC) durchführen soll.

Ein zusätzlicher weiterer Schritt kann die Signalisierung, insbesondere durch die Quantencomputerüberwachungsvorrichtung (QUV), des Zeitpunkts des Beginns des vorbestimmten Zeitraums und ggf. des Zeitpunkts des Endes des vorbestimmten Zeitraums oder der Dauer des vorbestimmten Zeitraums an den Quantencomputer (QC) sein.

Ein zusätzlicher weiterer Schritt kann das Schließen auf einen Fehler, insbesondere durch die Quantencomputerüberwachungsvorrichtung (QUV), sein, wenn ein Ansteuern der Quantencomputerüberwachungsvorrichtung, insbesondere durch den Quantencomputer (QC), innerhalb eines weiteren Zeitraums zu häufig, insbesondere häufiger als ein Ansteuererwartungswert, erfolgt.

Ein zusätzlicher weiterer Schritt kann die Überwachung des Quantencomputers (QC) auf eine Fehlfunktion des Quantencomputers (QC) durch den Quantencomputer (QC) selbst und/oder die Überwachung auf eine Fehlfunktion anderer Bauelemente und/oder Funktionselemente des Quantencomputersystems (QUSYS) durch den Quantencomputer (QC) und/oder die Überwachung auf eine Fehlfunktion von Quantencomputersystem-Bestandteilen durch den Quantencomputer (QC) selbst sein.

Des Weiteren beschreibt das hier vorgelegte Dokument ein Verfahren zur Überwachung des korrekten Quantencomputerprogrammablaufs eines mit Quantencomputerüberwachungsvorrichtung (QUV) versehenen Quantencomputersystems (QUSYS), insbesondere unter Verwendung eines der vorbeschriebenen Verfahren. Das Quantencomputersystem (QUSYS) umfasst einen Quantencomputer (QC), wobei der Quantencomputer (QC) in bestimmten Zeitabständen die Quantencomputerüberwachungsvorrichtung (QUV), insbesondere über einen Datenbus (DB) mittels einer Nachricht, ansteuert, und wobei die Quantencomputerüberwachungsvorrichtung (QUV) ohne diese Ansteuerung ein Rücksetzten (Reset-Funktion) des Quantencomputers (QC) auslöst.

Dabei veranlasst typischerweise das Rücksetzen den Steuerrechner (µC) des Quantencomputers (QC) dazu, auf den Quantencomputerprogrammstart oder einen anderen vorbestimmten Programmpunkt des Quantencomputerprogramms zu springen.

Das Rücksetzen veranlasst typischerweise den Steuerrechner (µC) des Quantencomputers (QC) dazu, zumindest Quantenbits des Quantencomputers (QC) in einen vordefinierten oder vordefinierbaren Quantenzustand oder in eine vordefinierte oder vordefinierbare Überlagerung solcher Quantenzustände zu bringen, wobei diese Quantenbits zumindest einen Teil der Quantenbits des Quantencomputers (QC) umfassen.

Bevorzugt nimmt der Quantencomputer (QC) beim Auftreten einer von ihm erkannten Fehlfunktion zur Auslösung einer von der Quantencomputerüberwachungsvorrichtung (QUV) stammenden Rücksetz-Funktion eine gezielte Fehlansteuerung der Quantencomputerüberwachungsvorrichtung (QUV) vor.

Abschließend sei noch angemerkt, dass ein Quantensensorsystem mit einem oder mehreren Quantenpunkten als Sensorelementen als ein Quantencomputer im Sinne dieser Offenbarung verstanden werden kann und damit ggf. unter die Beanspruchung fällt, wenn das Quantensensorsystem eine Quantensensorüberwachungsvorrichtung umfasst, die in ihren Eigenschaften einer Quantencomputerüberwachungsvorrichtung (QUV) im Sinne des hier vorgelegten Dokuments entspricht.

### Vorteil

Mit Hilfe einer Quantenüberwachungsvorrichtung (QUV) und der zugehörigen Verfahren kann verhindert werden, dass Quantencomputer, die ein System steuern, Zustände dieses Systems einstellen oder ansteuern, die sicherheitskritisch sind.

### Liste der Figuren

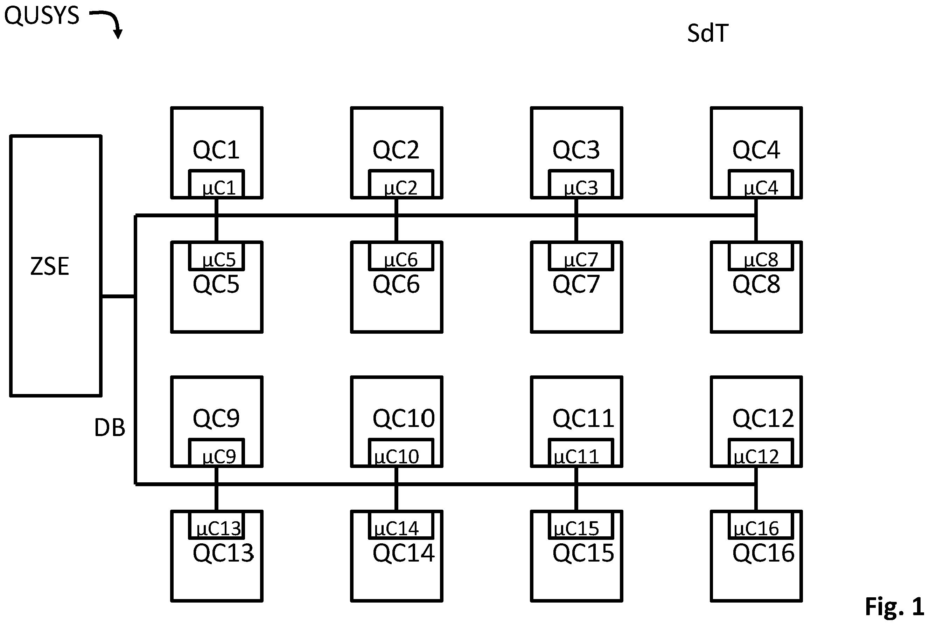

Figur 1
   zeigt ein Quantencomputersystem(QSYS) der zum Zeitpunkt der Anmeldung der prioritätsgebenden Patentanmeldung DE 10 2021 110 964.7 vom 28. April 2021 des hier vorgelegten Dokuments noch unveröffentlichten internationalen Patentanmeldung WO 2021 083 448 A1.
Figur 2
   entspricht der Figur 1 mit dem Unterschied, dass nun eine vorschlagsgemäße Quantencomputerüberwachungsvorrichtung (QUV) die Funktion der Quantencomputer überwachen und ggf. testen kann.
Figur 3
   zeigt das mögliche Zusammenwirken eines einzelnen Quantencomputers (QC) mit einer Quantencomputerüberwachungsvorrichtung (QUV) und einem Gerät (GR) und einer Systemkomponente (SYSC).
Figur 4
   zeigt eine Situation in der die Quantencomputerüberwachungsvorrichtung (QUV) Teil des Quantencomputers (QC) ist.

### Beschreibung der Figuren

### Figur 1

Figur 1 zeigt ein Quantencomputersystem(QSYS) der zum Zeitpunkt der Anmeldung der prioritätsgebenden Patentanmeldung DE 10 2021 110 964.7 vom 28. April 2021 des hier vorgelegten Dokuments noch unveröffentlichten internationalen Patentanmeldung WO 2021 083 448 A1. Das Quantencomputersystem (QUSYS) der Figur 1 umfasst 16 Quantencomputer (QC1 bis QC16). Die Figur 1 ist daher als Stand der Technik (SdT) gekennzeichnet, auch wenn dies zum Zeitpunkt der Anmeldung der prioritätsgebenden Patentanmeldung DE 10 2021 110 964.7 vom 28. April 2021 des hier vorgelegten Dokuments noch unveröffentlichter Stand der Technik ist. Jeder der 16 Quantencomputer des beispielhaften Quantencomputersystems (QC1 bis QC16) verfügt über jeweils mindestens einen Steuerrechner (µC1 bis µC16). Jeder der 16 Steuerrechner (µC1 bis µC16) der 16 Quantencomputer (QC1 bis QC16) ist über eine Datenbusschnittstelle mit einem Datenbus (DB) verbunden. Eine zentrale Steuereinheit (ZSE) steuert die 16 Quantencomputer (QC1 bis QC16) über den Datenbus (DB).

### Figur 2

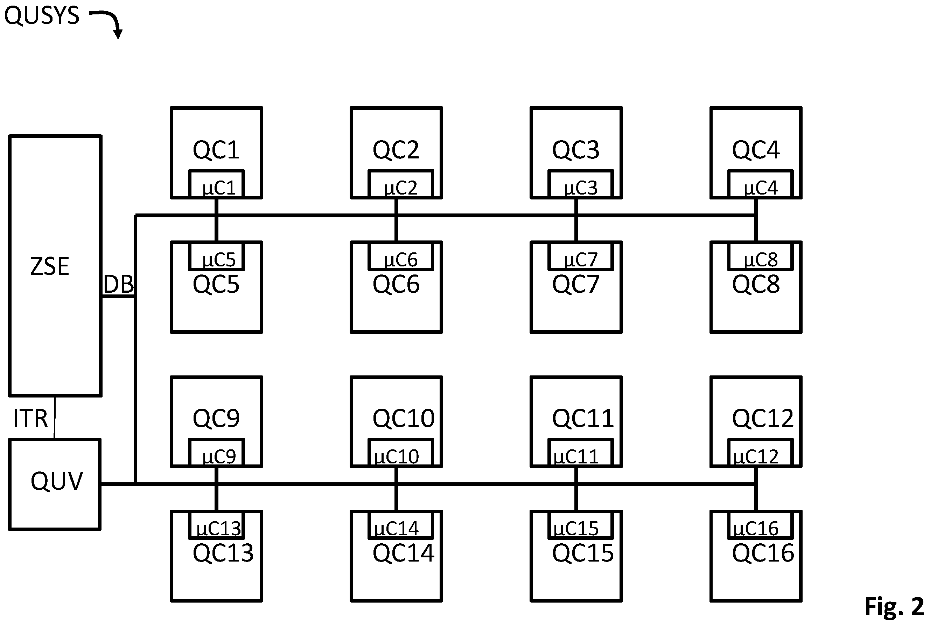

Figur 2 entspricht der Figur 1 mit dem Unterschied, dass nun eine Quantencomputerüberwachungsvorrichtung (QUV) die Funktion der Quantencomputer überwachen und ggf. testen kann. Insbesondere kann sie in dem Beispiel der Figur 2 über eine Interrupt-leitung der zentralen Steuereinheit ein Problem signalisieren. Die zentrale Steuereinheit kann dann ggf. aus Registern der Quantencomputerüberwachungsvorrichtung (QUV) eine Information über die Art des Problems auslesen.

### Figur 3

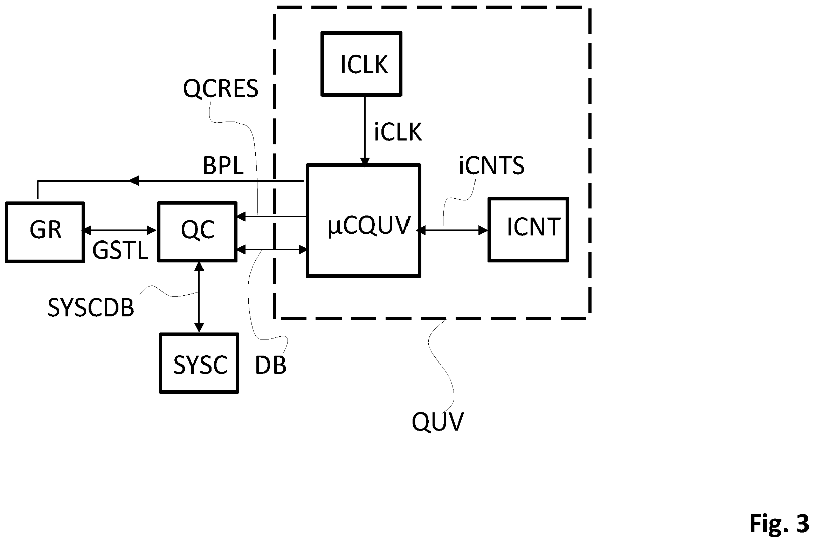

Figur 3 zeigt das mögliche Zusammenwirken eines einzelnen Quantencomputers (QC) mit einer Quantencomputerüberwachungsvorrichtung (QUV) und einem Gerät (GR) und einer Systemkomponente (SYSC). Der Steuerrechner (µCQUV) der Quantencomputerüberwachungsvorrichtung (QUV) überwacht den internen Taktgenerator (ICLK) der Quantencomputerüberwachungsvorrichtung (QUV). Über den Datenbus (DB) tauschen der Quantencomputer (QC) und die Quantencomputerüberwachungsvorrichtung (QUV) Daten etc. aus. Die Quantencomputerüberwachungsvorrichtung (QUV) kann Fehler des Quantencomputers (QC) erfassen und über eine Bypass-Leitung (BPL) das Gerät (GR) in einen sicheren Zustand bringen, falls die Quantencomputerüberwachungsvorrichtung beispielsweise einen Fehler des Quantencomputers (QC) erfasst. Der Quantencomputer (QC) steuert und/oder regelt in dem Beispiel nicht durch eine solche Bypass-Leitung (BOL) abgesichert weitere System-komponenten (SYSC) über beispielhafte weitere Signalleitungen (SYSCDB), die einen Datenbus umfassen können.

Die Quantencomputerüberwachungsvorrichtung (QUV) verfügt in dem Beispiel über einen internen Zähler und/oder Zeitgeber (ICNT). Dieser kann beispielsweise die Pulse eines internen Takts (iCLK) der Quantencomputerüberwachungsvorrichtung (QUV) zwischen zwei Fehlern des Quantencomputers (QC) oder zwischen einem Startsignal und dem Zeitpunkt des Auftretens eines Fehlers des Quantencomputers (QC) und/oder die Anzahl der Fehler des Quantencomputers (QC) und/oder die Anzahl korrekter Quantencomputerberechnungen des Quantencomputers (QC) zählen und/oder die Anzahl fehlerhafter Quantencomputerberechnungen des Quantencomputers (QC) zählen und/oder und/oder die Anzahl von Quantencomputerberechnungen des Quantencomputers (QC) mit einem bestimmten Ergebnis zählen und/oder die Anzahl von Quantencomputerberechnungen des Quantencomputers (QC), die von einem bestimmten Ergebnis abweichen, zählen. Die Quantencomputerüberwachungsvorrichtung (QUV) umfasst typischerweise mehr als einen internen Zähler und/oder Zeitgeber (ICNT). Bevorzugt erfassen diese mehreren internen Zähler und/oder Zeitgeber (ICNT) unterschiedliche Zählereignisse, wie zuvor angedeutet. Auf die obigen Abschnitte wird hier verwiesen. In dem Beispiel der Figur 3 signalisiert Der Steuerrechner (pCQUV) der Quantencomputerüberwachungsvorrichtung (QUV) dem beispielhaften internen Zähler und/oder Zeitgeber (ICNT) mittels einer internen Zählereignissignal (iCNTS) das Auftreten eine zu zählenden Ereignisses. Das I (iCNTS) kann auch ein Tor-Signal für das Zählen der Pulse des internen Takts (iCLK) an den beispielhaften internen Zähler und/oder Zeitgeber (ICNT) sein.

### Figur 4

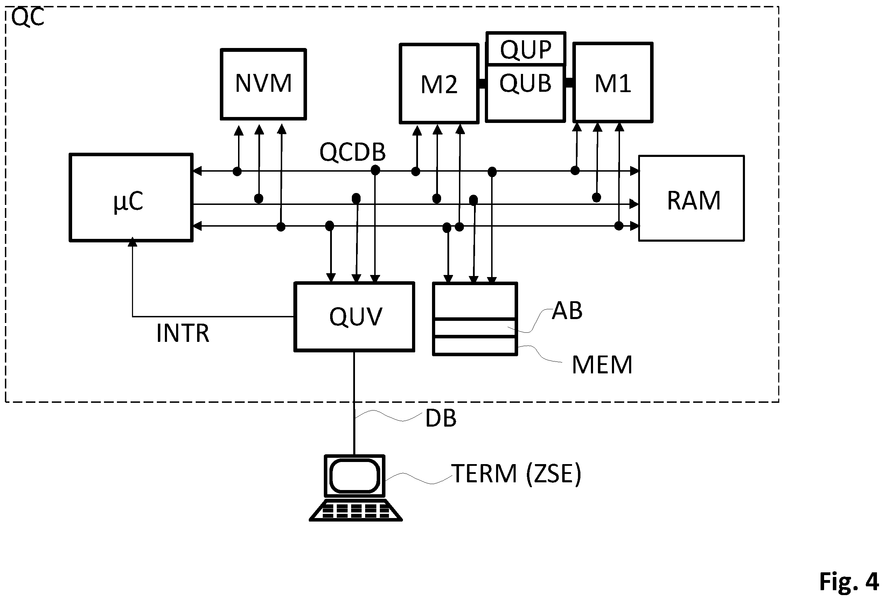

Figur 4 zeigt eine Situation in der eine separate Quantencomputerüberwachungsvorrichtung (QUV) Teil des Quantencomputers (QC) ist. Der Quantencomputer (QC) umfasst einen Steuerrechner (µC), die Quantencomputerüberwachungsvorrichtung (QUV), einen Speicher (MEM) mit einem besonderen Abschnitt (AB) im Speicher (MEM). Des Weiteren umfasst der Quantencomputer (QC) in diesem Beispiel einen nicht flüchtigen Speicher (NVM) und einen Schreib/lese-Speicher (RAM). Als Kern der Vorrichtung umfasst der vorgeschlagene Quantencomputer (QC) ein oder mehrere Quantenbits (QUB). Diese Quantenbits können beispielsweise Elektronspins und/oder Spins von Elektronen Konfigurationen und/oder nukleare Spins sein. Beispielsweise kann es sich um paramagnetische Zentren und/oder magnetische Kernmomente von Atomkernen handeln. Das hier vorgelegte Dokument verweist auf die zum Zeitpunkt der Anmeldung der prioritätsgebenden Patentanmeldung DE 10 2021 110 964.7 vom 28. April 2021 der hier vorgelegten Dokuments noch unveröffentlichten internationalen Patentanmeldung WO 2021 083 448 A1. Der Steuerrechner (µC) des Quantencomputers (QC) kann in diesem Beispiel mit Hilfe erster Mittel (M1) die Quantenbits (QB) manipulieren und mit Hilfe zweiter Mittel (M2) Zustände der Quantenbits (QUB) auslesen.

Das hier vorgelegte Dokument verweist auch hier auf die zum Zeitpunkt der Anmeldung der prioritätsgebenden Patentanmeldung DE 10 2021 110 964.7 vom 28. April 2021 der hier vorgelegten Dokuments noch unveröffentlichten internationalen Patentanmeldung WO 2021 083 448 A1. Typischerweise umfassen die Quantencomputer (QC1 bis QC16) des Quantencomputersystems (QUSYS) Ansteuereinheiten als erste Mittel (M1), wie beispielsweise horizontale Treiberstufen (z.B. Bezugszeichen HD1 bis HD3 der Figur 23 der WO 2021 083 448 A1) und/oder die vertikale Treiberstufen (z.B. Bezugszeichen VD1 der Figur 23 der WO 2021 083 448 A1), die den Signalverlauf auf den Steuerleitungen, beispielsweise horizontalen Steuerleitungen (z.B. Bezugszeichen LH1 bis LH3 der Figur 23 der WO 2021 083 448 A1) und/oder horizontalen Abschirmleitungen (z.B. Bezugszeichen SH1 bis SH4 der Figur 23 der WO 2021 083 448 A1) und/oder beispielsweise vertikalen Steuerleitungen (z.B. Bezugszeichen LV1 der Figur 23 der WO 2021 083 448 A1) und/oder vertikalen Abschirmleitungen (z.B. Bezugszeichen SV1 bis SV2 der Figur 23 der WO 2021 083 448 A1), treiben. Typischerweise umfasst der Quantencomputer (QC) Auswerteinheiten als zweite Mittel (M2), wie beispielsweise horizontale Empfängerstufen (z.B. Bezugszeichen HS1 bis HS3 der Figur 23 der WO 2021 083 448 A1) und/oder die vertikale Empfängerstufen (z.B. Bezugszeichen VS1 der Figur 23 der WO 2021 083 448 A1), die den Signalverlauf auf den Steuerleitungen, beispielsweise horizontalen Steuerleitungen (z.B. Bezugszeichen LH1 bis LH3 der Figur 23 der WO 2021 083 448 A1) und/oder horizontalen Abschirmleitungen (z.B. Bezugszeichen SH1 bis SH4 der Figur 23 der WO 2021 083 448 A1) und/oder beispielsweise vertikalen Steuerleitungen (z.B. Bezugszeichen LV1 der Figur 23 der WO 2021 083 448 A1) und/oder vertikalen Abschirmleitungen (z.B. Bezugszeichen SV1 bis SV2 der Figur 23 der WO 2021 083 448 A1), erfassen und auswerten. Beispielsweise über einen Testbus als Datenbus (DB) kann ein Terminal (TERM) als zentrale Steuereinheit (ZSE) auf das System des Quantencomputers (QC) zugreifen und beispielsweise die Abarbeitung des Quantencomputerprogramms zu bestimmten Zeiten und/oder Quantencomputerprogrammpunkten und/oder Quantencomputerprogrammadressen und/oder bei bestimmten Quantenoperationen unterbrechen.

Der Steuerrechner (µC), der nicht flüchtige Speicher (NVM), die ersten Mittel (M1), die zweiten Mittel (M2), der Speicher (MEM), der flüchtige Speicher (RAM) und die Quantencomputerüberwachungsvorrichtung (QUV) sind in diesem Beispiel an einen gemeinsamen Quantencomputerdatenbus (QCDB) angeschlossen, der in diesem Beispiel komplett im Innern des Quantencomputers (QC) liegt. Die Quantencomputerüberwachungsvorrichtung (QUV) des Quantencomputers (QC) kann hier über eine Interrupt-Leitung (INTR) den Steuerrechner (µC) beeinflussen. Letztlich legt die hier vorgelegte Schrift eine Quantencomputerüberwachungsvorrichtung (QUV) eines Quantencomputersystems (QUSYS) und eine Quantencomputerüberwachungsvorrichtung (QUV) eines Quantencomputers (QC) offen, wobei die Übergänge offensichtlich fließend sind. Ein Quantencomputersystem (QUSYS) kann somit beispielsweise eine Quantencomputerüberwachungsvorrichtung (QUV) des Quantencomputersystems (QUSYS) und/oder ein oder mehrere Quantencomputer (QC1 bis QC16) mit beispielsweise jeweils einer oder mehrerer Quantencomputerüberwachungsvorrichtungen (QUV) dieser Quantencomputer (QC) umfassen.

### Merkmale

Die Merkmalsliste gibt die Merkmale des Vorschlags wieder. Die Merkmale und deren Untermerkmale können, miteinander und mit anderen Merkmalen und Untermerkmalen dieses Vorschlags und mit Merkmalen der Beschreibung kombiniert werden, soweit das Ergebnis dieser Kombination sinnhaft ist. Hierfür ist es nicht notwendige im Falle einer Kombination alle Untermerkmale eines Merkmals in ein Merkmal aufzunehmen. Die technischen Wirkungen und Vorteile sind in der vorhergehenden Beschreibung und nachfolgend erwähnt.
1. Quantencomputersystem (QUSYS)
   - wobei das Quantencomputersystem (QUSYS) einen Quantencomputer (QC) umfasst und
   - wobei das Quantencomputersystem (QUSYS) eine Quantencomputerüberwachungsvorrichtung (QUV) umfasst und
   - wobei der Quantencomputer (QC) ein Quantencomputerprogramm mit einem Quantencomputerprogrammablauf ausführt und
   - wobei das Quantencomputerprogramm typischerweise zumindest eine Quantenoperation unter Manipulation eines Quantenzustands zumindest eines Quantenbits (QUB) des Quantencomputers (QC) umfasst und
   - wobei die Quantencomputerüberwachungsvorrichtung (QUV) den korrekten Quantencomputerprogrammablauf des Quantencomputerprogramms des Quantencomputers (QC) überwacht und/oder
   - wobei die Quantencomputerüberwachungsvorrichtung (QUV) genau einen oder mehr als genau einen Wert und/oder genau einen und/oder mehr als genau einen Werteverlauf eines der folgenden Betriebsparameter überwacht:
      - einen Wert einer Betriebsspannung einer Betriebsspannungsleitung (VDD) des Quantencomputersystems (QUSYS) gegenüber einem Bezugspotenzial (GND) und/oder
      - einen Wert einer dieser Betriebsspannungsleitung (VDD) zugeordneten Stromaufnahme (IDD) des Quantencomputersystems (QUSYS) und/oder
      - einen Wert einer Betriebsspannung einer Betriebsspannungsleitung (VDD) des Quantencomputers (QC) gegenüber einem Bezugspotenzial (GND) und/oder
      - einen Wert einer dieser Betriebsspannung zugeordneten Stromaufnahme (IDD) des Quantencomputers (QC) und/oder
      - einen Wert einer Betriebsspannung eines Vorrichtungsteils des Quantencomputers (QC) gegenüber einem Bezugspotenzial (GND) und/oder
      - einen Wert einer Betriebsspannung zugeordneten Stromaufnahme eines Vorrichtungsteils des Quantencomputers (QC) und/oder
      - den Prozessortakt (QCCLK) eines Steuerrechners (µC), der ggf. Teil des Quantencomputers (QC) ist, und/oder
      - den Wert der Frequenz des Prozessortakts (QCCLK) des Steuerrechners (µC), der ggf. Teil des Quantencomputers (QC) ist, und/oder
      - die Lichtabgabe einer Lichtquelle (LED) eines Quantencomputers (QC) zum Bestrahlen von Quantenbits (QUB) des Quantencomputers (QC) mit Strahlung,
      - die Detektionsfähigkeit von elektromagnetischer Strahlung eines Fotodetektors und/oder
      - die bestimmungsgemäß korrekte Erzeugung elektromagnetischer Felder, insbesondere von Mikrowellenfeldern und/oder Radiowellenfeldern eine Vorrichtung des Quantencomputers (QC) zur Manipulation eines oder mehrerer Quantenbits (QUB), und/oder
      - den komplexen und/oder realen und/oder imaginären Leitwert einer Leitung, die Teil einer Vorrichtung des Quantencomputers (QC) zur Manipulation eines oder mehrerer Quantenbits (QUB) ist.
   Vorteil diese Merkmals: Die Quantencomputerüberwachungsvorrichtung (QUV) stellt durch die Überwachung dieser Betriebsparameter sicher, dass die Voraussetzungen vorliegen, dass der Quantencomputer (QC) bzw. die Quantencomputer (QC1 bis QC16) des Quantencomputersystems (QUSYS) überhaupt in der Lage sind, die erwarteten Quantencomputerberechnungsergebnisse zu liefern. Hierzu ermittelt die Quantencomputerüberwachungsvorrichtung (QUV) Messwerte für die überwachten Betriebsparameter und vergleicht diese mit Schwellwerten und/oder vorgegebenen Toleranzintervallen für die Messwerte dieser Betriebsparameter. Liegen die Messwerte in Wertebereichen, die durch die Schwellwerte und/oder die vorgegebenen Toleranzintervalle als zulässig markiert sind, so unternimmt die Quantencomputerüberwachungsvorrichtung (QUV) typischerweise nichts. Dies kann beispielsweise dann der Fall sein, wenn Messwerte innerhalb eines vorgegebenen Toleranzintervalls liegen. Liegen die Messwerte außerhalb der Wertebereiche, die durch die Schwellwerte und/oder die vorgegebenen Toleranzintervalle als zulässig markiert sind, so initiiert die Quantencomputerüberwachungsvorrichtung (QUV) typischerweise Gegenmaßnahmen und führt diese ggf. auch selbst aus. Dabei kann es sich beispielsweise um Signalisierungen an eine übergeordnete zentrale Steuereinheit (ZSE), eine Benutzeranzeige oder um ein Rücksetzen des betroffenen Quantencomputers (QC) und/oder des Quantencomputersystem (QUSYS) handeln. Andere Maßnahmen der Quantencomputerüberwachungsvorrichtung (QUV) sind in diesem Fall ebenfalls denkbar.
Merkmal 2: Quantencomputersystem (QUSYS) nach Merkmal 1,
   - wobei der Quantencomputer (QC) in vorbestimmten Zeiträumen vor vorbestimmten Zeitpunkten (tv) vorbestimmte Quantencomputerberechnungen mit mindestens einer Quantenoperation unter Manipulation zumindest eines Quantenbits (QUB) des Quantencomputers (QC) zur Berechnung vorbestimmter Quantencomputerberechnungsergebnisse durchführt und
   - wobei der Quantencomputer (QC) nach diesen vorbestimmten Zeitpunkten (tv) die Quantencomputerüberwachungsvorrichtung (QUV) ansteuern muss, da die Quantencomputerüberwachungsvorrichtung (QUV) andernfalls eine Gegenmaßnahme oder mehrere Gegenmaßnahmen durchführt.
   Vorteil diese Merkmals: Quantencomputer (QC, QC1 bis QC16) führen die Quantenberechnungen innerhalb der sogenannten T2-Zeit durch, in der angenommen werden kann, dass die Wahrscheinlichkeit, dass eine Verschränkung und/oder Kohärenz von Quantenzuständen nicht verlorengegangen ist, sehr hoch ist. Daher führen Quantencomputer (QC) Quantenberechnungen vorzugsweise in Zeitscheiben durch. Dabei hat bevorzugt jede Zeitscheibe eine zeitliche Dauer, die kleiner als die kürzeste T2-Zeit der beteiligten Quantenbits ist. Diese Zeitscheiben zur Berechnung von Quantencomputerberechnungen liegen bei einem Quantencomputer (QC, QC1 bis QC16) zeitlich hintereinander und überlappen sich zeitlich nicht. Eine Kernidee der hier vorgestellten technischen Lehre ist es also das der Quantencomputer (QC, QC1 bis QC16) in einer ersten Zeitscheibe eine Quantenberechnung mittels eines Quantencomputerprogramms durchführt und in einer typischerweise nachfolgenden zweiten Zeitscheibe der Quantencomputerüberwachungsvorrichtung (QUV) signalisiert, dass er noch funktioniert. Der Quantencomputer (QC, QC1 bis QC16) kann in dieser zweiten Zeitscheibe beispielsweise von der Quantencomputerüberwachungsvorrichtung (QUV) vorgegebene typischerweise einfach Quantencomputerberechnungen durchführen und die Ergebnisse dieser Quantencomputerberechnungen in dieser zweiten Zeitscheibe an die Quantencomputerüberwachungsvorrichtung (QUV) signalisieren. Die Quantencomputerüberwachungsvorrichtung (QUV) kann eine Statistik über die Quantencomputerberechnungsergebnisse des betreffenden Quantencomputers (QC, QC1 bis QC16) führen und auf einen Fehler des betreffenden Quantencomputers (QC, QC1 bis QC16) schließen, wenn diese Quantencomputerberechnungsergebnisse dieses Quantencomputers (QC, QC1 bis QC16) für diese wiederholt durchgeführte Quantencomputerberechnung statistisch mehr als ein Vorgabewert, also häufiger als erwartet, von einem statistisch ermittelten Ergebniswert dieser Quantencomputerberechnungsergebnisse abweicht.
Merkmal 3: Quantencomputersystem (QUSYS) nach Merkmal 2,
   - wobei die Gegenmaßnahme ein Rücksetzten (Reset-Funktion) des Quantencomputers (QC) auf den Quantencomputerprogrammstart (QPS) oder einen anderen vorbestimmten Quantencomputerprogrammpunkt (QPV) dergleichen durchführt.
   Vorteil diese Merkmals: Durch eine solche Maßnahme bringt die Quantencomputerüberwachungsvorrichtung (QUV) den Quantencomputer (QC) wieder in einen definierten Zustand, wenn er durch externe physikalische Ereignisse, wie beispielsweise ionisierende Strahlung, elektromagnetische Strahlung oder thermische Störungen in seinem Betrieb gestört wurde.
Merkmal 4: Quantencomputer (QC) nach einem oder mehreren der Merkmale 1 bis 3,
   - wobei der Quantencomputer (QC) einen Datenbus (DB) umfasst und
   - wobei der Datenbus (DB) den Quantencomputer (QC) mit der Quantencomputerüberwachungsvorrichtung (QUV) koppelt und
   - wobei der Quantencomputer(QC) Informationen und/oder Quantencomputerberechnungsergebnisse mittels des Datenbusses (DB) an die Quantencomputerüberwachungsvorrichtung (QUV) übertragen kann und/oder
   - wobei die Quantencomputerüberwachungsvorrichtung (QUV) Informationen und/oder Anfragen und/oder Programmcode und/oder Programmdaten mittels des Datenbusses (DB) an den Quantencomputer(QC) übertragen kann.
   Vorteil diese Merkmals: Durch eine solche Maßnahme kann die Quantencomputerüberwachungsvorrichtung (QUV) ggf. auch mehrere Quantencomputer (QC, QC1 bis QC16) überwachen.
Merkmal 5: Quantencomputersystem (QUSYS) nach einem oder mehreren der Merkmale 2 bis 4
   - wobei der Quantencomputer (QC) nach den vorbestimmten Zeitpunkten (tv) die Quantencomputerüberwachungsvorrichtung (QUV) ansteuern muss und
   - wobei der Quantencomputer (QC) bei dieser Ansteuerung zumindest ein Quantencomputerberechnungsergebnis einer vorbestimmten Quantencomputerberechnung an die Quantencomputerüberwachungsvorrichtung (QUV) übermittelt.
   Vorteil diese Merkmals: Hierdurch kann die Quantencomputerüberwachungsvorrichtung (QUV) die Funktion der Quantenoperationen des überwachten Quantencomputers (QC) protokollieren und beispielsweise eine entsprechende Log-Datei anlegen.
Merkmal 6: Quantencomputersystem nach Merkmal 5,
   - wobei die Quantencomputerüberwachungsvorrichtung (QUV) das Quantencomputerberechnungsergebnis des Quantencomputers (QC) überprüft.
   Vorteil diese Merkmals: Hierdurch kann die Quantencomputerüberwachungsvorrichtung (QUV) die Funktion der Quantenoperationen des Quantencomputers (QC) überwachen und ggf. Maßnahmen initiieren oder ergreifen.
Merkmal 7: Quantencomputersystem (QUSYS) nach Merkmal 6,
   - wobei die Quantencomputerüberwachungsvorrichtung (QUV) auf einen Fehlerzustand des Quantencomputers (QC) schließt, wenn das Quantencomputerberechnungsergebnis des Quantencomputers (QC) nicht innerhalb einer vorbestimmten erlaubten Lösungsmenge für das das Quantencomputerberechnungsergebnis des Quantencomputers (QC) liegt.
   Vorteil diese Merkmals: Hierdurch kann die Quantencomputerüberwachungsvorrichtung (QUV) die korrekte Funktion des Quantencomputersystems (QUSYS) und dessen Quantencomputer (QC, QC1 bis QC16) sicherstellen.
Merkmal 8: Quantencomputersystem (QUSYS) nach einem oder mehreren der Merkmale 6 bis 7,
   - wobei die Quantencomputerüberwachungsvorrichtung (QUV) eine Statistik mehrerer Quantencomputerberechnungsergebnisse gleichartiger Quantencomputerberechnungen des Quantencomputers (QC, QC1 bis QC16) erstellt und auf einen Fehler schließt, wenn die Quantencomputerberechnungsergebnisse des Quantencomputers (QC, QC1 bis QC16) häufiger als ein vorgegebener Maximalwert von einem erwarteten Quantencomputerberechnungsergebnis des Quantencomputers (QC, QC1 bis QC16) abweichen.
   Vorteil diese Merkmals: Hierdurch kann die Quantencomputerüberwachungsvorrichtung (QUV) die korrekte Funktion des Quantencomputersystems (QUSYS) sicherstellen, obwohl es sich bei den Ergebnissen der Quantencomputerberechnungen nur um Ergebnisse handelt, die mit einer gewissen statistischen Wahrscheinlichkeit die richtigen Werte annehmen. Insbesondere dieses Problem ist mit Vorrichtungen aus dem Stand der Technik nicht lösbar.
Merkmal 9: Quantencomputersystem (QUSYS) nach Merkmal 8,
   - wobei die Quantencomputerüberwachungsvorrichtung (QUV) einen Speicher aufweist und
   - wobei ein Wert in dem Speicher der Quantencomputerüberwachungsvorrichtung (QUV) abgelegt ist und/oder abgelegt werden kann, der mit dem Maximalwert korrespondiert, um den die Quantencomputerberechnungsergebnisse des Quantencomputers (QC) maximal häufig von einem erwarteten Quantencomputerberechnungsergebnis des Quantencomputers (QC) abweichen dürfen.
   Vorteil dieses Merkmals: Diese Toleranzangabe ist vorteilhaft, damit die Quantencomputerüberwachungsvorrichtung (QUV) in Abhängigkeit von der durchgeführten Quantencomputerberechnung optimal angepasst ist. Die Streubreiten der Ergebnisse der Quantencomputerberechnungen des Quantencomputers (QC) variieren nämlich je nach durchgeführter Quantencomputerberechnung.
Merkmal 10: Quantencomputersystem (QUSYS) nach einem oder mehreren der Merkmale 7 bis 9,
   - wobei die Quantencomputerüberwachungsvorrichtung (QUV) im Falle des Schließens auf einen Fehler dem Quantencomputer (QC) oder einem übergeordneten System (ZSE) das Auftreten dieses Fehlers signalisiert und/oder eine Information über diesen Fehler bereithält.
   Vorteil diese Merkmals: In vielen Anwendungsfällen werden Quantencomputersysteme (QUSYS) in potenziell sicherheitsrelevanten Gesamtsystemen eingesetzt werden. Solche Systeme werden in der Entwurfsphase mit einer sogenannten FEMA-Analyse bewertet. Durch die Herstellung der Beobachtbarkeit eines Fehlers eines Quantencomputersystems (QUSYS) bzw. der Beobachtbarkeit eines Fehlers eines Quantencomputers (QC, QC1 bis QC16) eines Quantencomputersystems (QUSYS) sinkt die Schwere der Bedeutung eines solchen Fehlers. Dies Absenken der Schwere des Fehlers reicht bereits in einer Reihe typischer Anwendungsfälle aus, um solche Systeme dann tatsächlich real einsetzen zu dürfen.
Merkmal 11: Quantencomputersystem (QUSYS) nach einem oder mehreren der Merkmale 1 bis 10,
   - wobei Quantencomputersystem (QUSYS) ein übergeordnetes System (ZSE) umfasst und
   - wobei das Quantencomputersystem (QUSYS) mehrere Quantencomputer (QC, QC1 bis QC16) umfasst und
   - wobei das übergeordnete System (ZSE) für mindestens einen Quantencomputer (QC), bevorzugt für alle Quantencomputer (QC, QC1 bis QC16) jeweils einen Speicher mit einem jeweiligen Fehlerzählerwert der dem jeweiligen Quantencomputer (QC, QC1 bis QC16) zugeordnet ist, vorhält.
   Vorteil dieses Merkmals: Erfahrungsgemäß kann es dann und wann zu zeitlich vorübergehenden Störungen des Quantencomputersystems (QUSYS) bzw. der Quantencomputer (QC, QC1 bis QC16) des Quantencomputersystems (QUSYS) kommen. Der Schweregrad der Störung hängt also auch von der zeitlichen des Auftretens solcher Störungen ab. Daher ist es sinnvoll, wenn die Quantencomputerüberwachungsvorrichtung (QUV) diese zeitliche Dichte erfasst und wenn die Maßnahmen, die die Quantencomputerüberwachungsvorrichtung (QUV) ergreift oder initiiert, von dieser zeitlichen Dichte der Störungen des Quantencomputersystems (QUSYS) und/oder des Quantencomputers (QC, QC1 bis QC16) abhängen.
Merkmal 12: Quantencomputersystem (QUSYS) nach Merkmal 11,
   - wobei das übergeordnete System (ZSE) den Fehlerzählerwert, der einem Quantencomputer (QC) zugeordnet ist, um eine erste Fehlerzählerschrittweite erhöht, wenn die Quantencomputerüberwachungsvorrichtung (QUV) einen vermutlichen Fehler des den Fehlerzählerwert zugeordneten Quantencomputers (QC) signalisiert.
   Vorteil diese Merkmals: Hier wird der Zählerstand nicht bei jedem Fehler erhöht, sondern nur bei Fehlern, die eine Signalisierung zur Folge haben. Die zeitliche Dichteerfassung der Fehler ist also auf besonders schwerwiegende Fehler bestimmter Fehlerklassen beschränkt. Die Quantencomputerüberwachungsvorrichtung (QUV) unterlässt somit eine unnötige Steigerung der Gegenmaßnahmen oder unterlässt diese ggf., da ggf. unnötig, ganz.
Merkmal 13: Quantencomputersystem (QUSYS) nach Merkmal 11 und/oder Merkmal 12,
   - wobei das übergeordnete System (ZSE) den Fehlerzählerwert, der einem Quantencomputer (QC) zugeordnet ist, um eine zweite Fehlerzählerschrittweite erniedrigt, wenn die Quantencomputerüberwachungsvorrichtung (QUV) eine angenommene Korrektheit eines Quantencomputerberechnungsergebnisses des den Fehlerzählerwert zugeordneten Quantencomputers (QC) signalisiert.
   Vorteil dieses Merkmals: Hierdurch stellt die Quantencomputerüberwachungsvorrichtung (QUV) sicher, dass bei einem Verschwinden eines temporären Fehlers lang zurückliegende Fehlerereignisse irgendwann keinen Einfluss mehr haben.
Merkmal 14: Quantencomputersystem (QUSYS) nach einem oder mehreren der Merkmale 11 bis 13,
   - wobei das übergeordnete System, insbesondere eine zentrale Steuereinheit (ZSE), in dem Fall, wenn für eine durch das Quantencomputersystem (QUSYS) auszuführende Quantenberechnungsaufgabe nicht alle Quantencomputer (QC, QC1 bis QC16) des Quantencomputersystems (QUSYS) benötigt werden, die Quantencomputer (QC, QC1 bis QC16) des Quantencomputersystems (QUSYS) mit den jeweils niedrigsten aktuellen Fehlerzählerwerten, die den jeweiligen Quantencomputern (QC, QC1 bis QC16) zugeordnet sind, für die Ausführung der Berechnungsaufgabe verwendet.
   Vorteil dieses Merkmals: Dadurch, dass die Quantencomputerüberwachungsvorrichtung (QUV) dies durch entsprechende Signalisierungen an die Vorrichtungsteile des Quantencomputersystems (QUSYS) sicherstellt, ist die Qualität des Quantencomputerberechnungsergebnisses des Quantencomputersystems (QUSYS) immer maximiert und die Fehlerrate stets minimiert. Ein solches Quantencomputersystem (QUSYS) nutzt beispielsweise bevorzugt die Quantenbits mit der höchsten Fidelity und den längsten T2-Zeiten für die Berechnungen, um eine möglichst niedrige Fehlerrate zu erhalten.
Merkmal 15: Quantencomputersystem (QUSYS) nach einem oder mehreren der Merkmale 10 bis 14
   - wobei die Signalisierung der Quantencomputerüberwachungsvorrichtung (QUV)
      - den Quantencomputer (QC) zurücksetzt und/oder
      - den Quantencomputer (QC) in einen vorbestimmten Zustand bringt und/oder
      - zumindest ein Quantenbit (QUB) des Quantencomputers (QC) in einen vorbestimmten Zustand bringt und/oder
      - zumindest ein Kernquantenbit (QUB) des Quantencomputers (QC) in einen vorbestimmten Zustand bringt und/oder.
      - zumindest ein Quantenregister (QUREG) des Quantencomputers (QC) in einen vorbestimmten Zustand bringt und/oder
      - zumindest ein Kernquantenregister (CQUREG) des Quantencomputers (QC) in einen vorbestimmten Zustand bringt und/oder
      - zumindest ein Kern-Elektron-Quantenregister (CEQUREG) des Quantencomputers (QC) in einen vorbestimmten Zustand bringt.
   Vorteile dieses Merkmals: Das vorstehende Merkmal listet einige der möglichen Gegenmaßnahmen auf, die die Quantencomputerüberwachungsvorrichtung (QUV) ergreifen kann, wenn die Quantencomputerüberwachungsvorrichtung (QUV) auf einen nicht vorgesehener Zustand des Quantencomputersystems (QUSYS) oder von Vorrichtungsteilen des Quantencomputersystems (QUSYS) schließt. Im einfachsten Fall beschränken sich die Maßnahmen der Quantencomputerüberwachungsvorrichtung (QUV) auf die betroffenen Vorrichtungsteile des Quantencomputersystems (QUSYS).
Merkmal 16: Quantencomputersystem (QUSYS) nach Merkmal 15,
   - wobei der Quantencomputer (QC) im Falle eines Zurücksetzens seine Quantenbits (QUB) und/oder einen Teil seiner Quantenbits (QUB) in eine vorbestimmte Kombination überlagerter Quantenzustände bringt.
   Vorteil dieses Merkmals: Diese Maßnahme der Quantencomputerüberwachungsvorrichtung (QUV) stellt sicher, dass nachfolgende Quantencomputerberechnungen von einem definierten Zustand dieser Quantenbits (QUB) ggf. erneut beginnen können.
Merkmal 17: Quantencomputersystem (QUSYS) nach Merkmal 15 und/oder 16,
   - wobei der Quantencomputer (CQ) im Falle eines Zurücksetzens seine Kernquantenbits (CQUB) und/oder einen Teil seiner Kernquantenbits (CQUB) in eine vorbestimmte Kombination überlagerter Quantenzustände bringt.
   Vorteil dieses Merkmals: Diese Maßnahme der Quantencomputerüberwachungsvorrichtung (QUV) stellt sicher, dass nachfolgende Quantencomputerberechnungen von einem definierten Zustand dieser Kernquantenbits (CQUB) ggf. erneut beginnen können.
Merkmal 18: Quantencomputersystem (QUSYS) nach einem oder mehreren der Merkmale 6 bis 17
   - wobei der Quantencomputer (QC) beim Auftreten einer von Quantencomputer (QC) selbst oder von der Steuerrechner (µC) des Quantencomputers (QC) selbst erkannten Fehlfunktion zur Auslösung einer von der Quantencomputerüberwachungsvorrichtung (QUV) auslösbaren Rücksetz- Funktion des Quantencomputers (QC) eine gezielte Fehlansteuerung der Quantencomputerüberwachungsvorrichtung (QUV), insbesondere durch Übermittlung eines falschen Quantencomputerberechnungsergebnisses, vornimmt.
   Vorteil dieses Merkmals: Diese Maßnahme der Quantencomputerüberwachungsvorrichtung (QUV) stellt sicher, dass eine Prüfung des übergeordneten Systems auf korrekte Reaktion auf einen Fehler eines Quantencomputers (QC) und/oder des Quantencomputersystems (QC) im Betrieb überprüft werden kann.
Merkmal 19: Quantencomputersystem (QUSYS) nach Merkmal 18, dadurch gekennzeichnet,
   - dass der Quantencomputer (QC) die Fehlansteuerung dadurch durchführt,
   - dass der Quantencomputer (QC) die Quantencomputerüberwachungsvorrichtung (QUV), insbesondere durch Übermittlung eines falschen und/oder richtigen Quantencomputerberechnungsergebnisses, innerhalb einer vorgegebenen und/oder vorgebbaren Zeitspann häufiger als eine vorgegebene und/oder vorgebbare Maximalanzahl für diese Zeitspanne ansteuert.
   Vorteil dieses Merkmals: Das zu häufige Absetzen einer Botschaft kann auch auf einen Fehler hindeuten, der auf diese Weise detektierbar wird.
Merkmal 20: Quantencomputersystem (QUSYS) nach einem oder mehreren der Merkmale 4 bis 19
   - wobei die Quantencomputerüberwachungsvorrichtung (QUV) auf einen Fehler schließt, wenn der Quantencomputer (QC) ein Quantencomputerberechnungsergebnis **vor** einem vorbestimmten zweiten Zeitpunkt (t2) an die Quantencomputerüberwachungsvorrichtung (QUV) übermittelt,
   - wobei dieser vorbestimmte zweite Zeitpunkt (t2) nach dem vorbestimmten Zeitpunkt (tv) liegt oder gleich dem vorbestimmten Zeitpunkt (tv) ist.
   Vorteil dieses Merkmals: Das zeitlich zu frühe Absetzen einer Botschaft kann auch auf einen Fehler hindeuten, der auf diese Weise detektierbar wird.
Merkmal 21: Quantencomputersystem (QUSYS) nach einem oder mehreren der Merkmale 4 bis 20
   - wobei die Quantencomputerüberwachungsvorrichtung (QUV) auf einen Fehler schließt, wenn der Quantencomputer (QC) ein Quantencomputerberechnungsergebnis **nach** einem vorbestimmten dritten Zeitpunkt (t3) an die Quantencomputerüberwachungsvorrichtung (QUV) übermittelt,
   - wobei dieser vorbestimmte dritte Zeitpunkt (t3) nach dem vorbestimmten Zeitpunkt (tv) liegt oder gleich dem vorbestimmten Zeitpunkt (tv) ist.
   Vorteil dieses Merkmals: Das zeitlich zu späte Absetzen einer Botschaft kann auch auf einen Fehler hindeuten, der auf diese Weise detektierbar wird.
Merkmal 22: Quantencomputersystem (QUSYS) nach einem oder mehreren der Merkmale 1 bis 21
   - wobei die Quantencomputerüberwachungsvorrichtung (QUV) dem Quantencomputer (QC) vor Beginn eines vorbestimmten Zeitraums (Tv) signalisiert, welche vorbestimmte Quantencomputerberechnung bzw. welche vorbestimmten Quantencomputerberechnungen der Quantencomputer (QC) durchführen soll.
   Vorteil dieses Merkmals: Die Quantencomputerüberwachungsvorrichtung (QUV) kann auf diese Weise verschiedene Prüfungen systematisch durchführen und die entsprechenden Fehler detektieren. Hierdurch maximiert die Quantencomputerüberwachungsvorrichtung (QUV) die Fehlerabdeckung der Prüfungen, die die Quantencomputerüberwachungsvorrichtung (QUV) bevorzugt durchführt.
Merkmal 23: Quantencomputersystem (QUSYS) nach einem oder mehreren der Merkmale 1 bis 22,
   - wobei die Quantencomputerüberwachungsvorrichtung (QUV) dem Quantencomputer (QC) den Beginn und ggf. das Ende oder die Dauer des vorbestimmten Zeitraums (Tv) signalisiert.
   Vorteil dieses Merkmals: Die Quantencomputerüberwachungsvorrichtung (QUV) kann beispielsweise hierdurch den Quantencomputer (QC) veranlassen, von sich aus Maßnahmen zu ergreifen, wenn er die Anfrage der Quantencomputerüberwachungsvorrichtung (QUV) nicht rechtzeitig beantwortet. Es ist also ausdrücklich nicht unbedingt notwendig, dass die Quantencomputerüberwachungsvorrichtung (QUV) die Maßnahmen einleitet. Vielmehr kann auch der Steuerrechner (µC) des Quantencomputers (QC) eine entsprechende Maßnahme einleiten, falls die Zeit zur Beantwortung einer Anfrage der Quantencomputerüberwachungsvorrichtung (QUV) verstrichen ist.
Merkmal 24: Quantencomputersystem (QUSYS) nach einem oder mehreren der Merkmale 1 bis 23, dadurch gekennzeichnet,
   - dass der Quantencomputer (QC) eine Überwachung auf eine Fehlfunktion bei sich selbst und/oder bei anderen Bauelementen und/oder Teilvorrichtungen des Quantencomputersystems (QUSYS) vornimmt.
   Vorteil dieses Merkmals: Insbesondere der Steuerrechner (µC) eines Quantencomputers (QC) kann als Quantencomputerüberwachungsvorrichtung (QUV) für einen anderen Quantencomputer (QC) in einem Quantencomputersystem (QSYS) arbeiten. Mehrere Quantencomputer (QC, QC1 bis QC16) eines Quantencomputersystems (QUSYS) können sich auf diese Weise gegenseitig überwachen. Dabei agiert jeweils ein Quantencomputer der Quantencomputer (QC, QC1 bis QC16) des Quantencomputersystems (QUSYS) zumindest zeitweise als Quantencomputerüberwachungsvorrichtung (QUV) für einen anderen Quantencomputer der Quantencomputer (QC, QC1 bis QC16) des Quantencomputersystems (QUSYS) .
Merkmal 25: Quantencomputersystem (QUSYS) nach einem oder mehreren der Merkmale 1 bis 24, dadurch gekennzeichnet,
   - dass die Quantencomputerüberwachungsvorrichtung (QUV) eine Überwachung auf eine Fehlfunktion bei sich selbst und/oder bei anderen Bauelementen und/oder Teilvorrichtungen des Quantencomputersystem-(QUSYS) vornimmt.
   Vorteil dieses Merkmals: Bevorzugt arbeitet der Steuerrechner (µC) eines Quantencomputers (QC) bezügliche verschiedener Vorrichtungsteile dieses Quantencomputers (QC) als Quantencomputerüberwachungsvorrichtung (QUV). Außerdem arbeitet sie bevorzugt auch zumindest zeitweise als Quantencomputerüberwachungsvorrichtung (QUV), die mit dem Steuerrechner (µC) des Quantencomputers (QC) beispielsweise über einen Datenbus (DB) verbunden sind. Auf diese Weise maximiert der Steuerrechner (µC) die Testabdeckung der Überwachung des Quantencomputers (QC).
Merkmal 26: Quantencomputersystem (QUSYS) nach einem oder mehreren der Merkmale 1 bis 25, dadurch gekennzeichnet,
   dass die Quantencomputerüberwachungsvorrichtung (QUV) ein Quantencomputer (QC) ist, der mindestens zwei Quantenbits umfasst.
   Vorteil dieses Merkmals: Dieses Merkmal ist im Prinzip die Umkehrung der obigen Merkmale, wobei nun die Quantencomputerüberwachungsvorrichtung (QUV) auch Quantenoperationen durchführen kann und beispielsweise deren Ergebnisse mit denen der überwachten Quantencomputer (QC, QC1 bis QC16) des Quantencomputersystems (QUSYS) vergleichen kann.
Merkmal 27: Vorrichtung zur Überwachung eines Quantencomputers (QC), insbesondere zur Verwendung in einem Quantencomputersystem (QUSYS) nach einem oder mehreren der Merkmale 1 bis 26,
   - wobei die Vorrichtung eine Quantencomputerüberwachungsvorrichtung (QUV) umfasst und
   - wobei der Quantencomputer (QC) einen internen Taktgeber (ICLK) umfasst und
   - wobei der Quantencomputer (QC) mit einer Quantencomputerüberwachungsvorrichtung (QUV), insbesondere über einen Datenbus (DB) oder spezielle Signalleitungen, zur Überwachung des Quantencomputers (QC) verbindbar ist und/oder verbunden ist und
   - wobei die Quantencomputerüberwachungsvorrichtung (QUV) mit dem internen Taktgeber (ICLK) zur Überwachung eines Systemtakts des Quantencomputers (QC) verbindbar ist und/oder verbunden ist und/oder
   - wobei die Quantencomputerüberwachungsvorrichtung (QUV) Mittel zur Überprüfung des Quantencomputerprogrammablaufs des Quantencomputerprogramms des Quantencomputers (QC) umfasst und/oder
   - wobei die Quantencomputerüberwachungsvorrichtung (QUV) Mittel zur Überprüfung der korrekten Funktion des Quantencomputers (QC) umfasst und/oder
   - wobei die Quantencomputerüberwachungsvorrichtung (QUV) Mittel zur Überprüfung der korrekten Durchführung von Manipulationen von Quantenbits (QUB) des Quantencomputers (QC) umfasst.
   Vorteil dieses Merkmals: Eine solche Quantencomputerüberwachungsvorrichtung (QUV) fängt bereits die wesentlichen Fehler eines Quantencomputers der Quantencomputer (QC, QC1 bis QC16) des Quantencomputersystems (QUSYS) ab.
Merkmal 28: Vorrichtung nach Merkmal 27,
   - wobei die Quantencomputerüberwachungsvorrichtung (QUV) Mittel zur Überwachung von Betriebsparametern des Quantencomputers (QC), wie beispielsweise des Magnetfelds und/oder der Einstrahlung elektromagnetischer Wellen und/oder der Temperatur und/oder der Bestrahlung aufweist und
   - wobei die Quantencomputerüberwachungsvorrichtung (QUV) Mittel zur Überwachung von Tests von Systemkomponenten (SYSC) des Quantencomputers (QC) aufweist und
   - wobei die Quantencomputerüberwachungsvorrichtung (QUV) bei wenigstens einem erkannten Fehler eine Fehlermeldung an den Quantencomputer (QC) überträgt und einen Fehlerzähler in vorbestimmter Weise inkrementiert oder dekrementiert oder ändert.
   Vorteil dieses Merkmals: Dieses Merkmal hat den Vorteil, dass bei temporären Störungen des überwachten Quantencomputers (QC) infolge von Schwankungen dieser Betriebsparameter die Quantencomputerüberwachungsvorrichtung (QUV) nicht gleich beliebig schwerwiegende Maßnahmen ergreifen muss.
Merkmal 29: Vorrichtung nach Merkmal 28, dadurch gekennzeichnet,
   - dass die Quantencomputerüberwachungsvorrichtung (QUV) bei der Überprüfung des Quantencomputerprogramms dem Quantencomputer (QC) Testfragen übermittelt und
   - dass die Quantencomputerüberwachungsvorrichtung (QUV) Antworten des Quantencomputers (QC) auf Richtigkeit und/oder Zeitpunkt und/oder statistische Richtigkeit überwacht und
   - dass die Berechnung der Antworten auf die Testfragen mindestens eine Manipulation eines Zustands eines Quantenbits des Quantencomputers (QC) und/oder zumindest eine Quantenoperation des Quantencomputers (QC) erfordert.

   Eine Quantenoperation ist dabei typischerweise eine Operation des überwachten Quantencomputers (QC) die den Quantenzustand zumindest eines Quantenbits zumindest eines Quantenregisters des Quantencomputers (QC) modifiziert.
   Vorteil dieses Merkmals: Hierdurch ist die Quantencomputerüberwachungsvorrichtung (QUV) in der Lage die korrekte Funktion des überwachten Quantencomputers (QC) zu prüfen und auch die Auslastung des Steuerrechners (µC) zu überwachen. Ist diese zu hoch, so antwortet der Quantencomputer (QC) zu langsam. Sind die Quantenbits des Quantencomputers (QC) oder deren Ansteuerungsmittel innerhalb des Quantencomputers (QC) geschädigt oder in illegalen Zuständen, so stimmen typischerweise die übermittelten Antworten des Quantencomputers (QC) nicht mit Erwartungswerten und/oder Erwartungswertbereichen überein.
Merkmal 30: Vorrichtung nach Merkmal 28 oder 29, dadurch gekennzeichnet,
   - dass bei Überwachung der Tests der Systemkomponenten die Quantencomputerüberwachungsvorrichtung (QUV) dem Quantencomputer (QC) Testaufträge übermittelt und
   - dass der Quantencomputer (QC) der Quantencomputerüberwachungsvorrichtung (QUV) ein Quantencomputerberechnungsergebnis entsprechend der Testfrage zurücksendet, das die Quantencomputerüberwachungsvorrichtung (QUV) auf Richtigkeit und Zeitpunkt und/oder statistische Richtigkeit überwacht.
   Vorteil dieses Merkmals: Hierdurch ist die Quantencomputerüberwachungsvorrichtung (QUV) in der Lage die korrekte Funktion des überwachten Quantencomputers (QC) zu prüfen und auch die Auslastung des Steuerrechners (µC) zu überwachen. Ist diese zu hoch, so antwortet der Quantencomputer (QC) zu langsam. Sind die Quantenbits des Quantencomputers (QC) oder deren Ansteuerungsmittel des Quantencomputers (QC) geschädigt oder in illegalen Zuständen, so stimmen typischerweise die übermittelten Antworten des Quantencomputers (QC) nicht mit Erwartungswerten und/oder Erwartungswertbereichen überein.
Merkmal 31: Vorrichtung nach einem der vorhergehenden Merkmale 28 bis 30, dadurch gekennzeichnet,
   - dass die Quantencomputerüberwachungsvorrichtung (QUV) bei dem wenigstens einen erkannten Fehler ein an den Quantencomputer (QC) angeschlossenes Gerät (GR)
      - in seiner Funktion für eine vorgegebene Zeitdauer sperrt oder
      - in einen sicheren Zustand bringt oder
      - den Zugriff des Quantencomputers(QC) auf das Gerät (GR) verhindert oder
      - das Gerät (GR) statt mit dem Quantencomputer (QC) mit einer Quantencomputersimulationsvorrichtung verbindet
   - wobei die Quantencomputerüberwachungsvorrichtung (QUV) bevorzugt direkt mit dem Gerät (GR) verbindbar ist.
   Vorteil dieses Merkmals: Dieses Merkmal beschreibt verschiedene Möglichkeiten der Reaktion der Quantencomputerüberwachungsvorrichtung (QUV) auf einen Fehler des Quantencomputers (QC). Um einen Notlauf zu ermöglichen, kann die Vorrichtung auf eine Quantencomputersimulation zurückgreifen. Eine solche Simulation kann auch einen Quantencomputerprogrammablauf mit weniger Quantenbits sein. Die Grenzen solcher Simulationen sind jedoch bekannt.
Merkmal 32 Vorrichtung nach Merkmal 30 oder 31, dadurch gekennzeichnet,
   - dass die Quantencomputerüberwachungsvorrichtung (QUV) die Sperrung des Geräts (GR) bzw. die Einnahme des sicheren Zustands durch das Gerät (GR) verlängert, sofern die Quantencomputerüberwachungsvorrichtung (QUV) während der Sperrung bzw. während der Einnahme des sicheren Zustands durch das Gerät (GR) wenigstens einen weiteren Fehler des Quantencomputers (QC) erkennt.
   Vorteil dieses Merkmals: wenn die Quantencomputerüberwachungsvorrichtung (QUV) erkennt, dass der Fehler ein nachhaltiger Fehler ist, verhindert die Quantencomputerüberwachungsvorrichtung (QUV), dass der Quantencomputer (QC) fehlerhafte nicht sichere Zustände des Nutzungssystems, das der Quantencomputer (QC) steuert, veranlasst.
Merkmal 33: Vorrichtung nach einem der vorhergehenden Merkmale 27 bis 32, dadurch gekennzeichnet,
   - dass, wenn der Fehlerzähler einen vorgegebenen Wert erreicht hat, die Quantencomputerüberwachungsvorrichtung (QUV) eine Sperrung des Geräts (GR) bzw. eine Einnahme eines sicheren Zustands des Geräts (GR) bis zur Abschaltung der Quantencomputerüberwachungsvorrichtung (QUV) veranlasst.
   Vorteil dieses Merkmals: erst wenn die Schwere des Fehlers so groß ist, dass er immer wieder auftritt, wird die Unzuverlässigkeit des Quantencomputers (QC) so groß, dass die schwere Maßnahme der Totalabschaltung erst dann ergriffen wird und nicht schon bei einem einmaligen Ereignis.
Merkmal 34: Vorrichtung nach einem der vorhergehenden Merkmale 27 bis 33, dadurch gekennzeichnet,
   - dass das mit dem Quantencomputer (QC) verbindbare Gerät (GR) ein System eines Fahrzeugs, eines Flugkörpers oder eines Schwimmkörpers oder eines Roboters oder eines Flugzeugs oder eines Satelliten oder eines Waffensystems ist.
   Vorteil dieses Merkmals: Dieses Merkmal beschreibt typische Anwendungsfälle für solche Vorrichtungen.
Merkmal 35: Vorrichtung nach einem der vorhergehenden Merkmale 27 bis 34, dadurch gekennzeichnet,
   - dass die Quantencomputerüberwachungsvorrichtung (QUV) beim Einschalten eine Sperrung des Geräts (GR) und/oder die Einnahme eines sicheren Zustands durch das Gerät (GR) veranlasst, bis die Quantencomputerüberwachungsvorrichtung (QUV) Fehlerfreiheit, insbesondere bei den Punkten des Merkmals 0, erkennt.
   Vorteil des Anspruchs: Durch dieses Vorgehen stellt die Quantencomputerüberwachungsvorrichtung (QUV) sicher, dass von Beginn an das Gesamtsystem keinen unsicheren Zustand einnehmen kann.
Merkmal 36: Vorrichtung nach einem der vorhergehenden Merkmale 27 bis 35, dadurch gekennzeichnet,
   - dass durch den Quantencomputer (QC) der Fehlerzähler und Einzelfehler aus der Quantencomputerüberwachungsvorrichtung (QUV) auslesbar sind.
   Vorteil dieses Merkmals: Durch diese Eigenschaft kann beispielsweise der Steuerrechner (µC) des Quantencomputers (QC) den derzeitigen Zustand der Quantencomputerüberwachungsvorrichtung (QUV) an eine übergeordnete zentrale Steuereinheit (ZSE) übertragen.
Merkmal 37: Vorrichtung nach einem der Merkmale 28 bis 36, dadurch gekennzeichnet,
   - dass die Quantencomputerüberwachungsvorrichtung (QUV) die Zeitpunkte der Antworten des Quantencomputers (QC) und die Auftragsbestätigungen mittels wenigstens eines internen Zählers (ICNT) oder Zeitgebers bestimmt.
   Vorteil dieses Merkmals: Die Quantencomputerüberwachungsvorrichtung (QUV) kann diese Daten erfassen und/oder statistisch auswerten und/oder an eine übergeordnete zentrale Steuereinheit (ZSE) oder an den Steuerrechner (µC) des Quantencomputers (QC) kommunizieren.
Merkmal 38: Vorrichtung nach einem oder mehreren der Merkmale 27 bis 37, gekennzeichnet dadurch,
   - dass eine Antwort des Quantencomputers (QC) von mindestens einer Manipulation eines Quantenbits des Quantencomputers (QC) abhängt.
   Vorteil dieses Merkmals: Nur auf diese Weise kann die Quantencomputerüberwachungsvorrichtung (QUV) die korrekte Funktion des Quantencomputers (QC) verifizieren.
Merkmal 39: Quantencomputersystem (QUSYS), insbesondere nach einem oder mehreren der vorausgehenden Merkmale 1 bis 38,
   - wobei das : Quantencomputersystem (QUSYS) mindestens zwei Quantencomputern (z.B. QC1, QC2) der Quantencomputer (QC1 bis QC16) des Quantencomputersystems (QUSYS) ausweist, hier
      - einen beispielhaften ersten Quantencomputer (QC1) und
      - einen beispielhaften zweiten Quantencomputer (QC2),
   - wobei über mindestens eine Signalverbindung (DB) von dem ersten Quantencomputer (QC1) eine Signalisierung an den zweiten Quantencomputer (QC2) erfolgen kann.
   Vorteil dieses Merkmals: Dies ist insbesondere dann von Vorteil, wenn die Quantencomputer (QC1, QC2) innerhalb des Quantencomputersystems (QUSYS) sich gegenseitig überwachen sollen.
Merkmal 40: Quantencomputersystem (QUSYS) nach Merkmal 39,
   - wobei die Signalisierung ein Quantencomputerberechnungsergebnis ist und
   - wobei ein Quantencomputerberechnungsergebnis das Berechnungsergebnis des ersten Quantencomputers (QC1) unter Zuhilfenahme mindestens einer Manipulation eines Quantenbits dieses ersten Quantencomputers (QC1) ist.
   Vorteil dieses Merkmals: Dies ist insbesondere dann von Vorteil, wenn die Quantencomputer (QC1 bis QC16) innerhalb des Quantencomputersystems (QUSYS) sich gegenseitig überwachen sollen. Die hier gegenständlichen Merkmale ermöglichen dem jeweils anderen Quantencomputer, beispielsweise dem zweiten Quantencomputer (QC2), die Beurteilung, ob die Quantenoperationen des ersten Quantencomputers (QC1) korrekt ablaufen. Die hier in diesem Dokument beschriebenen Beispiele beziehen sich vorwiegend auf den ersten Quantencomputer (QC1) und den zweiten Quantencomputer (QC2). Die technische Lehre lässt sich typischerweise stets auf andere Paarungen aus zwei Quantencomputern der Quantencomputer (QC1 bis QC16) des Quantencomputersystems (QUSYS) übertragen.
Merkmal 41: Quantencomputersystem (QUSYS) nach Merkmal 40
   - wobei der zweite Quantencomputer (QUC2) das Quantencomputerberechnungsergebnis des ersten Quantencomputers (QC1) mit einem Erwartungswert vergleicht.
   Vorteil dieses Merkmals: Dies ist insbesondere dann von Vorteil, wenn die Quantencomputer (QC1, QC2) innerhalb des Quantencomputersystems (QUSYS) sich gegenseitig überwachen sollen. Die hier gegenständlichen Merkmale ermöglichen dem jeweils anderen, zweiten Quantencomputer (QC2) die Beurteilung, ob die Quantenoperationen des anderen, ersten Quantencomputers (QC1) korrekt ablaufen.
Merkmal 42: Quantencomputersystem (QUSYS) nach Merkmal 41,
   - wobei der Erwartungswert das Quantencomputerberechnungsergebnis einer Quantencomputerberechnung des zweiten Quantencomputers (QC2) oder eines anderen Quantencomputers der Quantencomputer (QC1 bis QC16) des Quantencomputersystems (QUSYS) ist.
   Vorteil dieses Merkmals: Dies ist insbesondere dann von Vorteil, wenn die Quantencomputer (QC1, QC2) innerhalb des Quantencomputersystems (QUSYS) sich gegenseitig überwachen sollen. Die hier gegenständlichen Merkmale ermöglichen dem jeweils anderen zweiten Quantencomputer (QC2) die Beurteilung, ob die Quantenoperationen des anderen ersten Quantencomputers (QC1) korrekt ablaufen. Hier erzeugt der überwachende zweite Quantencomputer (QC2) das Referenzergebnis selbst. Bevorzugt zieht er weitere Ergebnisse anderer Quantencomputer der Quantencomputer (QC1 bis QC169 des Quantencomputersystems (QUSYS) hinzu. Der erste Quantencomputer (QC1) und der zweite Quantencomputer (QC2) können die Rollen auch tauschen.
Merkmal 43: Quantencomputersystem (QUSYS) nach Merkmal 41 oder 42,
   - wobei der zweite Quantencomputer (QC2) das Quantencomputerberechnungsergebnis des Quantencomputers (QC1) überprüft.
   Vorteil dieses Merkmals: Dies ist insbesondere dann von Vorteil, wenn die Quantencomputer (QC1, QC2) innerhalb des Quantencomputersystems (QUSYS) sich gegenseitig überwachen sollen. Die hier gegenständlichen Merkmale ermöglichen dem jeweils anderen zweiten Quantencomputer (QC2) die Beurteilung, ob die Quantenoperationen des anderen ersten Quantencomputers (QC1) korrekt ablaufen.
Merkmal 44: Quantencomputersystem (QUSYS) nach Merkmal 43,
   - wobei der zweite Quantencomputer (QC2) auf einen Fehlerzustand des ersten Quantencomputers (QC1) schließt, wenn das Quantencomputerberechnungsergebnis des ersten Quantencomputers (QC1) nicht innerhalb einer vorbestimmten erlaubten Lösungsmenge für das das Quantencomputerberechnungsergebnis des ersten Quantencomputers (QC1) liegt.
   Vorteil dieses Merkmals: Dies ist insbesondere dann von Vorteil, wenn die Quantencomputer (QC1, QC2) innerhalb des Quantencomputersystems (QUSYS) sich gegenseitig überwachen sollen. Die hier gegenständlichen Merkmale ermöglichen dem jeweils anderen, zweiten Quantencomputer (QUC2) die Beurteilung, ob die Quantenoperationen des anderen ersten Quantencomputers (QC1) korrekt ablaufen und ermöglichen, dass der überwachende zweite Quantencomputer (QC2) bei Fehlern Gegenmaßnahmen durchführt oder einleitet.
Merkmal 45: Quantencomputersystem (QUSYS) nach Merkmal 43 oder 44
   - wobei der zweite Quantencomputer (QC2) eine Statistik mehrerer Ergebnisse gleichartiger Quantencomputerberechnungen des ersten Quantencomputers (QC1) erstellt und auf einen Fehler, insbesondere des ersten Quantencomputers (QC1), schließt, wenn die Quantencomputerberechnungsergebnisse des ersten Quantencomputers (QC1) häufiger als ein vorgegebener Maximalwert von einem erwarteten Quantencomputerberechnungsergebnis des ersten Quantencomputers (QC1) abweichen.
   Vorteil dieses Merkmals: Dies ist insbesondere dann von Vorteil, wenn die Quantencomputer (QC1, QC2) innerhalb des Quantencomputersystems (QUSYS) sich gegenseitig überwachen sollen. Die hier gegenständlichen Merkmale ermöglichen dem jeweils anderen zweiten Quantencomputer (QC2) die Beurteilung, ob die Quantenoperationen des anderen ersten Quantencomputers (QC1) statistisch korrekt ablaufen. Dies löst das Problem, dass Quantencomputerberechnungsergebnisse nur mit gewisser statistischer Wahrscheinlichkeit bestimmt Werte liefern. Eine Abweichung ist also noch kein Fehler, solange die statistische Verteilung im Wesentlichen mit einer erwarteten Verteilung übereinstimmt.
Merkmal 46: Quantencomputersystem (QUSYS) nach einem oder mehreren der Merkmale 43 bis 45,
   - wobei der zweite Quantencomputer (QC2) eine erste Statistik mehrerer Ergebnisse gleichartiger Quantencomputerberechnungen des ersten Quantencomputers (QC1) erstellt und auf einen Fehler schließt, wenn die Quantencomputerberechnungsergebnisse des ersten Quantencomputers (QC1) häufiger als ein vorgegebener Maximalwert von einer zweiten Statistik mehrerer Ergebnisse entsprechender gleichartiger Quantencomputerberechnungen des zweiten Quantencomputers (QC2) oder eines anderen Quantencomputers der Quantencomputer (QC1 bis QC16) des Quantencomputersystems (QUSYS) abweichen.
   Vorteil dieses Merkmals: Dies ist insbesondere dann von Vorteil, wenn die Quantencomputer (QC1, QC2) innerhalb des Quantencomputersystems (QUSYS) sich gegenseitig überwachen sollen. Dabei wenden sie bevorzugt statistische Methoden an, da ja die Ergebnisse der Quantencomputerberechnungen nur mit einer gewissen Wahrscheinlichkeit im Wesentlichen einem vorbestimmbaren Ergebnis entsprechen. Die hier gegenständlichen Merkmale ermöglichen dem jeweils anderen, zweiten Quantencomputer (QC2) die Beurteilung, ob die Quantenoperationen des anderen ersten Quantencomputers (QC1) statistisch korrekt ablaufen. Dies löst das Problem, dass Quantencomputerberechnungsergebnisse nur mit gewisser statistischer Wahrscheinlichkeit bestimmt Werte liefern. Eine Abweichung ist also noch kein Fehler, solange die statistische Verteilung im Wesentlichen mit einer erwarteten Verteilung übereinstimmt.
Merkmal 47: Quantencomputersystem (QUSYS) nach einem oder mehreren der Merkmale Merkmal 43 bis 46
   - wobei der zweite Quantencomputer (QC2) im Falle des Schließens auf einen Fehler dem ersten Quantencomputer (QC1) oder einem anderen Quantencomputer der Quantencomputer (QC1 bis QC16) des Quantencomputersystems (QUSYS) oder einem übergeordneten System (ZSE) das Auftreten dieses Fehlers signalisiert und/oder eine Information über diesen Fehler beispielsweise insbesondere für diese bereithält.
   Vorteil dieses Merkmals: Bevorzugt über wachen sich die Quantencomputer (QC1 bis QC16) eines Quantencomputersystems (QUSYS) gegenseitig. Das kann beispielsweise bedeuten, dass ein erster Quantencomputer (QC1) einen zweiten Quantencomputer (QC2) überwacht und der zweite Quantencomputer (QC2) wieder den ersten Quantencomputer (QC1) überwacht. Ein in diesem Dokument mehrfach beispielhaft verwendetes Quantencomputersystem umfasst eine beispielhafte Anzahl von 16 Quantencomputern (QC1 bis QC16). Der erste Quantencomputer (QC1) kann nun den zweiten Quantencomputer (QC2) überwachen. Der zweite Quantencomputer (QC2) kann den dritten Quantencomputer (QC3) überwachen und so fort. Der fünfzehnte Quantencomputer (QC15) überwacht dann bevorzugt in diesem Beispiel den sechzehnten Quantencomputer (QC16). Der sechzehnte Quantencomputer (QC16) überwacht in diesem Beispiel den ersten Quantencomputer (QC1). Bevorzugt überwacht in diesem Beispiel eine zentrale Steuereinrichtung (ZSE) alle sechzehn Quantencomputer (QC1 bis QC16) bevorzugt parallel dazu.
Merkmal 48: Quantencomputersystem (QUSYS) nach Merkmal 47,
   - wobei der erste Quantencomputer (QC1) durch die Signalisierung des zweiten Quantencomputers (QC2) zurückgesetzt wird oder in einen vordefinierten Zustand versetzt wird oder in einen Zustand aus einer Menge vordefinierter Zustände versetzt wird.
   Vorteil dieses Merkmals: Wenn nun der zweite Quantencomputer (QC2) den ersten Quantencomputer (QC1) überwacht, so agiert der zweite Quantencomputer (QC2) als Quantencomputerüberwachungsvorrichtung (QUV) des ersten Quantencomputers (QC1). Es ist dann sinnvoll, dass der zweite Quantencomputer (QC2) aufgrund statistischer Auswertungen des Verhaltens des ersten Quantencomputers (QC1) auf Fehler dieses ersten Quantencomputers (QC1) schließt, wenn dieses statistische Verhalten auf einen Fehler des ersten Quantencomputers (QC1) schließen lässt. Ein Zurücksetzen des ersten Quantencomputers (QC1) durch den zweiten Quantencomputer (QC2) ist dann eine besonders einfache Maßnahme des zweiten Quantencomputers (QC2) zur Fehlerkorrektur/ Fehlereindämmung.
Merkmal 49: Quantencomputersystem (QUSYS) nach Merkmal 48,
   - wobei der erste Quantencomputer (QC1) im Falle eines Zurücksetzens des ersten Quantencomputers (QC1), insbesondere durch eine Signalisierung einer Quantencomputerüberwachungsvorrichtung (QUV) oder einer übergeordneten zentralen Steuereinheit (ZSE) oder eines anderen Quantencomputer der Quantencomputer (QC1 bis QC16) des Quantencomputersystems (QUSYS) seine Quantenbits in eine vorbestimmte Kombination überlagerter Quantenzustände bringt.
   Vorteil dieses Merkmals: Dieses Merkmal beschreibt etwas detaillierter, was ein Zurücksetzen eines Quantencomputers, hier beispielhaft des ersten Quantencomputers (QC1), bedeutet. Das hier vorgelegte Dokument verweist in diesem Zusammenhang beispielsweise auf das Dokument WO 2021 083 448 A1. Jenes Dokument offenbart eine Methode zum Zurücksetzen der Quantenpunkte für NV-Zentren durch Bestrahlung mit Pumpstrahlung und Abwarten der Relaxationszeit.
Merkmal 50: Quantencomputersystem (QUSYS) nach einem oder mehreren der Merkmale 45 bis 49,
   - wobei der erste Quantencomputer (QC1) beim Auftreten einer von ersten Quantencomputer (QC1) selbst erkannten Fehlfunktion des ersten Quantencomputers (QC1) zur Auslösung einer von dem zweiten Quantencomputer (QC2) stammenden Rücksetz-Funktion eine gezielte Fehlansteuerung des zweiten Quantencomputers (QC2), insbesondere durch Übermittlung eines falschen Quantencomputerberechnungsergebnisses des ersten Quantencomputers (QC1), an den zweiten Quantencomputer (QC2) vornimmt.
   Vorteil dieses Merkmals: in manchen Konstruktionen kann der erste Quantencomputer (QC1) keinen vollständiges Zurücksetzen aller oder der wesentlichen Teilvorrichtungen des ersten Quantencomputers selbstauslösen. Die ihm zugeordnete Quantencomputerüberwachungsvorrichtung (QUV) ist aber bevorzugt genau dazu in der Lage. Für den Fall, dass also der erste Quantencomputer (QC1) einen Fehler erkennt, der ein Zurücksetzen aller und/oder zumindest der wesentlichen Teilvorrichtungen des ersten Quantencomputers (QC1) erfordert, simuliert der erste Quantencomputer (QC1) einen Fehler gegenüber dem zweiten Quantencomputer (QC2), woraufhin dieser zweite Quantencomputer (QC2) einen solchen Fehler erkennt und ein Zurücksetzen aller und/oder zumindest der wesentlichen Teilvorrichtungen des ersten Quantencomputers (QC1) auslöst. Dadurch ist der erste Quantencomputer (QC1) in die Lage versetzt, letztlich doch sich selbst zurückzusetzen. Der zweite Quantencomputer (QC2) kann dabei noch weitere Plausibilitätsüberprüfungen durchführen, um zu verhindern, dass der erste Quantencomputer (QC1) sich versehentlich zurücksetzt. Dies erhöht die Barriere für ein Selbstrücksetzen des ersten Quantencomputers (QC1).
Merkmal 51: Quantencomputersystem (QUSYS) nach einem oder mehreren der Merkmale 43 bis 50,
   - wobei der zweite Quantencomputer (QC2) auf einen Fehler schließt, wenn der erste Quantencomputer (QC1) ein Quantencomputerberechnungsergebnis des ersten Quantencomputers (QC1) vor einem vorbestimmten zweiten Zeitpunkt an den zweiten Quantencomputer (QC2) übermittelt,
   - wobei dieser vorbestimmte zweite Zeitpunkt zeitlich nach dem vorbestimmten Zeitpunkt liegt oder gleich dem vorbestimmten Zeitpunkt ist.
   Vorteil diese Merkmals: Quantencomputer (QC) führen die Quantenberechnungen innerhalb der sogenannten T2-Zeit durch, in der angenommen werden kann, dass die Wahrscheinlichkeit, das eine Verschränkung und/oder Kohärenz von Quantenzuständen nicht verlorengegangen ist, sehr hoch ist. Daher führen Quantencomputer (QC) Quantenberechnungen vorzugsweise zeitlich innerhalb von Zeitscheiben durch. Dabei hat bevorzugt jede Zeitscheibe eine zeitliche Dauer, die zeitlich länger als 0s und zeitlich kürzer als die kürzeste T2-Zeit der beteiligten Quantenbits des betreffenden Quantencomputers (QC) ist. Diese Zeitscheiben zur Berechnung von Quantencomputerberechnungen liegen bei einem Quantencomputer (QC) zeitlich hintereinander und überlappen sich zeitlich nicht. Eine Kernidee der hier vorgestellten technischen Lehre ist es also, dass der erste Quantencomputer (QC) in einer ersten Zeitscheibe eine Quantenberechnung mittels eines Quantencomputerprogramms als Nutzberechnung durchführt und in einer typischerweise nachfolgenden zweiten Zeitscheibe dem zweiten Quantencomputer (QC2) signalisiert, dass er, der erste Quantencomputer (QC1), noch funktioniert. Der erste Quantencomputer (QC1) kann in dieser zweiten Zeitscheibe beispielsweise von dem zweiten Quantencomputer (QC2) vorgegebene, typischerweise einfache Quantencomputerberechnungen durchführen und die Ergebnisse dieser vorgegebenen Quantencomputerberechnungen in dieser zweiten Zeitscheibe an den zweiten Quantencomputer (QC2) signalisieren. Der zweite Quantencomputer (QC2) kann eine Statistik über die Quantencomputerberechnungsergebnisse des ersten Quantencomputers (QC1) führen und auf einen Fehler des ersten Quantencomputers (QC1) schließen, wenn diese Ergebnisse statistisch mehr als Vorgabewerte von statistisch beispielsweise durch den zweiten Quantencomputer (QC2) ermittelten und erwarteten Ergebniswerten dieser Quantencomputerberechnungsergebnisse abweichen. Der zweite Quantencomputer (QC2) kann beispielsweise diese Ergebniswerte selbst durch eine Quantencomputerberechnung zuvor ermitteln. Das zeitlich zu frühe Absetzen einer Botschaft kann auch auf einen Fehler hindeuten, der auf diese Weise detektierbar wird.
Merkmal 52: Quantencomputersystem (QUSYS) nach einem oder mehreren der Merkmale 43 bis 51,
   - wobei der zweite Quantencomputer (QC2) auf einen Fehler schließt, wenn der erste Quantencomputer (QC1) ein Quantencomputerberechnungsergebnis des ersten Quantencomputers (QC1) nach einem vorbestimmten dritten Zeitpunkt an den zweiten Quantencomputer (QC2) übermittelt,
   - wobei dieser vorbestimmte dritte Zeitpunkt zeitlich nach dem vorbestimmten Zeitpunkt liegt oder zeitlich gleich dem vorbestimmten Zeitpunkt ist.
   Vorteil dieses Merkmals: Das zeitlich zu späte Absetzen einer Botschaft an den zweiten Quantencomputer (QC2) durch den ersten Quantencomputer (QC1) kann auch auf einen Fehler des ersten Quantencomputers (QC1) hindeuten, der auf diese Weise detektierbar wird. Ansonsten verweist das hier vorgelegte Dokument auf die Vorteile des vorangehenden Merkmals.
Merkmal 53: Quantencomputersystem (QUSYS) nach einem oder mehreren der Merkmale 39 bis 52
   - wobei der zweite Quantencomputer (QC2) dem ersten Quantencomputer (QC1) vor dem zeitlichen Beginn des vorbestimmten zweiten Zeitraums signalisiert, welche vorbestimmte Quantencomputerberechnung bzw. welche vorbestimmten Quantencomputerberechnungen der erste Quantencomputer (QC1) durchführen soll.
   Vorteil dieses Merkmals: Das zeitlich zu frühe Absetzen einer Botschaft des ersten Quantencomputers (QC1) an den zweiten Quantencomputer (QC2) kann auch auf einen Fehler des ersten Quantencomputers (QC1) hindeuten, der auf diese Weise detektierbar wird.
Merkmal 54: Quantencomputersystem (QUSYS) nach einem oder mehreren der Merkmale 39 bis 53
   - wobei der zweite Quantencomputer (QC2) dem ersten Quantencomputer (QC1) den zeitlichen Beginn und ggf. das zeitliche Ende oder die zeitliche Dauer des vorbestimmten zweiten Zeitraums signalisiert.
   Vorteil dieses Merkmals: Der zweite Quantencomputer (QC2) kann beispielsweise hierdurch den ersten Quantencomputer (QC1) veranlassen, von sich aus Maßnahmen zu ergreifen, wenn er die Anfrage des zweiten Quantencomputers (QC2) nicht rechtzeitig beantwortet. Es ist also ausdrücklich nicht unbedingt notwendig, dass der zweite Quantencomputer (QC2) die Maßnahmen einleitet. Vielmehr kann auch der Steuerrechner (µC1) des ersten Quantencomputers (QC1) eine entsprechende Maßnahme einleiten, falls die Zeit zur Beantwortung einer Anfrage des zweiten Quantencomputers (QC2) verstrichen ist.
Merkmal 55: Quantencomputersystem (QUSYS) nach einem der vorhergehenden Merkmale 39 bis 54, dadurch gekennzeichnet,
   - dass die Fehlansteuerung durch zu häufige Bedienung (Ansteuerung) des zweiten Quantencomputers (QC2) durch den ersten Quantencomputer (QC1) erfolgt.
   Vorteil dieses Merkmals: Sendet beispielsweise der erste Quantencomputer (QC1) das richtige Ergebnis der Quantencomputerberechnung zu häufig, so kann es sich beispielsweise um die Wiederholung eines abgespeicherten Ergebnisses handeln, ohne dass die Berechnung tatsächlich ein zweites Mal durchgeführt wurde. Daher kann der zweite Quantencomputer (QC2) auch dieses Verhalten als ein Fehverhalten des ersten Quantencomputers (QC1) werten.
Merkmal 56: Quantencomputersystem (QUSYS) nach einem der vorhergehenden Merkmale 39 bis 55, dadurch gekennzeichnet,
   - dass der erste Quantencomputer (QC1) eine Überwachung auf eine Fehlfunktion bei sich selbst und/oder bei anderen Bauelementen und/oder Teilvorrichtungen des Quantencomputersystems (QUSYS) vornimmt.
   Vorteil dieses Merkmals: Insbesondere der Steuerrechner (µC1) des ersten Quantencomputers (QC1) kann als Quantencomputerüberwachungsvorrichtung (QUV) für einen den zweiten Quantencomputer (QC2) und/oder für weitere Quantencomputer der Quantencomputer (QC1 bis QC16) des Quantencomputersystems (QUSYS) in einem Quantencomputersystem (QSYS) arbeiten. Mehrere Quantencomputer der Quantencomputer (QC1 bis QC16) des Quantencomputersystems (QUSYS) können sich auf diese Weise gegenseitig überwachen. Dabei agiert jeweils ein Quantencomputer der Quantencomputer (QC1 bis QC16) des Quantencomputersystems (QUSYS) zumindest zeitweise als Quantencomputerüberwachungsvorrichtung (QUV) für einen anderen Quantencomputer der Quantencomputer (QC1 bis QC16) des Quantencomputersystems (QUSYS).
Merkmal 57: Quantencomputersystem (QUSYS), insbesondere nach einem oder mehreren der vorausgehenden Merkmale,
   - mit wenigstens zwei Quantencomputern, einem ersten Quantencomputer (QC1) und einem zweiten Quantencomputer (QC2),
   - mit mehreren Messeinrichtungen zur Erfassung von Betriebsgrößen des Quantencomputersystems (QUSYS) oder einer Vorrichtung oder eines Systems,
   - wobei ggf. die Zustände der Vorrichtung bzw. des Systems von dem Quantencomputersystem (QUSYS) abhängen,
   - wobei die der erste Quantencomputer (QC1) zumindest zweitweise die gleiche Quantencomputerberechnung durchführt, die der zweite Quantencomputer (QC2) durchführt und
   - wobei die Quantencomputerberechnung eine Überwachungsmaßnahme zur Überprüfung der Funktionsfähigkeit des jeweiligen Quantencomputers (QC1, QC2) umfasst,
   - wobei der erste Quantencomputer (QC1) die Quantencomputerberechnung des ersten Quantencomputers (QC1) unabhängig von der Quantencomputerberechnung des zweiten Quantencomputers (QC2) durchführt.
   Vorteil dieses Merkmals: Die Quantencomputer (QC1, QC2) überwachen sich gegenseitig. Bevorzugt umfasst dazu das Quantencomputersystem (QUSYS) mehr als zwei Quantencomputer. Bevorzugt ist die Anzahl der Quantencomputer in dem Quantencomputersystem (QUSYS) ungerade, sodass sich immer eine Mehrheit für das richtige Quantencomputerberechnungsergebnis ergibt. Hierdurch kann ein besonders sicheres Quantencomputersystem (QUSYS) im Raummultiplex verwirklicht werden. Hardware-Defekte der Quantencomputer eines Quantencomputersystems (QUSYS) sind im zeitmultiplex zur Fehlerreduktion nämlich nicht erkennbar.
Merkmal 58: Quantencomputersystem (QUSYS) nach Merkmal 57, dadurch gekennzeichnet,
   - dass der erste Quantencomputer (QC1) die Überwachungsmaßnahme durchführt und dass der zweite Quantencomputer (QC2) eine dieser Überwachungsmaßnahme entsprechende äquivalente Überwachungsmaßnahme in einfacherer Ausführung bzw. einer anderen Strategie folgend auf einem redundanten Pfad durchführt.
   Vorteil dieses Merkmals: Diese Maßnahmen schließen aus, dass systematische Fehler der Überprüfungsmethodik die der jeweilige Quantencomputer der Quantencomputer (QC1 bis QC16) des Quantencomputersystems (QUSYS) in seiner Rolle als Quantencomputerüberwachungsvorrichtung (QUV) für den anderen Quantencomputer der Quantencomputer (QC1 bis QC16) des Quantencomputersystems (QUSYS) einen Fehler eines Quantencomputers der Quantencomputer (QC1 bis QC16) des Quantencomputersystems (QUSYS) unentdeckt lassen.
Merkmal 59: Quantencomputersystem (QUSYS) nach einem der vorhergehenden Merkmale 57 bis 58, dadurch gekennzeichnet,
   - dass der erste Quantencomputer (QC1) eine Überwachungsmaßnahme anhand der Differenz zwischen einem in Abhängigkeit von einem vorgebbaren oder einspeisbaren Sollwert und einem Istwert eines Regelkreises eines Stellelements vornimmt,
   - während der zweite Quantencomputer (QC2) Überwachungsmaßnahmen einfacherer Art anhand eines Plausibilitätsvergleichs zwischen dem vorgebbaren oder einspeisbaren Sollwert, vorzugsweise der Stellung eines Bedienelements, und der Stellung des Stellelements durchführt.
   Vorteil dieses Merkmals: Diese Maßnahmen schließen aus, dass systematische Fehler der Überprüfungsmethodik die der jeweilige Quantencomputer der Quantencomputer (QC1 bis QC16) des Quantencomputersystems (QUSYS) in seiner Rolle als Quantencomputerüberwachungsvorrichtung (QUV) für den anderen Quantencomputer der Quantencomputer (QC1 bis QC16) des Quantencomputersystems (QUSYS) einen Fehler eines Quantencomputers der Quantencomputer (QC1 bis QC16) des Quantencomputersystems (QUSYS) unentdeckt lassen.
Merkmal 60: Quantencomputersystem (QUSYS) nach einem der vorhergehenden Merkmale 57 bis 59, dadurch gekennzeichnet,
   - dass sich die Quantencomputer der Quantencomputer (QC1 bis QC16) des Quantencomputersystems (QUSYS) gegenseitig durch Datenaustausch über eine Datenschnittstelle überwachen.
   Vorteil dieses Merkmals: Auf diese Weise können die Quantencomputer der Quantencomputer (QC1 bis QC16) des Quantencomputersystems (QUSYS) in ihren Rollen als Quantencomputerüberwachungsvorrichtung (QUV) anderer Quantencomputer der Quantencomputer (QC1 bis QC16) des Quantencomputersystems (QUSYS) sich untereinander abstimmen.
Merkmal 61: Quantencomputersystem (QUSYS) nach einem der vorhergehenden Merkmale 57 bis 61, dadurch gekennzeichnet,
   - dass das Quantencomputersystem einen ersten Quantencomputer (QC1) und einen zweiten Quantencomputer (QC2) umfasst und
   - dass der erste Quantencomputer (QC1) und der zweite Quantencomputer (QC2) Zugriff zu einer Treiberstufe für das Stellelement haben und im erkannten Fehlerfall bei Unplausibilitäten in Bezug auf den Regelkreis und der Stellungssignale unabhängig voneinander gemäß dem Ergebnis der ihnen jeweils zugeordneten Überwachungsmaßnahmen die Treiberstufe abschalten oder in einen sicheren Zustand bringen und sich diese Quantencomputer (QC1, QC2) insbesondere über das negative Ergebnis ihrer Überwachungen gegenseitig unterrichten.
   Vorteil dieses Merkmals: Durch diese Redundanz verhindert das Quantencomputersystem (QUSYS), dass ein einzelner fehlerhafter Quantencomputer der Quantencomputer (QC1 bis QC16) des Quantencomputersystems (QUSYS) ein sicherheitsrelevantes Stellsystem in einen nicht sicheren Zustand bringen kann. Hierfür müssen zwei Quantencomputer (QC1, QC2) mit einer bevorzugt ausreichenden statistischen Wahrscheinlichkeit ein Ergebnis erzielt haben, dass die Aktivierung eines nicht sicheren Systemzustands angezeigt erscheinen lässt. Bevorzugt aktiviert jeder der Quantencomputer (QC1, QC2) jeweils ein diesem Quantencomputer zugeordnetes Stellelement. Nur wenn beide Stellelemente aktiviert sind, kann der nicht sicher Systemzustand aktiviert werden oder wird der nicht sichere Systemzustand aktiviert. Systeme mit mehr als zwei Quantencomputer und mehr als zwei Stellelementen sind denkbar.
Merkmal 62: Quantencomputersystem (QUSYS) nach einem der vorhergehenden Merkmale 57 bis 61, dadurch gekennzeichnet,
   - dass im Fehlerfall der erste Quantencomputer (QC1) in die Energiezufuhr eines Anwendungssystems oder in das Anwendungssystem selbst eingreift.

   Vorteil dieses Merkmals: Die sicherste Methode zur Verhinderung unsicher Zustände ist in vielen Fällen
      a) das Unterbrechen der Energiezufuhr des Quantencomputersystems (QUSYS) und/oder
      b) das Unterbrechen der Energiezufuhr von Teilvorrichtungen des Quantencomputersystems (QUSYS) und/oder
      c) das Unterbrechen der Energiezufuhr von betroffenen Quantencomputern der Quantencomputer (QC1 bis QC16) des Quantencomputersystems (QUSYS) und/oder
      d) das Unterbrechen der Energiezufuhr von Teilvorrichtungen der betroffenen Quantencomputern der Quantencomputer (QC1 bis QC16) des Quantencomputersystems (QUSYS) und/oder
      e) das Unterbrechen der Energiezufuhr von anderen Vorrichtungen, die von diesen gesteuert werden.
   Grundsätzlich sollte nämlich jedes System so ausgelegt sein, dass ein Verlust der Energiezufuhr zu einem sicheren Zustand führt. In Ausnahmefällen kann dies jedoch auch nicht der Fall sein.
Merkmal 63: Quantencomputersystem (QUSYS) nach einem der vorhergehenden Merkmale 57 bis 62, dadurch gekennzeichnet,
   - dass im zweiten Quantencomputer (QC2) Plausibilitätsüberprüfungen zum Ein- bzw. Ausschalten eines Reglers des Anwendungssystems durchgeführt werden.
   Vorteil dieses Merkmals: Auch wenn der erste Quantencomputer (QC1) funktioniert und ein Ergebnis geliefert hat, so kann dieses Ergebnis doch außerhalb eines erlaubten Bereiches liegen. Dabei können die Kriterien ganz andere sein als die Kriterien, die der Quantencomputerberechnung zugrunde lagen. Beispielsweis könnte eine Quantencomputerberechnung des ersten Quantencomputers (QC1) ergeben, dass das Anwendungssystem, das der erste Quantencomputer (QC1) und/oder das Quantencomputersystem (QUSYS) steuert, nun 10kV an ein Bauteil als elektrische Spannung anlegen soll. Da das Anwendungssystem aber nur 50V liefern kann, ist es sinnvoll, wenn der Steuerrechner (µC2) des zweiten Quantencomputers (QC2) den Wert dann auf den realisierbaren Wert begrenzt. Ganz besonders gilt dies für Sicherheitsgrenzen, die beispielsweise unbedingt eingehalten werden müssen.
Merkmal 64: Quantencomputersystem (QUSYS) nach einem der vorhergehenden Merkmale 57 bis 63, dadurch gekennzeichnet,
   - dass die Plausibilitätsprüfungen zumindest eine oder mehrere Quantencomputerberechnung umfassen, die zumindest eine Manipulation eines Quantenbits des zweiten Quantencomputers (QC2) umfasst bzw. umfassen.
   Vorteil dieses Merkmals: Der zweite Quantencomputer (QUC2) kann während der Plausibilitätsüberprüfung mittels eines Quantencomputerprogramms beispielsweise selbst eine Quantencomputerberechnung zur Ermittlung von Plausibilitätsgrenzen durchführen. Dies ist insbesondere dann von Vorteil, wenn die Plausibilitätsprüfung selbst die Lösung eines NP-vollständigen Problems erfordert oder wünschenswert erscheinen lässt.
Merkmal 65: Verfahren zur Überwachung des Ablaufs eines auf mindestens einem Steuerrechner (µC) eines Quantencomputers (QC) ablauffähigen Quantencomputerprogramms mittels einer Quantencomputerüberwachungsvorrichtung (QUV) des Quantencomputers (QC),
   - wobei der Quantencomputer (QC) Quantenbits und den Steuerrechner (µC) und erste Mittel zur Manipulation von Quantenbits des Quantencomputers (QC) und zweite Mittel zum Auslesen des Zustands von Quantenbits des Quantencomputers (QC) umfasst und
   - wobei die ersten Mittel zur Manipulation von Quantenbits des Quantencomputers (QC) und die zweiten Mittel zum Auslesen des Zustands von Quantenbits des Quantencomputers (QC) durch den Steuerrechner (µC) gesteuert werden und
   - wobei von der Quantencomputerüberwachungsvorrichtung (QUV)
      - beim einer Manipulation einer vorbestimmten oder festgelegten Teilmenge der Quantenbits aus der Menge der Quantenbits des Quantencomputers (QC) während der Quantencomputerprogrammlaufzeit eine Ausnahmebedingung (Exception), insbesondere eine Unterbrechung (Interrupt) des Quantencomputerprogrammablaufs, ausgelöst wird.
   Vorteil dieses Merkmals: Bevorzugt sollen sich vorbestimmte Quantenoperationen des Quantencomputers (QC) nicht auf alle Quantenbits auswirken. Typischerweise umfassen die Quantencomputer (QC1 bis QC16) des Quantencomputersystems (QUSYS) Ansteuereinheiten als erste Mittel (M1), wie beispielsweise horizontale Treiberstufen (z.B. Bezugszeichen HD1 bis HD3 der Figur 23 der WO 2021 083 448 A1) und/oder die vertikale Treiberstufen (z.B. Bezugszeichen VD1 der Figur 23 der WO 2021 083 448 A1), die den Signalverlauf auf den Steuerleitungen, beispielsweise horizontalen Steuerleitungen (z.B. Bezugszeichen LH1 bis LH3 der Figur 23 der WO 2021 083 448 A1) und/oder horizontalen Abschirmleitungen (z.B. Bezugszeichen SH1 bis SH4 der Figur 23 der WO 2021 083 448 A1) und/oder beispielsweise vertikalen Steuerleitungen (z.B. Bezugszeichen LV1 der Figur 23 der WO 2021 083 448 A1) und/oder vertikalen Abschirmleitungen (z.B. Bezugszeichen SV1 bis SV2 der Figur 23 der WO 2021 083 448 A1), treiben. Typischerweise umfassen die Quantencomputer (QC1 bis QC16) des Quantencomputersystems (QUSYS) Auswerteinheiten, wie beispielsweise horizontale Empfängerstufen (z.B. Bezugszeichen HS1 bis HS3 der Figur 23 der WO 2021 083 448 A1) und/oder die vertikale Empfängerstufen (z.B. Bezugszeichen VS1 der Figur 23 der WO 2021 083 448 A1), die den Signalverlauf auf den Steuerleitungen, beispielsweise horizontalen Steuerleitungen (z.B. Bezugszeichen LH1 bis LH3 der Figur 23 der WO 2021 083 448 A1) und/oder horizontalen Abschirmleitungen (z.B. Bezugszeichen SH1 bis SH4 der Figur 23 der WO 2021 083 448 A1) und/oder beispielsweise vertikalen Steuerleitungen (z.B. Bezugszeichen LV1 der Figur 23 der WO 2021 083 448 A1) und/oder vertikalen Abschirmleitungen (z.B. Bezugszeichen SV1 bis SV2 der Figur 23 der WO 2021 083 448 A1), erfassen und auswerten. Die Quantencomputerüberwachungsvorrichtung (QUV) kann also diese Ansteuerungsmittel - erste Mittel M1 - des Quantencomputers (QC) mittels zweiter Mittel (M2) beobachten und auf die Manipulation der Quantenbits des Quantencomputers schließen. Auch kann die Quantencomputerüberwachungsvorrichtung (QUV) die Signalisierungen des Steuerrechners (µC) und damit dessen Quantencomputerprogrammablauf beobachten. Führen einer oder mehrere dieser Signalverläufe zu der Annahme eines Zugriffs auf ein oder mehrere Quantenbits, die nicht angesteuert werden sollen, so kann die Quantencomputerüberwachungsvorrichtung (QUV) insbesondere mittels solcher Auswerteeinheiten dies erfassen und als "Assertion", also einen unzulässigen Zugriff, oder nur als Messwert etc. erfassen. Die Quantencomputerüberwachungsvorrichtung (QUV) überprüft vorzugsweise, ob eine Ausnahmebedingung (Exception) vorliegt und ergreift Maßnahmen bevorzugt in Abhängigkeit von der Art der erfüllten Ausnahmebedingung. Diese Maßnahmen können verschiedener Art sein. Die einfachste ist ein Zurücksetzen des betroffenen Quantencomputers (QC). Eine Maßnahme kann aber auch das Rücksetzen eines einzelnen Quantenbits oder die besagte Unterbrechung des Quantencomputerprogrammablaufs oder eine erzwungene Veränderung des vorgesehenen Quantencomputerprogrammablaufs (Branch) oder ein Zurücksetzen des Steuerrechners (µC) des Quantencomputers (QC) sein. Hierdurch verhindert der Quantencomputer (QC) im Zusammenwirken mit der Quantencomputerüberwachungsvorrichtung (QUV), dass solche Störungen zur fehlerhaften Quantencomputerberechnungsergebnissen führen, die das Quantencomputersystem (QUSYS) dann fehlerhaft weiterverwendet. Dies verhindert die weitere Ausbreitung der Fehler.
Merkmal 66: Verfahren nach Merkmal 65, dadurch gekennzeichnet,
   dass von der Quantencomputerüberwachungsvorrichtung (QUV)
      - beim Zugriff auf einen bestimmten Adressbereich (AB) während der Quantencomputerprogrammlaufzeit eine Ausnahmebedingung (Exception), insbesondere eine Unterbrechung (Interrupt) des Quantencomputerprogrammablaufs, ausgelöst wird.
   Vorteil des Merkmals: Hierdurch verhindert der Quantencomputer (QC) im Zusammenwirken mit der Quantencomputerüberwachungsvorrichtung (QUV), dass Störungen die zu fehlerhaften Zugriffen auf den Speicherort des Quantencomputerprogramms in dem Speicher des Steuerrechners (µC) führten, zur fehlerhaften Quantencomputerberechnungsergebnissen führen, die das Quantencomputersystem (QUSYS) dann fehlerhaft weiterverwendet. Dies verhindert die weitere Ausbreitung der Fehler.
Merkmal 67: Verfahren nach einem oder mehreren der Merkmale 65 bis 66, dadurch gekennzeichnet,
   - dass von dem Steuerrechner (µC) des Quantencomputers (QC) nach dem Auslösen einer Ausnahmebedingung während der Quantencomputerprogrammlaufzeit eine Ausnahmebedingungs-Routine (Exception-Routine) durchlaufen wird.
   Vorteil dieses Merkmals: Wie oben bereits bei Merkmal 65 erwähnt ist eine erzwungene Verzweigung des Quantencomputerprogramms bei einem fehlerhaften Zugriff auf den Speicher und/oder auf Quantenbits (QUB) des Quantencomputers (QC) und/oder auf besonders geschützte Quantenbits (QUP) der Quantenbits (QUB) des Quantencomputers (QC) eine mögliche Maßnahme.
Merkmal 68: Verfahren nach Merkmal 67, dadurch gekennzeichnet,
   gekennzeichnet dadurch,
   - dass die Ausnahmebedingungs-Routine (Exception-Routine) zumindest eine Quantenoperation zur Manipulation zumindest eines Quantenbits des Quantencomputers (QC) umfasst.
   Vorteil dieses Merkmals: Es ist besonders vorteilhaft, wenn durch eine vorbestimmte Sequenz das gestörte Quantenbit in einen vordefinierten Zustand gebracht wird. In manchen Fällen können dann die Berechnungsergebnisse der anderen Quantenbits weiterverwendet werden. Dies ist jedoch nicht immer der Fall. Eine andere mögliche Quantenoperation ist die Re-Initialisierung aller Quantenbits des Quantencomputers (QC) und ein folgender Neustart des Quantenprogramms des Quantencomputers (QC).
Merkmal 69: Verfahren nach einem oder mehreren der Merkmale 65 bis 68 , dadurch gekennzeichnet,
   - dass die Quantencomputerüberwachungsvorrichtung (QUV) von dem Steuerrechner (µC) des Quantencomputers (µC) oder einer zentralen Steuereinheit (ZSE) oder eines Steuerrechners (µC1 bis µC16) eines anderen Quantencomputers der Quantencomputer (QC1 bis Qc16) des Quantencomputersystems (QUSYS) oder einem anderen Rechnersystem konfiguriert wird.
   Vorteil dieses Merkmals: Bevorzugt ist das Quantencomputersystem (QUSYS) so ausgelegt, dass ein Quantencomputer der Quantencomputer (QC1 bis Qc16) des Quantencomputersystems (QUSYS) die ihm zugeordnete Quantencomputerüberwachungsvorrichtung (QUV) nicht konfigurieren kann, um sicherzustellen, dass die Quantencomputer (QC1 bis Qc16) des Quantencomputersystems (QUSYS) im Falle einer Störung nicht ihre eigene Quantencomputerüberwachungsvorrichtung (QUV) abschalten können oder unwirksam machen können oder in ihrer Wirkung einschränken oder sonst wie umgehen können. Hierdurch ist dies unwahrscheinlicher.
Merkmal 70: Verfahren nach Merkmal 69, dadurch gekennzeichnet,
   - dass die Quantencomputerüberwachungsvorrichtung (QUV) während des Hochfahrens des Quantencomputers (QC) konfiguriert wird.
   Vorteil des Merkmals: Hierdurch ist die korrekte Ausführung des Quantencomputerprogramms durch den jeweiligen Quantencomputer (QC), den die jeweilige Quantencomputerüberwachungsvorrichtung (QUV) überwacht, von Beginn an abgesichert.
Merkmal 71: Verfahren nach einem oder mehreren der Merkmale 65 bis 70, dadurch gekennzeichnet,
   - dass der Quantencomputer (QC) während des Durchlaufs der Exception-Routine rückgesetzt wird und
   - dass der Quantencomputer (QC) während des Durchlaufs der Exception-Routine erneut hochgefahren wird und
   - dass das überwachte Quantencomputerprogramm des Quantencomputers (QC) während des Durchlaufs der Exception-Routine initialisiert wird.
   Vorteil des Merkmals: Hierzu verweist dieses Dokument auf die obigen Ausführungen. Hier handelt es sich um spezielle Maßnahmen der Quantencomputerüberwachungsvorrichtung (QUV).
Merkmal 74: Verfahren nach Merkmal71, dadurch gekennzeichnet,
   - dass vor dem Rücksetzen und dem erneuten Hochfahren des Quantencomputers (QC) und vor der Initialisierung des Quantencomputerprogramms zumindest die Art des Fehlerzustandes, insbesondere durch den Steuerrechner (µC), in einem Fehlerspeicher, insbesondere innerhalb eines Speichers (MEM) des Quantencomputers (QC), abgelegt wird.
   Vorteil des Merkmals: Diese Erstellung eines Log-Files oder ähnlicher Datensätze oder Informationszusammenstellung ermöglich eine Analyse der auftretenden Fehler und erleichtert die Fehlersuche.
Merkmal 73: Verfahren nach Merkmal 72, dadurch gekennzeichnet,
   - dass vor dem Rücksetzen und dem erneuten Hochfahren des Quantencomputers (QC) und vor der Initialisierung des Quantencomputerprogramms die Speicheradresse, auf die durch den Steuerrechner (µC) vor Auftreten des Fehlerzustandes zugegriffen wurde, insbesondere durch den Steuerrechner (µC), in dem Fehlerspeicher insbesondere innerhalb eines Speichers (MEM) des Quantencomputers (QC) abgelegt wird.
   Vorteil des Merkmals: Diese Erstellung eines Log-Files oder ähnlicher Datensätze oder Informationszusammenstellung ermöglich eine Analyse der auftretenden Fehler und erleichtert die Fehlersuche.
Merkmal 74: Verfahren nach einem der Merkmale 65 bis 73, dadurch gekennzeichnet,
   - dass von der Quantencomputerüberwachungsvorrichtung (QUV) überwacht wird, ob das Quantencomputerprogramm während der Quantencomputerprogrammlaufzeit auf einen vorgebbaren Adressbereich (AB) eines Speichers (MEM) des Quantencomputers (QC) zugreift.
   Vorteil des Merkmals: Hierdurch verhindert der Quantencomputer (QC) im Zusammenwirken mit der Quantencomputerüberwachungsvorrichtung (QUV), dass Störungen die zu fehlerhaften Zugriffen auf den Speicherort des Quantencomputerprogramms in dem Speicher des Steuerrechners (µC) führten, zur fehlerhaften Quantencomputerberechnungsergebnissen führen, die das Quantencomputersystem (QUSYS) dann fehlerhaft weiterverwendet. Dies verhindert die weitere Ausbreitung der Fehler.
Merkmal 75: Verfahren nach Merkmal 74, dadurch gekennzeichnet,
   - dass von der Quantencomputerüberwachungsvorrichtung (QUV) überwacht wird, ob das Quantencomputerprogramm während der Quantencomputerprogrammlaufzeit auf einen Adressbereich (AB) eines Stacks des Quantencomputers (QC) innerhalb eines Speichers (MEM) des Quantencomputers (QC) jenseits einer vorgebbaren maximalen Stack-Größe, die insbesondere einem vorgebbaren Adressbereich (AB) entsprechen kann, zugreift.
   Vorteil des Merkmals: Hierdurch verhindert der Quantencomputer (QC) im Zusammenwirken mit der Quantencomputerüberwachungsvorrichtung (QUV), dass Störungen die zu fehlerhaften Zugriffen auf den Speicherort des Quantencomputerprogramms in dem Speicher des Steuerrechners (µC) führten, zur fehlerhaften Quantencomputerberechnungsergebnissen führen, die das Quantencomputersystem (QUSYS) dann fehlerhaft weiterverwendet. Dies verhindert die weitere Ausbreitung der Fehler.
Merkmal 76: Verfahren nach einem der Merkmale 65 bis 75, dadurch gekennzeichnet,
   - dass von der Quantencomputerüberwachungsvorrichtung (QUV) überwacht wird, ob das Quantencomputerprogramm während der Quantencomputerprogrammlaufzeit den Steuerrechner (µC) dazu veranlasst, mittels der ersten Mittel eine vorgebbare Teilmenge von Quantenbits der Quantenbits des Quantencomputers (QC) mittels einer Quantenbitoperation zu manipulieren.
   Vorteil dieses Merkmals: Die Quantencomputerüberwachungsvorrichtung (QUV) kann eine Überwachung wie im Zusammenhang mit Merkmal 65 beschrieben durchführen. Die Quantencomputerüberwachungsvorrichtung (QUV) kann aber auch die Kommunikation und die Signalisierungen des Steuerrechners (µC) überwachen und kontrollieren, ob diese mit Erwartungswerten übereinstimmen. Die Quantencomputerüberwachungsvorrichtung (QUV) kann als beispielsweise ein Klon des Steuerrechners (µC) sein, der alle Schritte des Steuerrechners (µC) nachvollzieht und parallel zum Steuerrechner (µC) arbeitet. Bei Unterschieden in den Signalisierungen und in der Kommunikation kann die Quantencomputerüberwachungsvorrichtung (QUV) dann auf einen potenziell fehlerhaften Zustand des Steuerrechners (µC) und/oder ihrer selbst schließen. Führt ein Signalverlauf zu einem Zugriff auf ein Quantenbit des Quantencomputers (QC), das nicht angesteuert werden soll oder sogar ein besonders geschützte Quantenbit (QUP) ist, so kann die Quantencomputerüberwachungsvorrichtung (QUV) dies als "Assertion", also einen unzulässigen Zugriff, oder erfassen. Die Quantencomputerüberwachungsvorrichtung (QUV) überprüft vorzugsweise, ob eine Ausnahmebedingung (Exception) vorliegt und ergreift Maßnahmen bevorzugt in Abhängigkeit von der Art der erfüllten Ausnahmebedingung. Diese Maßnahmen können verschiedener Art sein. Die einfachste ist ein Zurücksetzen des betroffenen Quantencomputers der Quantencomputer (QC1 bis QC16) des Quantencomputersystems (QUSYS). Eine Maßnahme kann aber auch das Rücksetzen eines einzelnen Quantenbits oder die besagte Unterbrechung des Quantencomputerprogrammablaufs oder eine erzwungene Veränderung des vorgesehenen Quantencomputerprogrammablaufs (Branch) ein. Hierdurch verhindert der Quantencomputer (QC) im Zusammenwirken mit der Quantencomputerüberwachungsvorrichtung (QUV), dass solche Störungen zur fehlerhaften Quantencomputerberechnungsergebnissen führen, die das Quantencomputersystem (QUSYS) dann fehlerhaft weiterverwendet. Dies verhindert die weitere Ausbreitung der Fehler.
Merkmal 77: Verfahren nach Merkmal 76, dadurch gekennzeichnet,
   - dass von der Quantencomputerüberwachungsvorrichtung (QUV) überwacht wird, ob das Quantencomputerprogramm während der Quantencomputerprogrammlaufzeit den Steuerrechner (µC) des Quantencomputers (QC) dazu zu veranlassen mittels erster Mittel Quantenbits des Quantencomputers (QC) zu manipulieren, die nicht Teil der vorgebbaren Teilmenge von Quantenbits der Quantenbits des Quantencomputers (QC) sind.
   Vorteil auch dieses Merkmals: Die Quantencomputerüberwachungsvorrichtung (QUV) kann eine Überwachung wie im Zusammenhang mit Merkmal 65 beschrieben durchführen. Die Quantencomputerüberwachungsvorrichtung (QUV) kann aber auch die Kommunikation und die Signalisierungen des Steuerrechners (µC) überwachen und kontrollieren, ob diese mit Erwartungswerten übereinstimmen. Die Quantencomputerüberwachungsvorrichtung (QUV) kann als beispielsweise ein Klon des Steuerrechners (µC) sein, der alle Schritte des Steuerrechners (µC) nachvollzieht und parallel zum Steuerrechner (µC) arbeitet. Bei Unterschieden in den Signalisierungen und in der Kommunikation kann die Quantencomputerüberwachungsvorrichtung (QUV) dann auf einen potenziell fehlerhaften Zustand des Steuerrechners (µC) und/oder ihrer selbst schließen. Führt ein Signalverlauf zu einem Zugriff auf ein Quantenbit (QUB) des Quantencomputers (QC), das nicht angesteuert werden soll und/oder ein besonders geschützte Quantenbit (QUP) ist, so kann die Quantencomputerüberwachungsvorrichtung (QUV) dies als "Assertion", also einen unzulässigen Zugriff, oder erfassen. Die Quantencomputerüberwachungsvorrichtung (QUV) überprüft vorzugsweise, ob eine Ausnahmebedingung (Exception) vorliegt und ergreift Maßnahmen bevorzugt in Abhängigkeit von der Art der erfüllten Ausnahmebedingung. Diese Maßnahmen können verschiedener Art sein. Die einfachste ist ein Zurücksetzen des betroffenen Quantencomputers der Quantencomputer (QC1 bis QC16) des Quantencomputersystems (QUSYS). Eine Maßnahme kann aber auch das Rücksetzen eines einzelnen Quantenbits oder die besagte Unterbrechung des Quantencomputerprogrammablaufs oder eine erzwungene Veränderung des vorgesehenen Quantencomputerprogrammablaufs (Branch) ein. Hierdurch verhindert der Quantencomputer (QC) im Zusammenwirken mit der Quantencomputerüberwachungsvorrichtung (QUSYS), dass solche Störungen zur fehlerhaften Quantencomputerberechnungsergebnissen führen, die das Quantencomputersystem (QUSYS) dann fehlerhaft weiterverwendet. Dies verhindert die weitere Ausbreitung der Fehler.
Merkmal 78: Verfahren nach einem der Merkmale 65 bis 73, dadurch gekennzeichnet,
   - dass von der Quantencomputerüberwachungsvorrichtung (QUV) überwacht wird, ob während der Quantencomputerprogrammlaufzeit, insbesondere durch den Steuerrechner (µC), versucht wird, eine aus einem nicht flüchtigen Speicher (NVM) des Quantencomputers (QC) in einen Random-Access-Speicher (RAM) des Quantencomputers (QC) ausgelagerte Code-Sequenz des Quantencomputerprogramms in dem nicht flüchtigen Speicher (NVM) zur Ausführung zu bringen.
   Vorteil dieses Merkmals: Die Quantencomputerüberwachungsvorrichtung (QUV) kann so den versehentlichen Start einer solchen Code-Sequenz verhindern oder das Unterlassen eines beabsichtigten Starts einer solchen Code-Sequenz erfassen und melden. Auf diese Weise ist sichergestellt, dass die Manipulation der Quantenbits des Quantencomputers (QC) genauso, wie vorgesehen abläuft, auch wenn der Quantencomputer (QC) aus welchen Gründen auch immer gestört wird.
Merkmal 79: Steuerelement (NVM), insbesondere Read-Only-Memory oder Flash-Memory oder nicht flüchtiger Speicher, für einen Quantencomputer (QC) insbesondere eines Steuergeräts (SG) eines Fahrzeugs,
   - wobei auf dem Steuerelement (NVM) ein Quantencomputerprogramm abgespeichert ist, das auf mindestens einem Steuerrechner (µC) des Quantencomputers (QC) ablauffähig und zur Ausführung eines Verfahrens nach einem der Merkmale 0 bis 0 geeignet ist.
   Vorteil dieses Merkmals: Sofern dieses Merkmal vorliegt, ist es nicht notwendig, das Quantencomputerprogramm in den Speicher des Steuerrechners (µC) über den Datenbus herunterzuladen.
Merkmal 80: Quantencomputer (QC) mit mindestens einem Steuerrechner (µC) und einer Quantencomputerüberwachungsvorrichtung (QUV),
   - wobei auf dem mindestens einen Steuerrechner (µC) ein Quantencomputerprogramm ablauffähig ist und
   - wobei die Quantencomputerüberwachungsvorrichtung (QUV) den Ablauf des Quantencomputerprogramms während der Quantencomputerprogrammlaufzeit überwacht und
   - wobei die Quantencomputerüberwachungsvorrichtung (QUV) bei einem Zugriff des Steuerrechners (µC) auf einen bestimmten Adressbereich (AB) innerhalb eines Speichers (MEM) des Quantencomputers (QC) eine Ausnahmebedingung (Exception), insbesondere eine Unterbrechung (Interrupt) des Quantencomputerprogrammablaufs, auslöst,
      dadurch gekennzeichnet,
   - dass der Steuerrechner (µC) oder eine zentrale Steuereinheit (ZSE) oder ein anderes Rechnersystem die Quantencomputerüberwachungsvorrichtung (QUV) konfiguriert und
   - dass der Quantencomputer (QC) Mittel zum Durchlaufen einer Ausnahmebedingungs-Routine (Exception-Routine) nach dem Auslösen einer Ausnahmebedingung während der Quantencomputerprogrammlaufzeit aufweist.
   Vorteil dieses Merkmals: Bevorzugt kann die Quantencomputerüberwachungsvorrichtung (QUV) eine Reset-Logik oder eine Interrupt-Logik des Steuerrechners (µC) ansteuern, die den Programm-Pointer und/oder Stack-Pointer des Steuerrechners (µC) auf vorbestimmte Werte setzten. Andere Wirkungen dieser Mittel der die Quantencomputerüberwachungsvorrichtung (QUV) und andere Mittel der die Quantencomputerüberwachungsvorrichtung (QUV) zur Beeinflussung des Quantencomputerprogrammablaufs des Steuerrechners (µC) sind denkbar.
Merkmal 81: Quantencomputer (QC) nach Merkmal 80, dadurch gekennzeichnet,
   - dass der Quantencomputer (QC) weitere Mittel zur Ausführung eines Verfahrens nach einem der Merkmale 0 bis 0 aufweist.
   Vorteile dieses Merkmals: Durch die Kombination der Merkmale 65 bis 78 und des Merkmals 80 ist eine ungewollte Manipulation von Quantenbits und/oder die Ausgabe eines falschen Quantencomputerberechnungsergebnisses unwahrscheinlich. Die natürliche Fehlerquote von Quantencomputerberechnungen wird hierdurch allerdings nicht gesenkt.
Merkmal 82: Verfahren zum Betrieb eines Quantencomputersystems (QUSYS)
   - mit einem Quantencomputer (QC) und
   - mit einer Quantencomputerüberwachungsvorrichtung (QUV),
      mit den Schritten
   - Überwachen des korrekten Quantencomputerprogrammablaufs des Quantencomputerprogramms des Quantencomputers (QC), insbesondere durch die Quantencomputerüberwachungsvorrichtung (QUV), und
   - Durchführen vorbestimmter Quantencomputerberechnungen mit mindestens einer Quantenoperation zur Berechnung vorbestimmter Quantencomputerberechnungsergebnisse in vorbestimmten Zeiträumen vor vorbestimmten Zeitpunkten, insbesondere durch den Quantencomputer (QC), und
   - Ansteuern einer Quantencomputerüberwachungsvorrichtung (QUV) nach diesen vorbestimmten Zeitpunkten, insbesondere durch den Quantencomputer (QC), und
   - Durchführung eines Rücksetzens (Reset-Funktion), insbesondere des Quantencomputers (QC) und/oder insbesondere von Teilvorrichtungen des Quantencomputers (QC), auf einen Quantencomputerprogrammstart oder dergleichen, wenn diese Ansteuerung nicht in vorbestimmter Weise, insbesondere durch den Quantencomputer (QC), erfolgt.
   Vorteil dieses Merkmals: Ist der Quantencomputer (QC) aus welchen Gründen auch immer gestört so liefert er beispielsweise ein Ergebnis zu falschen Zeitpunkte, ein falsches Ergebnis oder Ergebnisse mit einem statistisch von einer erwarteten Ergebnisstatistik abweichenden Ergebnisstatistik etc. Auf diese Wiese ist die Quantencomputerüberwachungsvorrichtung (QUV) in der Lage, solche Hard- und Software-Defekte und Fehlfunktionen des Quantencomputers (QC) zu erkennen, dies an übergeordnete Einheiten, beispielsweise eine zentrale Steuereinheit (ZSE) zu melden, und ggf. Gegenmaßnahmen wie ein Rücksetzen aller und/oder einzelner Teilvorrichtungen des Quantencomputers (QC) zu veranlassen. Nach einer solchen Meldung kann beispielsweise die zentrale Steuereinheit (ZSE) eines Quantencomputersystems (QUSYS) die gleiche Quantencomputerberechnung auf einem anderen, fehlerfrei arbeitendem Quantencomputer (QC) des Quantencomputersystems starten und beispielsweise den fehlerhaften Quantencomputer (QC) stilllegen.
Merkmal 83: Verfahren zum Betrieb eines Quantencomputersystems (QUSYS) nach Merkmal 82 mit dem Schritt
   - Übermitteln zumindest eines Ergebnisses einer vorbestimmten Quantencomputerberechnung des Quantencomputers (QC) an die Quantencomputerüberwachungsvorrichtung (QUV) bei dieser Ansteuerung.
   Vorteil dieses Merkmals: Diese Übermittlung ermöglicht der Quantencomputerüberwachungsvorrichtung (QUV) die Durchführung einer statistischen Untersuchung, Ob die Quantencomputerberechnungsergebnisstatistik für diese Quantencomputerberechnungen der erwarteten Quantencomputerberechnungsergebnisstatistik entspricht. Ist dies nicht der Fall, kann die Quantencomputerüberwachungsvorrichtung (QUV) auf einen Fahler schließen und die oberhalb bereits mehrfach beschriebenen Maßnahmen einleiten und/oder einen Fehler an eine übergeordnete Einheit, beispielsweise eine zentrale Steuereinheit (ZSE) eines Quantencomputersystems (QUSYS) weiterleiten.
Merkmal 84: Verfahren zum Betrieb eines Quantencomputersystems (QUC) nach Merkmal 83 mit dem Schritt
   - Überprüfen des an die Quantencomputerüberwachungsvorrichtung (QUV), insbesondere durch den Quantencomputer (QC) übermittelten Quantencomputerberechnungsergebnisses der vorbestimmten Quantencomputerberechnung des Quantencomputers (QC).
   Vorteil dieses Merkmals: Das hier vorgelegte Dokument verweist auf die analogen Vorteile des vorausgehenden Merkmals 83.
Merkmal 85: Verfahren zum Betrieb eines Quantencomputersystems (QUSYS) nach Merkmal 84 mit dem Schritt
   - Schließen auf einen Fehlerzustand des Quantencomputers (QC), wenn das Quantencomputerberechnungsergebnis der vorbestimmten Quantencomputerberechnung des Quantencomputers (QC) nicht innerhalb einer vorbestimmten erlaubten Lösungsmenge für das das Quantencomputerberechnungsergebnis der vorbestimmten Quantencomputerberechnung des Quantencomputers (QC) liegt.
   Vorteil dieses Merkmals: Das hier vorgelegte Dokument verweist auf die analogen Vorteile des vorausgehenden Merkmals 83.
Merkmal 86: Verfahren zum Betrieb eines Quantencomputersystems (QUSYS) nach Merkmal 84 oder 85 mit den Schritten
   - Erstellen einer Statistik mehrerer Quantencomputerberechnungsergebnisse gleichartiger vorbestimmter Quantencomputerberechnungen des Quantencomputers (QC), die der Quantencomputerüberwachungsvorrichtung (QUV) insbesondere durch den Quantencomputer (QC) übermittelt wurden, und
   - Schließen auf einen Fehler insbesondere durch die Quantencomputerüberwachungsvorrichtung (QUV),
   - wobei dieses Schließen auf einen Fehler erfolgt, wenn die Quantencomputerberechnungsergebnisse der vorbestimmten Quantencomputerberechnungen des Quantencomputers (QC) mit einer ersten Anzahl häufiger als ein vorgegebener erster Maximalwert von einem erwarteten Quantencomputerberechnungsergebnis des Quantencomputers (QC) für diese Quantencomputerberechnungen abweichen.
   Vorteil dieses Merkmals: Das hier vorgelegte Dokument verweist auf die analogen Vorteile des vorausgehenden Merkmals 83.
Merkmal 87: Verfahren nach Merkmal 86,
   - wobei die Zählung der ersten Anzahl der Abweichungen von dem erwarteten Quantencomputerberechnungsergebnis des Quantencomputers (QC) für diese Quantencomputerberechnungen wieder auf einen vorgegebenen ersten Startwert dieses Zählwerts dieser Zählung, insbesondere auf 0, zurückgesetzt werden, wenn eine zweite Anzahl von Quantencomputerberechnungsergebnissen aufeinanderfolgender Quantencomputerberechnungen häufiger als ein vorgegebener zweiter Maximalwert mit einem erwarteten Quantencomputerberechnungsergebnis des Quantencomputers (QC) für diese Quantencomputerberechnungen in vorgegebener Weise übereinstimmt.
   Vorteil dieses Merkmals: Das hier vorgelegte Dokument verweist auf die analogen Vorteile des vorausgehenden Merkmals 83.
Merkmal 88: Verfahren zum Betrieb eines Quantencomputersystems (QUSYS) nach einem oder mehreren der Merkmale 85 bis 87 mit den Schritten
   - Signalisierung des Auftretens eines Fehlers, insbesondere durch die Quantencomputerüberwachungsvorrichtung (QUV), an den Quantencomputer (QC) oder an ein übergeordnetes System im Falle des Schließens auf einen Fehler, insbesondere durch die Quantencomputerüberwachungsvorrichtung (QUV), und/oder
   - Bereithalten einer Information über das Auftretens eines Fehlers, insbesondere durch die Quantencomputerüberwachungsvorrichtung (QUV), im Falle des Schließens auf einen Fehler, insbesondere durch die Quantencomputerüberwachungsvorrichtung (QUV).
   Vorteil dieses Merkmals: Das hier vorgelegte Dokument verweist auf die analogen Vorteile des vorausgehenden Merkmals 83.
Merkmal 89: Verfahren zum Betrieb eines Quantencomputersystems (QUSYS) nach Merkmal 88 mit dem Schritt
   Zurücksetzen des Quantencomputers (QC) und/oder von Teilvorrichtungen des Quantencomputers (QC) durch die Signalisierung, insbesondere der Quantencomputerüberwachungsvorrichtung (QUV).
   Vorteil des Merkmals: Beim Auftreten eines Fehlers wird der Quantencomputer (QC) in einen vordefinierten neuen Ausgangszustand gezwungen, sodass wieder eine Kontrolle über den Quantencomputer (QC) hergestellt wird.
Merkmal 90: Verfahren zum Betrieb eines Quantencomputersystems (QUSYS) nach Merkmal 89 mit dem Schritt
   - wobei das Zurücksetzen des Quantencomputers (QC) durch die Signalisierung ein Zurücksetzen des Steuerrechners (µC) des Quantencomputers (QC) umfasst.
   Vorteil des Merkmals: Beim Auftreten eines Fehlers wird der Quantencomputer (QC) in einen vordefinierten neuen Ausgangszustand gezwungen, sodass wieder eine Kontrolle über den Quantencomputer (QC) hergestellt wird.
Merkmal 91:Verfahren zum Betrieb eines Quantencomputersystems (QUSYS) nach einem oder mehreren der Merkmale 89 bis 90,
   - wobei das Zurücksetzen des Quantencomputers (QC) durch die Signalisierung den Quantencomputer (QC) dazu veranlasst, zumindest einen Teil der Quantenbits des Quantencomputers (QC) in einen vorbestimmten und/oder vorbestimmbaren Zustand und/oder in eine vorbestimmte Überlagerung mehrerer vorbestimmter Zustände zu bringen.
   Vorteil des Merkmals: Beim Auftreten eines Fehlers wird der Quantencomputer (QC) in einen vordefinierten neuen Quantenausgangszustand gezwungen, sodass wieder eine Kontrolle über die Quantenpunkte des Quantencomputers (QC) hergestellt wird.
Merkmal 92: Verfahren zum Betrieb eines Quantencomputersystems (QUSYS) nach einem oder mehreren der Merkmale 89 bis 91,
   - wobei das Zurücksetzen des Quantencomputers (QC) durch die Signalisierung den Quantencomputer (QC) dazu veranlasst, zumindest eine vorbestimmte Quantencomputerberechnung durchzuführen.
   Vorteil des Verfahrens: Nach dem Zurücksetzen der Quantenbits des Quantenregisters des Quantencomputers (QC) kann ein komplizierterer Zwischenzustand der Quantenbits des Quantenregisters des Quantencomputers (QC) eingestellt werden. Beispielsweise kann die bis zum Zurücksetzen (Reset) durchgeführte Quantencomputerberechnung erneut durchgeführt werden.
Merkmal 93 Verfahren zum Betrieb eines Quantencomputersystems (QUSYS) nach Merkmal 92,
   - wobei der Quantencomputer (QC) das Quantencomputerberechnungsergebnis dieser Quantencomputerberechnung an die Quantencomputerüberwachungsvorrichtung (QUV) übermittelt.
   Vorteil dieses Merkmals: Hierdurch kann die Quantencomputerüberwachungsvorrichtung (QUV) eine Statistik über die Quantencomputerberechnungsergebnisse vordefinierter Quantencomputerberechnungen durchführen und mit einer erwarteten statistischen Verteilung für diese Quantencomputerberechnungen vergleichen und so auf Fehler des Quantencomputers (QC) schließen.
Merkmal 94: Verfahren zum Betrieb eines Quantencomputersystems (QUSYS) nach Merkmal 93,
   - wobei die Quantencomputerüberwachungsvorrichtung (QUV) das Quantencomputerberechnungsergebnis dieser Quantencomputerberechnung des Quantencomputers (QC) überprüft.
   Vorteile dieses Merkmals: Die Vorteile entsprechen den Vorteilen des Merkmals 93.
Merkmal 95: Verfahren zum Betrieb eines Quantencomputersystems (QUSYS) nach einem oder mehreren der Merkmale 82 bis 94 mit dem Schritt
   - Manipulieren von Quantenbits der Quantenbits des Quantencomputers (QC), insbesondere durch den Quantencomputer (QC), in der Art,
   - dass eine Einstellung dieser Quantenbits des Quantencomputers (QC) in eine vorbestimmte Kombination überlagerter Quantenzustände im Falle eines Zurücksetzens des Quantencomputers, insbesondere durch den Quantencomputer (QC), erfolgt.
   Vorteile dieses Merkmals: Im Zuge des Zurücksetzens der Quantenbits (QUB) des Quantenregisters des Quantencomputers (QC) kann die Quantencomputerüberwachungsvorrichtung (QUV) somit einen ganz bestimmten Quantenzustand der Quantenbits des Quantenregisters des Quantencomputers (QC) einstellen.
Merkmal 98: Verfahren zum Betrieb eines Quantencomputersystems (QUSYS) nach einem oder mehreren der Merkmale 82 bis 95 mit dem Schritt
   - Vornehmen einer gezielten Fehlansteuerung der Quantencomputerüberwachungsvorrichtung (QUV), insbesondere durch Übermittlung eines falschen Quantencomputerberechnungsergebnis insbesondere durch den Quantencomputer (QC) insbesondere an die Quantencomputerüberwachungsvorrichtung (QUV), beim Auftreten einer vom Quantencomputer (QC) und zwar insbesondere von dessen Steuerrechner (µC) oder einer anderen Hilfsvorrichtung des Quantencomputers (QC) selbst erkannten Fehlfunktion des Quantencomputers (QC) oder eines seiner Hilfsaggregate zur Auslösung einer von der Quantencomputerüberwachungsvorrichtung (QUV) stammenden Rücksetzfunktion,
   Vorteil dieses Merkmals: in manchen Konstruktionen kann der Quantencomputer (QC) keinen vollständiges Zurücksetzen aller oder der wesentlichen Teilvorrichtungen des Quantencomputers (QC) selbstauslösen. Die ihm zugeordnete Quantencomputerüberwachungsvorrichtung (QUV) ist aber bevorzugt genau dazu in der Lage. Für den Fall, dass also der erste Quantencomputer (QC) einen Fehler erkennt, der ein Zurücksetzen aller und/oder zumindest der wesentlichen Teilvorrichtungen des Quantencomputers erfordert, simuliert der Quantencomputer (QC) einen Fehler gegenüber der Quantencomputerüberwachungsvorrichtung (QUV), woraufhin diese Quantencomputerüberwachungsvorrichtung (QUV) einen solchen Fehler erkennt und ein zurücksetzen aller und/oder zumindest der wesentlichen Teilvorrichtungen des Quantencomputers (QC) auslöst. Dadurch ist der Quantencomputer (QC) in der Lage, letztlich doch sich selbst zurückzusetzen. Die Quantencomputerüberwachungsvorrichtung (QUV) kann dabei noch weitere Plausibilitätsüberprüfungen durchführen, um zu verhindern, dass der Quantencomputer (QC) sich versehentlich zurücksetzt.
Merkmal 97: Verfahren zum Betrieb eines Quantencomputersystems (QUSYS) nach Merkmal 96,
   - wobei die von der Quantencomputerüberwachungsvorrichtung (QUV) stammende Rücksetzfunktion ein Zurücksetzen des Steuerrechners (µC) des Quantencomputers (QC) auslöst.
   Vorteil dieses Merkmals: Hierdurch kann die Quantencomputerüberwachungsvorrichtung (QUV) den Steuerrechner (µC) des Quantencomputers (QC) wieder in einen definierten Zustand bringen.
Merkmal 98: Verfahren zum Betrieb eines Quantencomputersystems (QUSYS) nach einem oder mehreren der Merkmale 96 bis 97,
   - wobei die von der Quantencomputerüberwachungsvorrichtung (QUV) stammende Rücksetzfunktion den Quantencomputer (QC) dazu veranlasst, zumindest einen Teil der Quantenbits des Quantencomputers (QC) in einen vorbestimmten und/oder vorbestimmbaren Zustand und/oder in eine vorbestimmte Überlagerung mehrerer vorbestimmter Zustände zu bringen.
   Vorteil dieses Merkmals: Hierdurch kann die Quantencomputerüberwachungsvorrichtung (QUV) diese Teile des Quantencomputers (QC) wieder in definierte Zustände bringen.
Merkmal 99: Verfahren zum Betrieb eines Quantencomputersystems (QUSYS) nach einem oder mehreren der Merkmale 96 bis 98,
   - wobei die von der Quantencomputerüberwachungsvorrichtung (QUV) stammende Rücksetzfunktion den Quantencomputer (QC) dazu veranlasst, zumindest eine vorbestimmte Quantencomputerberechnung durchzuführen.
   Vorteil dieses Merkmals: Hierdurch kann die Quantencomputerüberwachungsvorrichtung (QUV) diese Quantenbits des Quantenregisters des Quantencomputers (QC) wieder in definierte Quantenzustände bringen.
Merkmal 100: Verfahren zum Betrieb eines Quantencomputersystems (QUSYS) nach Merkmal 99,
   - wobei der Quantencomputer (QC) das Quantencomputerberechnungsergebnis dieser Quantencomputerberechnung an die Quantencomputerüberwachungsvorrichtung (QUV) übermittelt.
   Vorteil dieses Merkmals: Hierdurch kann die Quantencomputerüberwachungsvorrichtung (QUV) überprüfen, ob sich die Quantenbits des Quantenregisters des Quantencomputers (QC) bei mehrmaliger Durchführung der Quantencomputerberechnung mit der erwarteten statistischen Verteilung in dem eingestellten Zustand befinden und ob es somit möglich ist, die Quantenbits des Quantenregisters des Quantencomputers (QC) in den angestrebten Zustand zu bringen.
Merkmal 101: Verfahren zum Betrieb eines Quantencomputersystems (QUSYS) nach Merkmal 100,
   - wobei die Quantencomputerüberwachungsvorrichtung (QUV) das Quantencomputerberechnungsergebnis dieser Quantencomputerberechnung des Quantencomputers (QC) überprüft.
   Vorteil dieses Merkmals: Siehe Vorteil des Merkmals 100.
Merkmal 102: Verfahren zum Betrieb eines Quantencomputersystems (QUSYS) nach einem oder mehreren der Merkmale 82 bis 101 mit dem Schritt:
   - Schließen auf einen Fehler, insbesondere durch die Quantencomputerüberwachungsvorrichtung (QUV), wenn die Übermittlung eines Quantencomputerberechnungsergebnisses, insbesondere durch den Quantencomputer (QC) und insbesondere an die Quantencomputerüberwachungsvorrichtung (QUV), vor einem vorbestimmten zweiten Zeitpunkt erfolgt,
   - wobei dieser vorbestimmte zweite Zeitpunkt nach dem vorbestimmten Zeitpunkt liegt oder gleich dem vorbestimmten Zeitpunkt ist.
   Vorteil des Merkmals: Sofern der Quantencomputer (QC) aus welchen Gründen auch immer ein Ergebnis früher als erwartet liefert, so kann die Quantencomputerüberwachungsvorrichtung (QUV) von einer Fehlfunktion ausgehen, da der Quantencomputer (QC) für bestimmte Quantenoperationen eine vorbestimmte Zeit benötigt und daher das Ergebnis nicht vor Ablauf einer vorbestimmbaren Zeitspanne liefern kann. Solche Fehler werden also durch diese Prüfung detektierbar.
Merkmal 103 Verfahren zum Betrieb eines Quantencomputersystems (QSYS) nach einem oder mehreren der Merkmale 82 bis 103 mit dem Schritt:
   - Schließen auf einen Fehler, insbesondere durch die Quantencomputerüberwachungsvorrichtung (QUV), wenn die Übermittlung eines Quantencomputerberechnungsergebnisses, insbesondere durch den Quantencomputer (QC) und insbesondere an die Quantencomputerüberwachungsvorrichtung (QUV), nach einem vorbestimmten dritten Zeitpunkt erfolgt,
   - wobei dieser vorbestimmte dritte Zeitpunkt nach dem vorbestimmten Zeitpunkt liegt oder gleich dem vorbestimmten Zeitpunkt ist.
   Vorteil des Merkmals: Sofern der Quantencomputer (QC) aus welchen Gründen auch immer ein Ergebnis wesentlich später als erwartet liefert, so kann die Quantencomputerüberwachungsvorrichtung (QUV) von einer Fehlfunktion ausgehen, da der Quantencomputer (QC) für bestimmte Quantenoperationen eine vorbestimmte Zeit benötigt und daher das Ergebnis nach Ablauf einer vorbestimmbaren Zeitspanne liefern können sollte. Liefert der Quantencomputer (QC) das Ergebnis wesentlich später, so wird der Steuerrechner (µC) aus welchen Gründen auch immer durch nicht vorgesehene Vorgänge innerhalb des Quantencomputers (QC) daran gehindert. Hierbei kann es sich beispielsweise um eine zu hohe Interrupt-Last für den Steuerrechner (µC) durch Fehlfunktionen der Ansteuer- und/oder Auslesevorrichtungen für die Quantenbits und/oder andere Fehlfunktionen von Teilvorrichtungen des Quantencomputers (QC) handeln. Bevorzugt startet die Quantencomputerüberwachungsvorrichtung (QUV) eine Selbstdiagnose der Teilvorrichtungen des Quantencomputers (QC) und/oder des Quantencomputers (QC) beim wiederholten Auftreten eines solchen Fehlers. Solche Fehler werden also durch diese Prüfung detektierbar.
Merkmal 104: Verfahren zum Betrieb eines Quantencomputersystems (QUSYS) nach einem oder mehreren der Merkmale 82 bis 103 mit dem Schritt
   - Signalisierung an den dem Quantencomputer (QC), insbesondere durch die Quantencomputerüberwachungsvorrichtung (QUV), vor Beginn des vorbestimmten Zeitraums, welche vorbestimmte Quantencomputerberechnung bzw. welche vorbestimmten Quantencomputerberechnungen der Quantencomputer (QC) durchführen soll.
   Vorteil dieses Merkmals: Hierdurch kann die Quantencomputerüberwachungsvorrichtung (QUV) eine Überprüfung der Quantencomputerberechnungsfunktionen des Quantencomputers (QC) durchführen und einzelne Quantenoperationen auf Funktionstüchtigkeit und Wirkung überprüfen. Dabei führt die Quantencomputerüberwachungsvorrichtung (QUV) die Bewertung aufgrund einer Statistik mehrerer Quantencomputerberechnungsergebnisse vorzugsweise gleicher Quantencomputerberechnungen durch, da eine einzelne Quantencomputerberechnung jeweils nur mit einer bestimmten Wahrscheinlichkeit bestimmte Ergebnisse liefert.
Merkmal 105: Verfahren zum Betrieb eines Quantencomputersystems (QUSYS) nach einem oder mehreren der Merkmale 82 bis 104 umfassend den Schritt
   Signalisierung, insbesondere durch die Quantencomputerüberwachungsvorrichtung (QUV), des Zeitpunkts des Beginns des vorbestimmten Zeitraums und ggf. des Zeitpunkts des Endes des vorbestimmten Zeitraums oder der Dauer des vorbestimmten Zeitraums an den Quantencomputer (QC).
   Vorteil dieses Merkmals: Die Quantencomputerüberwachungsvorrichtung (QUV) kann beispielsweise hierdurch den Quantencomputer (QC) veranlassen, von sich aus Maßnahmen zu ergreifen, wenn er die Anfrage der Quantencomputerüberwachungsvorrichtung (QUV) nicht rechtzeitig beantwortet. Es ist also ausdrücklich nicht unbedingt notwendig, dass die Quantencomputerüberwachungsvorrichtung (QUV) die Maßnahmen einleitet. Vielmehr kann auch der Steuerrechner (µC) des Quantencomputers (QC) eine entsprechende Maßnahme einleiten, falls die Zeit zur Beantwortung einer Anfrage der Quantencomputerüberwachungsvorrichtung (QUV) verstrichen ist.
Merkmal 106: Verfahren zum Betrieb eines Quantencomputersystems (QUSYS) nach einem oder mehreren der Merkmale 82 bis 105, mit dem Schritt
   - Schließen auf einen Fehler, insbesondere durch die Quantencomputerüberwachungsvorrichtung (QUV), wenn ein Ansteuern der Quantencomputerüberwachungsvorrichtung (QUV), insbesondere durch den Quantencomputer (QC), innerhalb eines weiteren Zeitraums zu häufig, insbesondere häufiger als ein Ansteuererwartungswert, erfolgt.
   Vorteil dieses Merkmals: Hierdurch ist die Quantencomputerüberwachungsvorrichtung (QUV) in der Lage, Fehlfunktionen des Quantencomputers (QC) und/oder von Teilvorrichtungen des Quantencomputers (QC) zu erkennen.
Merkmal 107: Verfahren zum Betrieb eines Quantencomputersystems (QUSYS) nach einem oder mehreren der Merkmale 82 bis 106, mit dem Schritt
   - Überwachung des Quantencomputers (QC) auf eine Fehlfunktion des Quantencomputers (QC) durch den Quantencomputer (QC) selbst und/oder
   - Überwachung auf eine Fehlfunktion anderer Bauelemente und/oder Funktionselemente des Quantencomputersystems (QUSYS) durch den Quantencomputer (QC) und/oder
   - Überwachung auf eine Fehlfunktion von Quantencomputersystem-Bestandteilen durch den Quantencomputer (QC) selbst.
   Vorteil dieses Merkmals: Insbesondere der Steuerrechner (µC) eines Quantencomputers (QC) kann als Quantencomputerüberwachungsvorrichtung (QUV) für diesen Quantencomputer (QC) und/oder für einen anderen Quantencomputer (QC) der Quantencomputer (QC1 bis QC16) in einem Quantencomputersystem (QSYS) arbeiten. Mehrere Quantencomputer der Quantencomputer (QC1 bis QC16) eines Quantencomputersystems (QUSYS) können sich auf diese Weise gegenseitig überwachen. Dabei agiert jeweils ein Quantencomputer (QC) der Quantencomputer (QC1 bis QC16) des Quantencomputersystems (QUSYS) zumindest zeitweise als Quantencomputerüberwachungsvorrichtung (QUV) für einen anderen Quantencomputer (QC) der Quantencomputer (QC1 bis QC16) des Quantencomputersystems(QUSYS).
Merkmal 108: Verfahren zur Überwachung des korrekten Quantencomputerprogrammablaufs eines mit Quantencomputerüberwachungsvorrichtung (QUV) versehenen Quantencomputersystems (QUSYS), insbesondere unter Verwendung eines Verfahrens nach einem oder mehreren der Merkmale 82 bis 107,
   - wobei das Quantencomputersystem (QUSYS) einen Quantencomputer (QC) umfasst und
   - wobei der Quantencomputer (QC) in bestimmten Zeitabständen die Quantencomputerüberwachungsvorrichtung (QUV), insbesondere über einen Datenbus (DB) mittels einer Nachricht, ansteuert,
   - wobei die Quantencomputerüberwachungsvorrichtung (QUV) ohne diese Ansteuerung ein Zurücksetzten (Reset-Funktion) des Quantencomputers (QC) auslöst.
   Vorteil dieses Merkmals: Hierdurch kann die Quantencomputerüberwachungsvorrichtung (QUV) den Quantencomputer (QC) wieder in einen definierten Zustand bringen.
Merkmal 109: Verfahren nach Merkmal 108,
   - wobei das Rücksetzen den Steuerrechner (µC) des Quantencomputers (QC) dazu veranlasst, auf den Quantencomputerprogrammstart oder einen anderen vorbestimmten Programmpunkt des Quantencomputerprogramms zu springen.
   Vorteil dieses Merkmals: Hierdurch kann die Quantencomputerüberwachungsvorrichtung (QUV) den Steuerrechner (µC) des Quantencomputers (QC) wieder in einen definierten Zustand bringen.
Merkmal 110: Verfahren nach einem oder mehreren der Merkmale 108 bis 109
   - wobei das Rücksetzen den Steuerrechner (µC) des Quantencomputers (QC) dazu veranlasst, zumindest Quantenbits des Quantencomputers (QC) in einen vordefinierten oder vordefinierbaren Quantenzustand oder in eine vordefinierte oder vordefinierbare Überlagerung solcher Quantenzustände zu bringen,
   - wobei diese Quantenbits zumindest einen Teil der Quantenbits des Quantencomputers (QC) umfassen.
   Vorteil dieses Merkmals: Hierdurch kann die Quantencomputerüberwachungsvorrichtung (QUV) den die Quantenbits des Quantenregisters des Quantencomputers (QC) und/oder einen Teil der Quantenbits des Quantenregisters des Quantencomputers (QC) wieder in einen definierten Quantenzustand bringen.
Merkmal 111: Verfahren nach einem oder mehreren der Merkmale 108 bis 110, dadurch gekennzeichnet,
   - dass der Quantencomputer (QC) beim Auftreten einer von ihm erkannten Fehlfunktion zur Auslösung einer von der Quantencomputerüberwachungsvorrichtung (QUV) stammenden Rücksetz-Funktion eine gezielte Fehlansteuerung der Quantencomputerüberwachungsvorrichtung (QUV) vornimmt.
   Vorteil dieses Merkmals: in manchen Konstruktionen kann der Quantencomputer (QC) kein vollständiges Zurücksetzen aller oder der wesentlichen Teilvorrichtungen des Quantencomputers (QC) selbst auslösen. Die ihm zugeordnete Quantencomputerüberwachungsvorrichtung (QUV) ist aber bevorzugt genau dazu in der Lage. Für den Fall, dass also der Quantencomputer (QC) einen Fehler erkennt, der ein Zurücksetzen aller und/oder zumindest der wesentlichen Teilvorrichtungen des Quantencomputers (QC) erfordert, simuliert der Quantencomputer (QC) einen Fehler gegenüber der Quantencomputerüberwachungsvorrichtung (QUV). Daraufhin erkennt diese Quantencomputerüberwachungsvorrichtung (QUV) einen solchen Fehler und löst ein zurücksetzen aller und/oder zumindest der wesentlichen Teilvorrichtungen des Quantencomputers (QC) aus. Dadurch ist der Quantencomputer (QC) in der Lage, letztlich doch sich selbst zurückzusetzen. Die Quantencomputerüberwachungsvorrichtung (QUV) kann dabei noch weitere Plausibilitätsüberprüfungen durchführen, um zu verhindern, dass der Quantencomputer (QC) sich versehentlich zurücksetzt.

### Bezugszeichenliste

- AB: vorbestimmter, besonders geschützter Adressbereich innerhalb des Speichers (MEM) des Quantencomputers (QC);
- BPL: Bypass-Leitung;
- DB: Datenbus;
- GR: Gerät, das durch den Quantencomputer (QC) gesteuert oder geregelt wird;
- GSTL: Gerätsteuerleitungen, über die der Quantencomputer (QC) das Gerät (GR) steuert oder regelt. Bevorzugt umfassen die Gerätsteuerleitungen Leitungen, die Steuerbefehle und/oder Steuersignale vom Quantencomputer (QC) an das Gerät (GR) übertragen, und/oder Leitungen, die Daten und/oder Messwertsignale vom gerät (GR) an den Quantencomputer (QC) übertragen. Gerätesteuerleitungen können auch bidirektional und/oder analog und/oder digital und/oder differentiell und/oder mit spannungsgesteuerter und/oder stromgesteuerter Signalisierung sein.
- ICLK: interner Taktgenerator der Quantencomputerüberwachungsvorrichtung (QUV);
- iCLK: interner Takt der Quantencomputerüberwachungsvorrichtung (QUV). Der interne Taktgenerator der Quantencomputerüberwachungsvorrichtung (QUV) erzeugt den interner Takt der Quantencomputerüberwachungsvorrichtung (QUV), der die Logikteile der Quantencomputerüberwachungsvorrichtung (QUV) bevorzugt antreibt;
- iCNTS: internes Zählereignissignal;
- INTR: Interruptleitung;
- ITR: Signalisierungsleitung der Quantencomputerüberwachungsvorrichtung (QUV). Mit dieser Signalisierungsleitung signalisiert die Quantencomputerüberwachungsvorrichtung bevorzugt der Zentralen Steuereinheit (ZSE), dass ein Zurücksetzen des Quantencomputersystems (QUSYS) oder einzelner oder mehrerer Quantencomputer (QC1 bis QC16) des Quantencomputersystems (QUSYS) erforderlich ist. Im einfachsten Fall handelt es sich um eine Reset- oder Interrupt-Leitung des Rechners der zentralen Steuereinheit (ZSE). Bei der Signalisierungsleitung kann es sich um einen Datenbus oder dergleichen handeln über den die Quantencomputerüberwachungsvorrichtung (QUV) der zentralen Steuereinrichtung (ZSE) Stati des Quantencomputersystems (QUSYS) übermitteln kann und/oder Maßnahmen zur Eindämmung, Beseitigung oder Blockade von Fehlern des Quantencomputersystems (QUSYS) anfordern kann;
- µC: Steuerrechner des Quantencomputers (QC);
- µC1: erster Steuerrechner des ersten Quantencomputers (QC1);
- µC2: zweiter Steuerrechner des zweiten Quantencomputers (QC2);
- µC3: dritter Steuerrechner des dritten Quantencomputers (QC3);
- µC4: vierter Steuerrechner des vierten Quantencomputers (QC4);
- µC5: fünfter Steuerrechner des fünften Quantencomputers (QC5);
- µC6: sechster Steuerrechner des sechsten Quantencomputers (QC6);
- µC7: siebter Steuerrechner des siebten Quantencomputers (QC7);
- µC8: achter Steuerrechner des achten Quantencomputers (QC8);
- µC9: neunter Steuerrechner des neunten Quantencomputers (QC9);
- µC10: zehnter Steuerrechner des zehnten Quantencomputers (QC10);
- µC11: elfter Steuerrechner des elften Quantencomputers (QC11);
- µC12: zwölfter Steuerrechner des zwölften Quantencomputers (QC12);
- µC13: dreizehnter Steuerrechner des dreizehnten Quantencomputers (QC13);
- µC14: vierzehnter Steuerrechner des vierzehnten Quantencomputers (QC14);
- µC15: fünfzehnter Steuerrechner des fünfzehnten Quantencomputers (QC15);
- µC16: sechzehnter Steuerrechner des sechzehnten Quantencomputers (QC16);
- µCQUV: Steuerrechner der Quantencomputerüberwachungsvorrichtung (QUV). Sofern die Quantencomputerüberwachungsvorrichtung (QUV) selbst ein Quantencomputer (QC) ist, kann es sich um den Steuerrechner (µC) dieses Quantencomputers handeln;
- M1: erste Mittel des Quantencomputers (QC) zur Manipulation der Quantenbits (QUB) des Quantencomputers (QC). Bevorzugt steuert der Steuerrechner (µC) des Quantencomputers (QC) die ersten Mittel und liest deren Betriebszustandswerte über den Datenbus (QCDB) des Quantencomputers (QC) aus;
- M2: zweite Mittel des Quantencomputers (QC) zum Auslesen der Quantenzustände der Quantenbits (QUB) des Quantencomputers (QC). Bevorzugt steuert der Steuerrechner (µC) des Quantencomputers (QC) die zweiten Mittel und liest deren Betriebszustandswerte und Messwerte und die ermittelten Quantenzustandswerte der Quantenbits (QUB) über den Datenbus (QCDB) des Quantencomputers (QC) aus;
- MEM: Speicher des Steuerrechners (µC) des Quantencomputers (QC);
- NVM: nicht flüchtiger Speicher;
- QC: Quantencomputer. Es kann sich um einen Quantencomputer der Quantencomputer (QC1 bis QC16) des Quantencomputersystems (QSYS) handeln. Bevorzugt handelt es sich um einen Quantencomputer mit paramagnetischen Zentren als Quantenbits des Quantencomputers. Bevorzugt umfassen diese paramagnetischen Zentren NV-Zentren und/oder SiV-Zentren und/oder TR1-Zentren und/oder L1-Zentren und/oder TiV-Zentren und/oder GeV-Zentren und/oder SnV-Zentren und/oder NiN₄-Zentren und/oder PbV-Zentren und/oder ST1-Zentren etc. NV-Zentren. Ganz besonders bevorzugt mfassen diese paramagnetischen Zentren im Wesentlichen NV-Zentren. Bevorzugt ist der Quantencomputer ein Raumtemperatur Quantencomputer ohne Kühlung für den Betrieb bei einer Umgebungstemperatur oberhalb von 0°C.;
- QC1: erster Quantencomputer des beispielhaften Quantencomputersystems (QSYS);
- QC2: zweiter Quantencomputer des beispielhaften Quantencomputersystems (QSYS);
- QC3: dritter Quantencomputer des beispielhaften Quantencomputersystems (QSYS);
- QC4: vierter Quantencomputer des beispielhaften Quantencomputersystems (QSYS);
- QC5: fünfter Quantencomputer des beispielhaften Quantencomputersystems (QSYS);
- QC6: sechster Quantencomputer des beispielhaften Quantencomputersystems (QSYS);
- QC7: siebter Quantencomputer des beispielhaften Quantencomputersystems (QSYS);
- QC8: achter Quantencomputer des beispielhaften Quantencomputersystems (QSYS);
- QC9: neunter Quantencomputer des beispielhaften Quantencomputersystems (QSYS);
- QC10: zehnter Quantencomputer des beispielhaften Quantencomputersystems (QSYS);
- QC11: elfter Quantencomputer des beispielhaften Quantencomputersystems (QSYS);
- QC12: zwölfter Quantencomputer des beispielhaften Quantencomputersystems (QSYS);
- QC13: dreizehnter Quantencomputer des beispielhaften Quantencomputersystems (QSYS);
- QC14: vierzehnter Quantencomputer des beispielhaften Quantencomputersystems (QSYS);
- QC15: fünfzehnter Quantencomputer des beispielhaften Quantencomputersystems (QSYS);
- QC16: sechzehnter Quantencomputer des beispielhaften Quantencomputersystems (QSYS);
- QCDB: interner Datenbus des Quantencomputers (QC);
- QUB: Quantenbits;
- QUP: besonders geschützte Quantenbits (QUB) unter den Quantenbits (QUB) des Quantencomputers (QC). Ein Quantencomputer (QC) braucht nicht immer besonders geschützte Quantenbits aufweisen. Bevorzugt schützt der Steuerrechner (µC) oder ein anderer berechtigter Rechner solche besonders geschützte Quantenbits durch setzen eines oder mehrere Flags oder dergleichen Information, die sich bevorzugt in der Quantencomputerüberwachungsvorrichtung (QUV) befinden. Vor einer gewünschten Manipulation besonders geschützter Quantenbits löscht der Steuerrechner (µC) des Quantencomputers (µC) oder ein anderer berechtigter Rechner diese Flags. Nach der Quantencomputerberechnung, die diese besonders geschützten Quantenbits (QUP) nutzt, setzt der der Steuerrechner (µC) des Quantencomputers (µC) oder ein anderer berechtigter Rechner bevorzugt wieder diese Flags und stellt den Schutz so wieder her. Bevorzugt erfordert die Veränderung dieser Flags eine Passwort Übermittlung in ein Register, dass die Veränderung der Flags erlaubt, wenn das Passwort im Register mit einem vorbestimmten Wert übereinstimmt;
- QUSYS: Quantencomputersystem;
- QUV: Quantencomputerüberwachungsvorrichtung. Die Quantencomputerüberwachungsvorrichtung kann als Teil eines Quantencomputersystems (QUSYS) die Zentrale Steuereinheit (ZSE) und die Quantencomputer (QC1 bis QC16) des Quantencomputersystems (QUSYS) überwachen und/oder als Teil eines Quantencomputers (QC) den Steuerrechner (µC) des Quantencomputers (QC) und andere Teilvorrichtungen des Quantencomputers (QC) überwachen. Zu diesen Teilvorrichtungen gehören bevorzugt die Quantenbits und deren Ansteuer- und Auslesevorrichtungen und Vorrichtungen zur Manipulation der Quantenbits das Quantencomputers (QC) etc.
- RAM: Schreib-/Lesespeicher des Steuerrechners (µC) des Quantencomputers (QC);
- SdT: Stand der Technik;
- SYSC: Systemkomponente;
- SYSCDB: beispielhafte weitere Signalleitungen, die einen Datenbusumfassen können;
- TERM: Terminal. Das Terminal dient im Beispiel der Figur 4 als zentrale Steuereinheit (ZSE);
- ZSE: zentrale Steuereinheit des Quantencomputersystems (QUSYS);

## Patentansprüche

1. Vorrichtung zur Überwachung eines Quantencomputers (QC) zum Abfangen von Fehlern des Quantencomputers (QC),
- wobei die Vorrichtung eine Quantencomputerüberwachungsvorrichtung (QUV) umfasst und
- wobei der Quantencomputer (QC) einen internen Taktgeber (ICLK) umfasst und
- wobei der Quantencomputer (QC) mit einer Quantencomputerüberwachungsvorrichtung (QUV) über einen Datenbus (DB) oder spezielle Signalleitungen zur Überwachung des Quantencomputers (QC) verbunden ist und
- wobei die Quantencomputerüberwachungsvorrichtung (QUV) mit dem internen Taktgeber (ICLK) zur Überwachung eines Systemtakts des Quantencomputers (QC) verbunden ist und/oder
- wobei die Quantencomputerüberwachungsvorrichtung (QUV) Mittel zur Überprüfung des Quantencomputerprogrammablaufs des Quantencomputerprogramms des Quantencomputers (QC) umfasst und/oder
- wobei die Quantencomputerüberwachungsvorrichtung (QUV) Mittel zur Überprüfung der korrekten Funktion des Quantencomputers (QC) umfasst und/oder
- wobei die Quantencomputerüberwachungsvorrichtung (QUV) Mittel zur Überprüfung der korrekten Durchführung von Manipulationen von Quantenbits (QUB) des Quantencomputers (QC) umfasst.

2. Vorrichtung nach Anspruch 1,
- wobei die Quantencomputerüberwachungsvorrichtung (QUV) Mittel zur Überwachung von Betriebsparametern des Quantencomputers (QC) aufweist und
- wobei die Quantencomputerüberwachungsvorrichtung (QUV) Mittel zur Überwachung von Tests von Systemkomponenten (SYSC) des Quantencomputers (QC) aufweist und
- wobei die Quantencomputerüberwachungsvorrichtung (QUV) bei wenigstens einem erkannten Fehler eine Fehlermeldung an den Quantencomputer (QC) überträgt und einen Fehlerzähler in vorbestimmter Weise inkrementiert oder dekrementiert oder ändert.

3. Vorrichtung nach Anspruch 2,
wobei die überwachten Betriebsparameter des Quantencomputers (QC) Betriebsparameter des Magnetfelds und/oder Betriebsparameter der Einstrahlung elektromagnetischer Wellen und/oder Betriebsparameter der Temperatur und/oder Betriebsparameter der Bestrahlung umfassen.

4. Vorrichtung nach Anspruch 2 oder 3 mit Prüfungsmöglichkeit der korrekten Funktion des überwachten Quantencomputers (QC) und mit Überwachungsmöglichkeit der Auslastung eines Steuerrechners (µC), **dadurch gekennzeichnet,**
- **dass** die Quantencomputerüberwachungsvorrichtung (QUV) dazu eingerichtet ist, bei der Überprüfung des Quantencomputerprogramms dem Quantencomputer (QC) Testfragen zu übermitteln, und
- **dass** die Quantencomputerüberwachungsvorrichtung (QUV) dazu eingerichtet ist, Antworten des Quantencomputers (QC) auf Richtigkeit und/oder Zeitpunkt und/oder statistische Richtigkeit zu überwachen, und
- **dass** die Berechnung der Antworten auf die Testfragen mindestens eine Manipulation eines Zustands eines Quantenbits des Quantencomputers (QC) und/oder zumindest eine Quantenoperation des Quantencomputers (QC) erfordert.

5. Vorrichtung nach einem der Ansprüche 2 bis 4 mit Prüfungsmöglichkeit der korrekten Funktion des überwachten Quantencomputers (QC) und mit Überwachungsmöglichkeit der Auslastung eines Steuerrechners (µC), **dadurch gekennzeichnet,**
- **dass** die Quantencomputerüberwachungsvorrichtung (QUV) dazu eingerichtet ist, bei Überwachung der Tests der Systemkomponenten dem Quantencomputer (QC) Testaufträge zu übermitteln, und
- **dass** der Quantencomputer (QC) der Quantencomputerüberwachungsvorrichtung (QUV) dazu eingerichtet ist, ein Quantencomputerberechnungsergebnis entsprechend der Testfrage zurückzusenden, das die Quantencomputerüberwachungsvorrichtung (QUV) auf Richtigkeit und Zeitpunkt und/oder statistische Richtigkeit überwacht und
- **dass** die Quantencomputerüberwachungsvorrichtung (QUV) dazu eingerichtet ist, das Quantencomputerberechnungsergebnis entsprechend der Testfrage auf Richtigkeit und Zeitpunkt und/oder statistische Richtigkeit zuüberwachen.

6. Vorrichtung nach einem der vorhergehenden Ansprüche 1 bis 5 mit Möglichkeiten der Reaktion der Quantencomputerüberwachungsvorrichtung (QUV) auf einen Fehler des Quantencomputers (QC), **dadurch gekennzeichnet,**
- **dass** die Quantencomputerüberwachungsvorrichtung (QUV) dazu eingerichtet ist, bei dem wenigstens einen erkannten Fehler ein an den Quantencomputer (QC) angeschlossenes Gerät (GR)
- in seiner Funktion für eine vorgegebene Zeitdauer zu sperren oder
- in einen sicheren Zustand zu bringen oder
- den Zugriff des Quantencomputers(QC) auf das Gerät (GR) zu verhindern oder
- das Gerät (GR) statt mit dem Quantencomputer (QC) mit einer Quantencomputersimulationsvorrichtung zu verbinden

7. Vorrichtung nach Anspruch 6, **dadurch gekennzeichnet,**
- **dass** die Quantencomputerüberwachungsvorrichtung (QUV) dazu eingerichtet ist, die Sperrung des Geräts (GR) bzw. die Einnahme des sicheren Zustands durch das Gerät (GR) zu verlängern, sofern die Quantencomputerüberwachungsvorrichtung (QUV) während der Sperrung bzw. während der Einnahme des sicheren Zustands durch das Gerät (GR) wenigstens einen weiteren Fehler des Quantencomputers (QC) erkennt.

8. Vorrichtung nach einem der vorhergehenden Ansprüche 6 bis 7, **dadurch gekennzeichnet,**
- **dass** die Quantencomputerüberwachungsvorrichtung (QUV) dazu eingerichtet ist, wenn der Fehlerzähler einen vorgegebenen Wert erreicht hat, die eine Sperrung des Geräts (GR) bzw. eine Einnahme eines sicheren Zustands des Geräts (GR) bis zur Abschaltung der Quantencomputerüberwachungsvorrichtung (QUV) zu veranlassen.

9. Vorrichtung nach einem der vorhergehenden Ansprüche 6 bis 8, **dadurch gekennzeichnet,**
- **dass** das mit dem Quantencomputer (QC) verbundene Gerät (GR) ein System eines Fahrzeugs, eines Flugkörpers oder eines Schwimmkörpers oder eines Roboters oder eines Flugzeugs oder eines Satelliten oder eines Waffensystems ist.

10. Vorrichtung nach einem der vorhergehenden Ansprüche 6 bis 9, **dadurch gekennzeichnet,**
- **dass** die Quantencomputerüberwachungsvorrichtung (QUV) dazu eingerichtet ist, beim Einschalten eine Sperrung des Geräts (GR) und/oder die Einnahme eines sicheren Zustands durch das Gerät (GR) zu veranlassen, bis die Quantencomputerüberwachungsvorrichtung (QUV) Fehlerfreiheit erkennt.

11. Vorrichtung nach einem der vorhergehenden Ansprüche 1 bis 10, **dadurch gekennzeichnet,**
- **dass** der Quantencomputer (QC) dazu eingerichtet ist, den Fehlerzähler und Einzelfehler aus der Quantencomputerüberwachungsvorrichtung (QUV) auszulesen.

12. Vorrichtung nach einem der Ansprüche 4 bis 10, **dadurch gekennzeichnet,**
- **dass** die Quantencomputerüberwachungsvorrichtung (QUV) dazu eingerichtet ist, die Zeitpunkte der Antworten des Quantencomputers (QC) und die Auftragsbestätigungen mittels wenigstens eines internen Zählers (ICNT) oder Zeitgebers zu bestimmen.

13. Vorrichtung nach einem oder mehreren der Ansprüche 4 bis 12, **gekennzeichnet dadurch,**
- **dass** eine Antwort des Quantencomputers (QC) von mindestens einer Manipulation eines Quantenbits des Quantencomputers (QC) abhängt.
